# EUROPÄISCHE PATENTSCHRIFT

(11) **EP 4 169 207 B1**
(45) Veröffentlichungstag und Bekanntmachung des Hinweises auf die Patenterteilung: **19.06.2024**
(21) Anmeldenummer: 21762380.0
(22) Anmeldetag: 06.08.2021
(51) Int. Cl.: H04L 9/32, H04L 9/08, H04L 9/00, H04L 9/40, H04L 67/565

(54) **VERFAHREN, VORRICHTUNGEN UND SYSTEM ZUM DATENAUSTAUSCH ZWISCHEN EINEM VERTEILTEN DATENBANKSYSTEM UND GERÄTEN**
METHOD, DEVICES AND SYSTEM FOR EXCHANGING DATA BETWEEN A DISTRIBUTED DATABASE SYSTEM AND DEVICES
PROCÉDÉ, DISPOSITIFS ET SYSTÈME D'ÉCHANGE DE DONNÉES ENTRE UN SYSTÈME DE BANQUE DE DONNÉES DISTRIBUÉ ET APPAREILS

(30) Priorität: 21.08.2020 EP 20192061
(43) Veröffentlichungstag der Anmeldung: 26.04.2023
(73) Patentinhaber: Siemens Aktiengesellschaft, 80333 München (DE)
(72) Erfinder: MORRA, Carlos, 10247 Berlin (DE)
(74) Vertreter: Siemens Patent Attorneys
(86) Internationale Anmeldenummer: PCT/EP2021/071967
(87) Internationale Veröffentlichungsnummer: WO 2022/037969

(56) Entgegenhaltungen:
- EP-A1- 3 595 267
- WO-A1-2019/201461
- US-A1- 2020 228 316

## Beschreibung

Geräte, wie Feldgeräte und Fertigungsgeräte, werden immer stärker vernetzt und können beispielsweise von unterschiedlichen Betreibern bereitgestellt / betrieben werden. Diesen Geräten werden dabei unter anderem Befehlsfolgen übermittelt, die durch die Geräte ausgeführt werden können.

Eine Aufgabe der vorliegenden Erfindung ist es, ein Problem des Standes der Technik zu erkennen und hierfür eine technische Lösung zu finden zu finden.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Alte Geräte und die neuen IT-Infrastrukturen können nicht ohne weiteres kommunizieren. Die Ursachen hierfür sind sehr komplex und vielschichtig und erschließen sich oft noch nicht einmal auf den zweiten oder dritten Blick. Regelmäßig ist ein ausgeprägtes Tiefenverständnis der technischen Gegebenheiten und Lösungen erforderlich, und zwar sowohl bei den alten Geräten als auch bei der neuen IT-Infrastrukturen und darüber hinaus bei den technischen Möglichkeiten, die eine Kommunikation ermöglichen. Erschwerend kommt hinzu, dass alle möglicherweise in Frage kommenden Mittel sich aus ihrem jeweiligen Anforderungs- und Einsatzkontext heraus entwickelt haben, die dies auf unterschiedlichste Weise prägen. Schon feinste Unterschiede in deren Charakteristika können dazu führen, dass bei der Nutzung in einen anderen Umfeld als dem bislang bekannten überraschend unerwartete und unbekannten Probleme auftreten, die ein reibungsloses Zusammenwirken zumindest erschweren und zu Leistungseinbußen führen können.

Die Technologie von Blockketten (engl. Blockchains) bzw. "Distributed Ledgers" - auch Distributed Ledger Technology DLT genannt - ist aktuell eine intensiv diskutierte Technologie, die insbesondere als verteiltes Datenbanksystem oder als Netzwerk-Applikation realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, dass der Prozessor Funktionen ausführt, um das erfindungsgemäße Verfahren oder einen Schritt des erfindungsgemäßen Verfahrens zu implementieren oder zu realisieren. Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweiten Datums in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) oder der Netzwerk-Applikation verstanden werden.

Unter einer "Prüfsumme" - beispielsweise eine Datenblockprüfsumme, eine Datenprüfsumme, eine Knotenprüfsumme, eine Transaktionsprüfsumme, eine Verkettungsprüfsumme oder dergleichen - kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems (oder der Netzwerk-Applikation) oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz / Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems (oder der Netzwerk-Applikation) prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks, für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems (oder der Netzwerk-Applikation) den vorhergehenden Datenblock des verteilten Datenbanksystems (oder der Netzwerk-Applikation) angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems oder der Netzwerk-Applikation) verwendet werden, um einen neuen Datenblock mit einem (vorhandenen) Datenblock des verteilten Datenbanksystems (oder der Netzwerk-Applikation) zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen bezieht. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist. Wie bereits erläutert kann z. B. anstelle des verteilten Datenbanksystems auf die gleiche Weise eine Netzwerk-Applikation verwendet werden.

Die Daten, die beispielsweise in einer Transkation eines Datenblocks gespeichert werden, können insbesondere auf unterschiedliche Weise bereitgestellt werden. Anstelle der Daten, z. B. Nutzerdaten wie Messdaten oder Daten / Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems oder der Netzwerk-Applikation sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transkation noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems (oder der Netzwerk-Applikation) bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in den entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems (oder der Netzwerk-Applikation) möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems (oder der Netzwerk-Applikation) für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems (oder der Netzwerk-Applikation)" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems (oder der Netzwerk-Applikation) verweisen bzw. diese referenzieren [1][4][5].

Unter "Einfügen in das verteilte Datenbanksystem (oder der Netzwerk-Applikation)" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems (oder der Netzwerk-Applikation) übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems (oder der Netzwerk-Applikation) verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in dem von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems (oder der Netzwerk-Applikation) verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transaktionen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktionen und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.). Eine "Transaktion" kann im Zusammenhang mit der Erfindung beispielsweise auch eine Nachricht oder eine Kommunikationsnachricht sein bzw. als ein solche bezeichnet werden. Entsprecht ist beispielsweise eine Nachricht eine Transaktion, wobei die Nachricht beispielsweise Steuerbefehle zum Ansteuern der Geräte umfasst und/oder auch Voraussetzungen (z. B. vorgegebene Anforderungen) für das Ausführen der Steuerbefehle umfasst.

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems oder der Netzwerk-Applikation) oder die entsprechende Transaktion des verteilten Datenbanksystems oder der Netzwerk-Applikation) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem (oder in die Netzwerk-Applikation" erläutert ist.

Unter einem "Programmcode" (z. B. ein Smart-Contract) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem (oder durch die Netzwerk-Applikation) ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turingvollständig sind. Der Programmcode wird vorzugsweise durch die Infrastruktur des verteilten Datenbanksystems (oder der Netzwerk-Applikation) ausgeführt [4][5]. Dabei wird beispielsweise eine virtuelle Maschine durch die Infrastruktur des verteilten Datenbanksystems (oder der Netzwerk-Applikation) realisiert.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems (z. B. eine Blockkette) oder einer Netzwerk-Applikation gespeichert, beispielsweise in einem Datenblock des verteilten Datenbanksystems (oder der Netzwerk-Applikation). Beispielsweise kann der Smart Contract auf die gleiche Weise ausgeführt werden, wie dies bei der Definition von "Programmcode", insbesondere im Zusammenhang mit der Erfindung, erläutert ist.

Unter "Smart-Contract-Prozess" bzw. ein "Smart-Contract" kann im Zusammenhang mit der Erfindung insbesondere auch ein Ausführen eines Programmcodes bzw. eines Smart-Contracts in einem Prozess durch das verteilte Datenbanksystem bzw. deren Infrastruktur (oder durch die Netzwerkapplikation und/oder der entsprechenden Infrastruktur der Netzwerkapplikation) verstanden werden.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einer "Netzwerk-Applikation", kann im Zusammenhang mit der Erfindung beispielsweise eine dezentral verteilte Datenbank, ein verteiltes Datenbanksystem, eine verteilte Datenbank, eine Peer-to-Peer Applikation, ein verteiltes Speicherverwaltungssystem, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Beispielsweise kann eine Netzwerk-Applikation (oder auch als Netzwerkapplikation bezeichnet) ein verteiltes Datenbanksystem sein, das z. B. mittels einer Blockkette oder einem distributed ledger realisiert ist. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder einer Kombination aus den genannten Implementierungsvarianten [6][7] umgesetzt ist. Auch können beispielsweise unterschiedliche Konsensverfahren (engl. consensus algorithms) implementiert werden. Dies kann beispielsweise ein Konsensverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5].

Unter einem "verteilten Datenbanksystem" oder einer "Netzwerk-Applikation" kann beispielsweise auch ein verteiltes Datenbanksystem oder eine Netzwerk-Applikation verstanden werden, von dem/der zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen über gerichtete Kanten miteinander verbunden. Azyklisch bedeutet dabei insbesondere, dass es keine gerichteten Schleifen im Graphen gibt.

Bei dem verteilten Datenbanksystem oder bei der Netzwerk-Applikation kann es sich beispielsweise um ein öffentliches verteiltes Datenbanksystem oder eine ein öffentliche Netzwerk-Applikation (z. B. eine öffentliche Blockkette) oder ein geschlossenes (oder privates) verteiltes Datenbanksystem oder eine geschlossene Netzwerk-Applikation (z. B. eine private Blockkette) handeln.

Handelt es sich beispielsweise um ein öffentliches verteiltes Datenbanksystem oder eine öffentliche Netzwerk-Applikation, bedeutet dies, dass neue Knoten und/oder Geräte ohne Berechtigungsnachweise oder ohne Authentifizierung oder ohne Anmeldeinformationen oder ohne Credentials dem verteilten Datenbanksystem oder der Netzwerk-Applikation beitreten können bzw. von diesem akzeptiert werden. Insbesondere können in einem solchen Fall die Betreiber der Knoten und/oder Geräte anonym bleiben.

Handelt es sich bei dem verteilten Datenbanksystem oder der Netzwerk-Applikation beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem oder der Netzwerk-Applikation beitreten zu können bzw. von diesem akzeptiert zu werden.

Bei einem verteilten Datenbanksystem oder bei der Netzwerk-Applikation kann es sich beispielsweise auch um ein verteiltes Kommunikationssystem zum Datenaustausch handeln. Dies kann beispielsweise ein Netzwerk oder ein Peer-to-Peer Netzwerk sein.

Bei einem/dem verteilten Datenbanksystem kann es sich beispielsweise auch um ein dezentrales verteiltes Datenbanksystem und/oder ein dezentrales verteiltes Kommunikationssystem handeln.

Bei einer "Netzwerk-Applikation" kann es sich beispielsweise auch um eine Netzwerk-Applikationsinfrastruktur handeln oder die Netzwerk-Applikation umfasst eine entsprechende Netzwerk-Applikationsinfrastruktur. Diese Infrastruktur kann beispielsweise Knoten und/oder Kommunikationsnetze und/oder Datenschnittstelle und/oder weitere Komponenten umfassen, um die Netzwerk-Applikation zu realisieren oder auszuführen. Bei der Netzwerk-Applikation kann es sich z. B. um eine verteilte Netzwerk-Applikation (z. B. eine verteilte Peer-to-Peer Applikation oder ein verteiltes Datenbanksystem) handeln, die beispielsweise auf mehreren Knoten der Netzwerk-Applikationsinfrastruktur ausgeführt wird.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensverfahren (engl. consensus algorithms) implementiert werden. Dies kann beispielsweise ein Konsensverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten miteinander verbunden. Dies bedeutet insbesondere, dass Kanten (vorzugsweise alle Kanten) die gleiche Richtung (vorzugsweise immer die gleiche Richtung) haben, ähnlich wie dies z. B. bei Zeit ist. Mit anderen Worten ist es insbesondere nicht möglich rückwärts (also entgegen der gemeinsamen gleichen Richtung) die Transaktionen oder die Blöcke oder die Knoten des Graphen anzulaufen bzw. anzuspringen. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten zu können bzw. um von diesem akzeptiert zu werden.

Bei einem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein. Alternativ oder zusätzlich kann die Erfindung beispielsweise auch mittels einer Peer-2-Peer Applikation anstelle des verteilten Datenbanksystems realisiert werden.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blocckette oder eine Peer to Peer Datenbank) oder einer Netzwerk-Applikation verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Blockheader), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen-oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems" kann im Zusammenhang mit der Erfindung beispielsweise der Datenblock des verteilten Datenbanksystems verstanden werden, der insbesondere einem (bestimmten) Datenblock direkt vorhergeht. Alternativ können unter "vorhergehender Datenblöcke eines (bestimmten) Datenblockes des verteilten Datenbanksystems" insbesondere auch alle Datenblöcke des verteilten Datenbanksystems verstanden werden, die dem bestimmten Datenblock vorhergehen. Hierdurch kann beispielsweise die Verkettungsprüfsumme oder die Transaktionsprüfsumme insbesondere nur über den dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems oder einer Netzwerk-Applikation" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem (z. B. eine Blockkette) durchführen [1][4][5]. Solche Knoten können beispielsweise Transaktionen einer Netzwerk-Applikation oder eines verteilten Datenbanksystems bzw. deren Datenblöcke ausführen oder neue Datenblöcke mit neuen Transaktionen in das verteilte Datenbanksystem (oder in die Netzwerk-Applikation) mittels neuer Datenblöcke einfügen bzw. verketten. Insbesondere kann dieses Validieren und/oder Verketten durch einen vertrauenswürdigen Knoten (z. B. einen Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems (oder der Netzwerk-Applikation) sind. Dabei können die Geräte beispielsweise Feldgeräte sein oder Geräte im Internet der Dinge sein, die insbesondere auch ein Knoten des verteilten Datenbanksystems (oder der Netzwerk-Applikation) sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Bloccketten-Orakel löscht umfasst). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smart-Phone, ein Gerät oder ein Server verstanden werden, die jeweils außerhalb der Blockkette angeordnet sind und kein Teil der Infrastruktur des verteilten Datenbanksystems (oder der Netzwerk-Applikation) sind bzw. eine separate getrennte Infrastruktur bilden. Bei einem Gerät handelt es sich beispielsweise um ein Fertigungsgerät und/oder ein elektromechanisches Gerät und/oder ein elektronisches Gerät und/oder ein Gerät eines Automatisierungsnetzwerkes (z. B. für industrielle technische Anlagen, Fertigungsanlagen, Energie- bzw. Ressourcenverteilungsanlagen), diese Geräte sind insbesondere nicht in der Lage, direkt mit dem verteilten Datenbanksystem oder der Netzwerk-Applikation zu kommunizieren.

Ein solches Gerät außerhalb des verteilten Datenbanksystems (oder der Netzwerk-Applikation) kann beispielsweise nicht auf die Daten des verteilten Datenbanksystems (oder der Netzwerk-Applikation) zugreifen, da das Gerät beispielsweise zu alt ist und weder über die notwendigen kryptographischen und/oder IT-Security-Fähigkeiten verfügt noch mit dem Datenformat des verteilten Datenbanksystems (oder der Netzwerk-Applikation) kompatibel ist. Dies verhindert eine Kommunikation zwischen den neuen IT-Infrastrukturen und den alten Geräten.

Dieses Problem kann durch Einsatz eines Konvertierungsmoduls - auch Blockchain Bridge bzw. BC Bridge genannt - gelöst oder zumindest gelindert werden. Beispielsweiseweise kann ein solches Konvertierungsmodul prüfen, ob das den Daten zugeordnet Gerät in der Lage ist, die Daten oder Teile der Daten zu verarbeiten. Das Ergebnis der entsprechenden Prüfung kann dann z. B. in dem Konvertierungsprüfergebnis gespeichert werden. Die Daten können dabei beispielsweise die ersten Nachrichten oder die erste Nachricht oder der Nachrichteninhalt der ersten Nachricht oder Daten einer Kommunikationsverbindung sein.

Ein Beispiel für ein solches Konvertierungsmodul ist in dem erteilten europäischen Patent EP 3595267 und der internationalen Patentanmeldung PCT/EP2019/065873 offenbart, die unter der Nummer WO 2020/011491 veröffentlicht ist.

Auf diese Weise wird es möglich, eine dezentrale (blockkettenbasierte) IT-Infrastruktur mit alten bzw. legacy Geräten zu koppeln. Insbesondere kann eine Koppelung von solchen Altgeräten an eine neue, blockkettenbasierte Infrastruktur erfolgen. Dies ist beispielsweise für Energieversorgungsnetze vorteilhaft, deren Steuerung auf eine Blockketten-Infrastruktur umgestellt wird, wobei jedoch nicht jedes einzelne Gerät des bestehenden Energieversorgungsnetzes ausgetauscht wird. Dies erlaubt beispielsweise, dass z. B. mittels einer Blocckette Nachrichten (z. B. in Transaktionen) mit Steuerbefehlen an die einzelnen Geräte gesendet werden, wobei die Empfangsvorrichtung kommunikativ zwischen den Geräten und dem verteilten Datenbanksystem (oder der Netzwerk-Applikation) angeordnet ist und die Zuordnung und/oder Übermittlung der jeweiligen Nachrichten an ein (entsprechendes) Gerät vornimmt. Insbesondere werden die entsprechenden Nachrichteninhalte oder Daten auch in ein Datenformat konvertiert, das mit einem Gerät kompatibel ist. Auch können z. B. Daten oder ein Nachrichteninhalt kryptographisch überprüft werden und/oder ein kryptographischer Schutz entfernt werden (z. B. durch ein Entschlüsseln des Nachrichteninhalts oder der Daten).

Nach einer Erkenntnis der Erfindung sind dezentrale blockkettenbasierte Infrastrukturen vornehmlich im finanziellen / kommerziellen Umfeld entstanden und durch die Anforderungen dieses Umfelds geprägt. Anforderungen, die im industriellen Umfeld eine hohe bis sehr hohe Bedeutung haben, wie zum Beispiel Sicherheit oder Verfügbarkeit, haben im finanziellen und kommerziellen Umfeld eine bei weitem geringere oder gar keine Bedeutung.

Bedingt durch ihre Herkunft aus dem finanziellen / kommerziellen Umfeld hat die Eindeutigkeit von Transaktionen eine sehr hohe Bedeutung, weil mehrdeutige Transaktionen in diesem Umfeld auf gar keinen Fall vorkommen dürfen. Dies hat dazu geführt, dass heutige dezentrale blockkettenbasierte Infrastrukturen durch Plattformen - auch DLT Plattformen genannt - realisiert werden, deren Knoten eindeutige kryptographische Daten aufweisen, die eindeutige Identifikationen erlauben (z.B. von Aktoren, Empfängern, Sendern, Daten, Datensätzen, Transaktion). Nicht eindeutige Identifikationen sind ausgeschlossen.

Nach Erkenntnis der Erfindung hat demgegenüber Verfügbarkeit in heutigen dezentralen blockkettenbasierten Infrastrukturen nur eine untergeordnete Bedeutung. Sollte die Eindeutigkeit einer Finanztransaktion nur auf Kosten der Systemperformance erreichbar sein, dann ist dies in diesem Umfeld eine hinnehmbare Konsequenz, vor allem vor dem Hintergrund, dass im Finanzsektor oder im kommerziellen Umfeld Transaktionszeiten von mehreren Tagen ohnehin Tradition haben und weit verbreitet sind.

Nach Erkenntnis der Erfindung hat dies unter anderem dazu geführt, dass heutige DLT Plattformen keine Mechanismen vorsehen, die bei Ausfall eines Knotens für eine hohe Verfügbarkeit sorgen. Stattdessen muss der Zustand der Transaktionen an jedem Knoten gewahrt werden und die Transaktionen identifizieren einen Knoten eindeutig. Als Schutz gegen den Ausfall einer DLT Plattform kann man allenfalls mehrere Kopien des Distributed Ledgers vorsehen. Im Falle einer Nichtverfügbarkeit eines aktuell genutzten Ledgers tritt eine der Kopien an die Stelle des nicht verfügbaren Ledgers. Diese Technologie ist wegen der Kopien des vollständigen Ledgers langsam, aufwändig und datenintensiv. Für das finanzielle / kommerzielle Umfeld ist der hohe Aufwand unkritisch und z.B. wegen der Datensicherheit, die durch die hohe Redundanz erreicht wird, auch gewollt und gerechtfertigt.

Nach Erkenntnis der Erfindung ergibt sich im industriellen Umfeld auf Grund dieser Situation ein Problem, wenn heutige Konvertierungsmodule zur Anbindung von alten Geräten an dezentrale blockkettenbasierte Infrastrukturen dieselben Mechanismen nutzen. Dabei kann wegen der geforderten Eindeutigkeit der kryptographischen Daten das Gesamtsystem gegen ein Ausfall eines Konvertierungsmodul nur dadurch geschützt werden, dass mehrere parallele dezentrale blockkettenbasierte Infrastrukturen vorgesehen werden, an die die alten Geräte jeweils mit einem separaten Konvertierungsmodul angebunden werden. Dies ist sehr langsam und teuer und führt im Fall eines Ausfalls des Konvertierungsmoduls wegen des zeitaufwändigen Umstellens auf eine der anderen dezentralen blockkettenbasierten Infrastrukturen zu einem Absinken der Verfügbarkeit des Gesamtsystems.

Die Erfindung löst zumindest Teile der von ihr erkannten Probleme, durch die von ihr mit diesem Dokument beschriebene und dabei insbesondere die gemäß den Patentansprüchen beanspruchte technische Lehre.

Gemäß einem Aspekt betrifft die Erfindung ein **System** umfassend:
- zumindest eine Empfangsvorrichtung oder eine Sendevorrichtung;
- eine Kryptographiemodul;
- eine Eindeutigkeitssicherungsmodul.

Bei einer ersten Ausführungsform weist die Erfindung zumindest eine **Empfangsvorrichtung** auf. Diese ruft einen Gerätezustand (z. B. Fehlerzustand, Betriebszustand) von dem einer entsprechenden ersten Nachricht oder den entsprechenden Daten zugeordneten Gerät ab (z. B. mittels des Identifikationsmoduls oder der zweiten Kommunikationsschnittstelle), wobei eine Übertragung an das zugeordnete Gerät abhängig von dem abgerufenen Gerätezustand erfolgt.

Die Empfangsvorrichtung ist dahingehend vorteilhaft, um insbesondere vor dem Übermitteln des Nachrichteninhalts oder der Daten an das Gerät zu überprüfen, ob z. B. das entsprechende Gerät eingeschaltet ist oder betriebsbereit ist. Damit kann insbesondere verhindert werden, Nachrichten an Geräte zu senden, die sich in einem Fehlerzustand befinden. Wird beispielsweise eine Nachricht nicht an ein entsprechend zugeordnetes Gerät gesendet (z. B. weil dies entsprechend des Gerätezustandes nicht möglich ist), kann eine entsprechende Nachricht bzw. Transaktion, die diesen Gerätezustand (z. B. den Fehlerzustand) umfasst, an das verteilte Datenbanksystem (oder die Netzwerk-Applikation) übermittelt werden bzw. von dem verteilten Datenbanksystem (oder die Netzwerk-Applikation) gespeichert werden.

Bei weiteren Ausführungsformen der Empfangsvorrichtung umfasst der Gerätezustand einen Datensatz über die verfügbaren Geräteressourcen und/oder aktuellen Geräteeigenschaften.

Bei weiteren Ausführungsformen der Empfangsvorrichtung erfolgt eine Übertragung an das entsprechende Gerät, wenn vorgegebene Anforderungen der entsprechenden ersten Nachricht durch das zugeordnete Gerät erfüllt sind, wobei beispielsweise die Erfüllung der vorgegebenen Anforderungen anhand des Gerätezustandes überprüft wird.

Die Empfangsvorrichtung ist dahingehend vorteilhaft, um insbesondere zu überprüfen, ob eine entsprechende Nachricht überhaupt von einem Gerät verarbeitet werden kann. Umfasst eine entsprechende Nachricht beispielsweise Steuerbefehle, um einen Generator oder ein Reservekraftwerk anzufahren bzw. zu steuern, kann beispielsweise in den Anforderungen vorgegeben sein, dass eine bestimmte Menge an Energie mindestens erzeugt werden soll. Alternativ (also in einem anderen Anwendungsszenario) kann durch die vorgegebenen Anforderungen eine bestimmte Fertigungspräzision oder Fertigungsdauer vorgegeben werden, die eingehalten werden soll. Diese Anforderungen können beispielsweise von der Empfangsvorrichtung überprüft werden, indem die entsprechenden verfügbaren Geräteressourcen und/oder der Gerätezustand und/oder die aktuellen Geräteeigenschaften (z. B. ist das Gerät an dem richtigen Ort installiert, um z. B. keine Datenschutzvorschriften zu verletzen; ist das Gerät bzw. die vom Gerät verarbeiteten Daten vor dem Zugriff Unbefugter geschützt - z. B. kryptographisch -, um insbesondere Firmen-/Fertigungs-Know-How zu schützen) überprüft werden. Diese Überprüfung der vorgegebenen Anforderungen, die z. B. einem entsprechenden Datensatz gespeichert sind, können z. B. von dem Identifikationsmodul, dem Konvertierungsmodul, der zweiten Kommunikationsschnittstelle (z. B. eine Netzwerkschnittstelle) oder einem Evaluierungsmodul der Empfangsvorrichtung, das vor der Kommunikationsschnittstelle (z. B. eine Netzwerkschnittstelle) eines Kommunikationsbusses der Empfangsvorrichtung angeordnet ist, durchgeführt werden.

Die vorgegebenen Anforderungen können beispielsweise auch vorausgesetzte Steuerbefehle sein bzw. solche umfassen, die vorausgesetzten Steuerbefehle geben beispielsweise vor, dass diese von einem der Geräte bzw. dem Gerät bereits ausgeführt sein sollen, bevor die entsprechenden Daten und/oder Nachrichten bzw. Nachrichteninhalt (z. B. der konvertierte Nachrichteninhalt oder die konvertierten Daten) an die Geräte übermittelt werden. Alternativ oder zusätzlich können die vorausgesetzten Steuerbefehle auch weitere Geräte betreffen, wobei die weiteren Geräte beispielsweise Geräte eines weiteren Automatisierungsnetzwerkes sind. Um z. B. zu überprüfen, ob die vorausgesetzten Steuerbefehle bereits ausgeführt sind, können beispielsweise entsprechende Nachrichten bzw. Transaktionen im verteilten Datenbanksystem (oder in der Netzwerk-Applikation) ausgelesen bzw. überprüft werden, die beispielsweise eine Ausführung der vorausgesetzten Steuerbefehle bestätigen. Diese entsprechenden Nachrichten bzw. Transaktionen können beispielsweise als Bestätigungstransaktionen bezeichnet werden und werden von den entsprechenden Geräten beispielsweise nach einer Ausführung der vorausgesetzten Steuerbefehle, z. B. mittels der Sendevorrichtung, in dem verteilten Datenbanksystem (oder der Netzwerk-Applikation) gespeichert.

Bei weiteren Ausführungsformen der Empfangsvorrichtung umfasst die Empfangsvorrichtung ein **Kryptographiemodul,** wobei das Kryptographiemodul den Geräten zugeordnete kryptographische Daten umfasst.

Bei weiteren Ausführungsformen der Empfangsvorrichtung überprüft und/oder entschlüsselt das Kryptographiemodul anhand der kryptographischen Daten zumindest einen Teil der Daten oder einen Teil des Nachrichteninhalts der entsprechenden ersten Nachricht für ein zugeordnetes Gerät, wobei beispielsweise für das Überprüfen und/oder das Entschlüsseln die entsprechenden kryptographischen Daten anhand des zugeordneten Gerätes geladen werden.

Die Empfangsvorrichtung ist dahingehend vorteilhaft, um insbesondere die Nachrichten, die an ein entsprechendes Gerät übermittelt werden sollen zu überprüfen. Hierzu kann der Nachrichtenersteller beispielsweise einen ersten kryptographischen Schlüssel erhalten haben, mit dem beispielsweise eine Prüfsumme (z. B. eine Transaktionsprüfsumme oder eine andere der genannten Prüfsummen) über die Daten oder die Nachrichten bzw. den Nachrichteninhalt gebildet wurde. Alternativ kann mit diesem ersten kryptographischen Schlüssel beispielsweise auch der Nachrichteninhalt oder die Daten oder ein Teil der Daten verschlüsselt worden sein. Beispielsweise kann mit dem ersten kryptographischen Schlüssel (im Falle eines symmetrischen kryptographischen Verfahrens) oder einem zweiten kryptographischen Schlüssel, der dem ersten kryptographischen Schlüssel zugeordnet ist (z. B. bei einem asymmetrischen kryptographischen Verfahren bei dem z. B. der erste Schlüssel ein privater Schlüssel ist und der zweite Schlüssel ein öffentlicher Schlüssel ist), die Entschlüsselung oder Überprüfung des entsprechenden Nachrichteninhalts oder der Daten erfolgen.

Die kryptographischen Daten (z. B. die kryptographischen Schlüssel) können beispielsweise anhand von gerätespezifischen Daten spezifisch für ein Gerät erzeugt worden sein (z. B. eine UID des Gerätes, einer Zufallszahl, die durch das entsprechende Gerät erzeugt wurde, oder wurde anhand von für das Gerät charakteristischen Sensordaten berechnet - z. B. eine berechnete Charakteristik für ein Rauschsignal, das durch einen Sensor des Gerätes ermittelt wurde). Alternativ oder zusätzlich sind die kryptographischen Daten eine Kombination aus gerätespezifischen Daten und empfangsvorrichtungsspezifischer Daten (z. B. eine UID der Empfangsvorrichtung, einer Zufallszahl, die durch die Empfangsvorrichtung erzeugt wurde, oder anhand von für die Empfangsvorrichtung Sensordaten berechnet wurde - z. B. eine berechnete Charakteristik für ein Rauschsignal, das durch einen Sensor der Empfangsvorrichtung ermittelt wurde). Beispielsweise ist es auch möglich, dass mittels der gerätespezifischen Daten und/oder empfangsvorrichtungsspezifischer Daten für das entsprechende Gerät die kryptographischen Daten reproduzierbar ermittelt werden oder mittels dieser Daten ein kryptographischer Schutz (z. B. eine Verschlüsselung), mit dem die entsprechenden kryptographischen Daten eines Gerätes geschützt sind, aufgehoben (z. B. entschlüsselt werden) und/oder überprüft werden (z. B. eine digitale Signatur überprüft wird). Die gerätespezifischen Daten können beispielsweis beim Abrufen des Gerätezustandes für ein Gerät mit abgerufen werden. Bei den gerätespezifischen Daten und/oder empfangsvorrichtungsspezifischer Daten handelt es sich vorzugsweise um Daten, die nur schwer gefälscht werden können, z. B. eine Charakteristik eines Rauschsignals (das z. B. von einem Sensor oder einem Manipulationsschutzmodul erfasst wird), das bei einer Manipulation des Gerätes derart verändert wird, dass sich die Charakteristik derart verändert, dass die kryptographischen Daten ungültig werden oder auf diese nicht mehr zugegriffen werden kann. Die gerätespezifischen Daten können auch mittels eines Challenge-Response-Verfahren ermittelt bzw. ausgetauscht werden, indem beispielsweise das Verfahren auf Geräteseite und auf Empfangsvorrichtungsseite mit entsprechenden Initialwerten konfiguriert wird (z. B. indem in einem geschützten Speicher des Gerätes bzw. der Empfangsvorrichtung entsprechende Initialwerte vorkonfiguriert sind bzw. diese Initialwerte durch den geschützten Speicher berechnet und/oder bereitgestellt werden) und entsprechende gerätespezifischen Daten (z. B. ein kryptographischer Schlüssel oder ein Teil eines kryptographischen Schlüssels) von der Empfangsvorrichtung abgerufen werden können.

Bei weiteren Ausführungsformen der Empfangsvorrichtung ist das Konvertierungsmodul dazu eingerichtet anhand des Gerätes zu überprüfen, welche Daten (z. B. welche Datenteile und/oder welcher Teil der Daten und/oder alle Daten) der Daten von dem (zugeordneten) Gerät verarbeitet werden können.

Das Ergebnis dieser Prüfung wird beispielsweise im Konvertierungsprüfergebnis gespeichert, wobei beispielsweise das Konvertierungsprüfergebnis angibt, welche Teile der Daten oder ob Daten als solche für das zugeordnete Gerät zu konvertieren sind. Mit anderen Worten umfasst das Konvertierungsprüfergebnis z. B. gerätespezifische Konvertierungsanweisungen für die Daten, um die Daten beispielsweise spezifisch für das zugeordnete Gerät zu konvertieren, damit das zugeordnete Gerät z. B. die entsprechenden Daten (z. B. auch die zu konvertierenden Teile der Daten) verarbeiten kann. Um beispielsweise festzustellen, ob die Daten von dem zugeordneten Gerät ausgeführt werden können, können für die Prüfung die Geräteeigenschaften und/oder die aktuellen Geräteeigenschaften und/oder Geräteinformationen des zugeordneten Gerätes berücksichtigt werden. Die Geräteinformationen können beispielsweise auch die entsprechenden Geräteeigenschaften (z. B. aktuelle Geräteeigenschaften) umfassen.

Beispielsweise können die Daten in einem Text-Format, XML-Format oder JSON-Format vorliegen, das zugeordnete Gerät kann jedoch entsprechend seiner Geräteeigenschaften (nur) ein bestimmtes binäres Datenformat verarbeiten. Bei dem Prüfen wird dies dann z. B. festgestellt und das Konvertierungsprüfergebnis umfasst dann beispielsweise Angaben darüber, dass die Daten für eine Verarbeitung durch das Gerät konvertiert werden müssen und/oder kann zusätzlich beispielsweise Anweisungen umfassen, wie die Daten zu konvertieren sind. In den Daten können beispielsweise auch Datentypen verwendet werden, die mit dem zugeordneten Gerät inkompatibel sind. Dies können beispielsweise Double-Datentypen, Big-Integer-Datentypen oder Datumsformate sein, die das zugeordnete Gerät nicht verarbeiten kann. Auch hierfür kann dann z. B. eine entsprechende Konvertierung vorgenommen werden, wie dies bereits für andere Beispiele gezeigt wurde.

Inkompatibel bedeutet beispielsweise, dass entsprechende Daten (also z. B. das Datenformat oder die Datenformte der Daten) nicht verarbeitet werden können oder nicht unterstützt werden (z. B. von der Netzwerkapplikation oder dem verteilten Datenbanksystem). Kompatibel bedeutet beispielsweise, dass entsprechende Daten (also z. B. das Datenformat oder die Datenformte der Daten) verarbeitet werden können oder unterstützt werden (z. B. von der Netzwerkapplikation oder dem verteilten Datenbanksystem).

Wird beispielsweise beim Prüfen festgestellt, dass Teile der Daten (z. B. ein Teil eines Nachrichteninhalts, der in den Daten gespeichert ist) von dem zugeordneten Gerät nicht verarbeitet werden können (also z. B. das entsprechende Datenformat für die entsprechenden Teile der Daten inkompatibel ist) und weitere Teile der Daten durch das Gerät verarbeitet werden können, so konvertiert beispielsweise das Konvertierungsmodul vorzugsweise nur die Daten, die durch das Gerät nicht verarbeitet werden können (bzw. inkompatibel sind). Die konvertierten Teile der Daten und die Teile der Daten, die das zugeordnete Gerät ausführen konnte, werden dann wieder zu (konvertierten) Daten (oder einem Datensatz) zusammengeführt, der z. B. von dem zugeordneten Gerät als Ganzes verarbeitet werden kann. Diese konvertierten Daten (oder Datensatz) werden dann entsprechend an das zugeordnete Gerät übertragen.

Dies ist beispielsweise vorteilhaft, wenn das zugeordnete Gerät beispielsweise Datumsangaben nur bis zu einem bestimmten Zeitpunkt verarbeiten kann (z. B. 31.12.1999). In einem solchen Fall können z. B. aktuelle Datumsangaben (1.1.2018) in ein verarbeitbares Datum konvertiert werden (z. B. 1.1.1988). Bei der Konvertierung werden beispielsweise die inkompatiblen Datenteile (z. B. Datumsangaben, die nach dem 31.12.1999 liegen) mittels einer Konvertierungsvorschrift der gerätespezifischen Konvertierungsanweisungen (z. B. aktuelles Datum - 30 Jahre) in ein kompatibles Datenformat für das zugeordnete Gerät gebracht (z. B. 1.1.1988).

Es kann beispielsweise beim Überprüfen auch festgestellt werden, dass bestimmte Teile der Daten nicht konvertierbar sind. Das heißt beispielsweise, es gibt keine Möglichkeit entsprechende Daten bzw. Teile der Daten in ein Datenformat zu konvertieren, das vom zugeordneten Gerät verarbeitet werden kann. In einem solchen Fall kann beispielsweise eine Übertragung von solchen Daten an das zugeordnete Gerät unterbunden werden und/oder eine Fehlermeldung an einen Administrator geschickt werden. Alternativ oder zusätzlich können entsprechende Daten oder Teile der Daten mit Standardwerten belegt werden (z. B. ein Leer-String, ein Datum in einem gültigen Format, das z. B. nicht das aktuelle Datum ist), damit z. B. zumindest andere Teile der Daten übertragen werden können.

Bei weiteren Ausführungsformen der Empfangsvorrichtung umfasst die Empfangsvorrichtung ein Identifikationsmodul umfasst. Das Identifikationsmodul ist insbesondere dazu eingerichtet anhand der Daten eine Zuordnung (oder die Zuordnung) zu berechnen, für welche Geräte beispielsweise die Daten bestimmt sind. Alternativ oder zusätzlich ist das Identifikationsmodul insbesondere dazu eingerichtet beispielsweise anhand der Daten eine Zuordnung oder die Zuordnung zu berechnen, um beispielsweise das zugeordnete Gerät zu bestimmen.

Mit anderen Worten wird beispielsweise anhand der Daten durch das Identifikationsmodul berechnet (oder festgestellt), welches Gerät die Daten verarbeiten soll. Entsprechend wird ein solches Gerät dann beispielsweise mittels der Zuordnung, z. B. in Form eines Zuordnungsdatensatzes, den Daten zugeordnet. Die Zuordnung oder der Zuordnungsdatensatz kann beispielsweise Geräteinformationen oder Geräteeigenschaften des zugeordneten Gerätes umfassen. Diese Zuordnung oder der Zuordnungsdatensatz kann dann beispielsweise von dem Konvertierungsmodul verwendet werden, um z. B. zu überprüfen, welche Daten (z. B. welcher Teil der Daten und/oder alle Daten) der Daten von dem zugeordneten Gerät verarbeitet werden können.

In weiteren Ausführungsformen der Empfangsvorrichtungen kann diese zusätzlich jeweils beispielsweise eine Konfigurationsschnittstelle und/oder einen Lüfter und/oder ein Monitoringmodul umfassen. Mit der Konfigurationsschnittstelle können beispielsweise Updates oder Firmwareversionen eingespielt werden. Mit dem Lüfter kann z. B. die Empfangsvorrichtung gekühlt werden. Mit dem Monitoringmodul kann der Zustand und/oder das Betriebsverhalten der entsprechenden Empfangsvorrichtung überwacht werden und z. B. in einer Datei gespeichert werden (z. B. einer Logging-Datei).

Gemäß einer weiteren Ausführungsform weist die Erfindung alternativ zu oder neben der Empfangsvorrichtung zumindest eine **Sendevorrichtung** auf, die ihrerseits zwei Kommunikationsschnittstellen, ein Identifikationsmodul und ein Konvertierungsmodul aufweist.

Beispielsweise kann das Konvertierungsmodul dazu eingerichtet sein, die Daten oder den Nachrichteninhalt der entsprechenden ersten Nachricht in ein Datenformat für das verteilte Datenbanksystem oder für eine Netzwerk-Applikation zu konvertieren, wobei das Datenformat z. B. durch das zugeordnete Gerät vorgegeben ist.

Beispielsweise kann das Konvertierungsmodul dazu eingerichtet sein, das (entsprechende) verteilte Datenbanksystem aus den verteilten Datenbanksystemen oder die (entsprechende) Netzwerk-Applikation aus den Netzwerkapplikationen anhand des Prüfergebnisses und/oder der Datenformatanforderungen auszuwählen. Beispielsweise kann die zweite Kommunikationsschnittstelle dazu eingerichtet sein die konvertierten Daten und/oder die Daten an das ausgewählte (entsprechende) verteilte Datenbanksystem oder die ausgewählte (entsprechende) Netzwerk-Applikation zu übertragen. Mit anderen Worten ist beispielsweise die Netzwerk-Applikation die ausgewählte Netzwerk-Applikation oder das verteilte Datenbanksystem ist das ausgewählte verteilte Datenbanksystem.

Die Datenformatanforderungen können beispielsweise durch die Zuordnung und/oder von Geräteeigenschaften (des zugeordneten Gerätes), die in der Zuordnung (oder einem Zuordnungsdatensatz) gespeichert sind, vorgegeben sein.

Erfüllen beispielsweise mehrere verteilte Datenbanksysteme oder mehrere Netzwerk-Applikationen die Datenformatanforderungen - sprich sie sind jeweils mit den Datenformatanforderungen kompatibel - , so können die Daten z. B. für die jeweils kompatiblen verteilten Datenbanksysteme oder die jeweils kompatiblen Netzwerk-Applikationen konvertiert werden und/oder jeweils an diese übertragen werden. Kompatibel bedeutet beispielsweise, dass das jeweilige verteilte Datenbanksystem oder die jeweilige Netzwerkapplikation zumindest ein Datenformat der Datenformatanforderungen unterstützt und/oder verarbeiten kann. Das Datenformat gibt dabei beispielsweise ein Format für Daten an, das von der Netzwerk-Applikation oder dem verteilten Datenbanksystem verarbeitet werden kann.

Beispielsweise kann alternativ oder zusätzlich aus den kompatiblen verteilten Datenbanksystemen oder aus den kompatiblen Netzwerk-Applikationen auch die Netzwerk-Applikation oder das verteilte Datenbanksystem für eine Datenkonvertierung (oder für eine Konvertierung der Daten) und/oder Datenübertragung (der konvertierten Daten oder der Daten) ausgewählt werden, das ein zusätzliches Auswahlkriterium erfüllt. Das Auswahlkriterium kann beispielsweise eine Zuverlässigkeit, kryptographische Anforderungen (z. B. verwendete Schlüssellängen, kryptographische Protokolle) oder Anforderungen an die entsprechende Infrastruktur (z. B. es muss mindestens eine vorgegebene Anzahl von Knoten geben oder die Netzwerk-Applikation oder das verteilte Datenbanksystem sind z. B. als Cloud-Service realisiert) vorgeben, die von der Netzwerk-Applikation oder dem verteilten Datenbanksystem unterstützt werden sollen. Beispielsweise wird dann nur ein verteiltes Datenbanksystem oder eine Netzwerk-Applikation ausgewählt, die das Auswahlkriterium am besten erfüllt.

Beispielsweise kann die zweite Kommunikationsschnittstelle dazu eingerichtet sein mit den verteilten Datenbanksystemen (z. B. das verteilte Datenbanksystem oder die weiteren verteilten Datenbanksysteme oder das ausgewählte verteilte Datenbanksystem) oder den Netzwerk-Applikationen (z. b. die Netzwerk-Applikation oder die weiteren Netzwerk-Applikationen oder der ausgewählten Netzwerk-Applikation) zu kommunizieren um z. B. die unterstützten Datenformate der Netzwerk-Applikationen oder der verteilten Datenbanksysteme abzurufen und/oder die konvertierten Daten zu übermitteln.

Konkrete Beispiele wie z. B. eine Konvertierung der Daten realisiert sein kann, können analog zu den Beispielen der Empfangsvorrichtung realisiert sein.

Die Daten können dabei beispielsweise die ersten Nachrichten oder die erste Nachricht oder der Nachrichteninhalt der ersten Nachricht oder Daten einer Kommunikationsverbindung sein.

Mit der Erfindung ist es insbesondere möglich eine dezentrale Infrastruktur mit alten bzw. legacy Geräten zu koppeln. Mit der Erfindung kann insbesondere eine Koppelung von solchen Altgeräten an eine neue, blockkettenbasierte Infrastruktur erfolgen. Dies ist beispielsweise für Energieversorgungsnetze vorteilhaft, deren Steuerung auf eine Blockketten Infrastruktur umgestellt wird, wobei jedoch nicht jedes einzelne Gerät des bestehenden Energieversorgungsnetzes ausgetauscht wird. Die Erfindung erlaubt es beispielsweise, dass z. B. ein Gerät Nachrichten (z. B. mit Steuerbefehlen oder Statusmeldungen zur Abarbeitung von Steuerbefehlen) an das verteilte Datenbanksystem oder die Netzwerk-Applikation sendet, wobei die Sendevorrichtung kommunikativ zwischen den Geräten und dem verteilten Datenbanksystem (oder der Netzwerk-Applikation) angeordnet ist und die Zuordnung und/oder Übermittlung der jeweiligen Nachrichten an das verteilte Datenbanksystem (oder an die Netzwerk-Applikation) realisiert. Insbesondere werden die entsprechenden Nachrichteninhalte oder Daten auch in ein Datenformat konvertiert, das mit dem verteilten Datenbanksystem (oder der Netzwerk-Applikation) kompatibel ist. Insbesondere müssen die Geräte nicht an die neue Infrastruktur angepasst werden.

Beispielsweise wird durch Geräteeigenschaften des zugeordneten Gerätes vorgegeben, dass die Daten in einem oder mehreren Datenformaten in dem verteilten Datenbanksystem oder der Netzwerk-Applikation gespeichert werden können. Beispielsweise kann durch die Datenformatanforderungen vorgegeben werden, dass die Daten des zugeordneten Gerätes in einem XML-Format oder einem JSON-Format, jedoch nicht in einem Binärformat gespeichert werden sollen. Beispielsweise unterstützt das verteilte Datenbanksystem ein XML-Format und die Netzwerk-Applikation nur ein proprietäres Binärformat. Die zweite Kommunikationsschnittstelle und/oder das Konvertierungsmodul überprüfen zunächst, welche Datenformate, die von dem verteilten Datenbanksystem oder der Netzwerk-Applikation unterstützt werden (unterstützt bedeutet dabei z. B., welche Datenformate von dem verteilten Datenbanksystem oder der Netzwerk-Applikation verarbeitet werden können), ebenfalls den Datenformatvorgaben der Datenformatanforderungen des zugeordneten Gerätes entsprechen. Die zweite Kommunikationsschnittstelle übermittelt dann in einer Variante beispielsweise anhand des bei dieser Prüfung ermittelten Prüfergebnisses an welches verteilte Datenbanksystem (es können auch mehrere verteilte Datenbanksysteme vorliegen) oder an welche Netzwerk-Applikation die konvertierten Daten übermittelt werden. Dieses Prüfergebnis kann alternativ auch vom Konvertierungsmodul oder vom Identifikationsmodul auf die gleiche Weise ermittelt werden und z. B. der zweiten Kommunikationsschnittstelle bereitgestellt werden.

Beispielsweise kann die zweite Kommunikationsschnittstelle dazu eingerichtet sein, die konvertierten Daten oder den konvertierten Nachrichteninhalt abhängig von dem Prüfergebnis an das verteilte Datenbanksystem oder ein weiteres verteiltes Datenbanksystem oder die Netzwerk-Applikation oder eine weitere Netzwerkapplikation zu übertragen.

Bei weiteren Ausführungsformen der Sendevorrichtung umfasst die Sendevorrichtung ein **Kryptographiemodul,** wobei das Kryptographiemodul den Geräten zugeordnete kryptographische Daten umfasst.

Bei weiteren Ausführungsformen der Sendevorrichtung lädt das Kryptographiemodul anhand des zugeordneten Gerätes entsprechende kryptographische Daten, wobei mittels der entsprechenden kryptographischen Daten (die vorzugsweise gerätespezifisch sind) zumindest ein Teil der Daten oder ein Teil des Nachrichteninhalts der entsprechenden ersten Nachricht gerätespezifischen für das zugeordnete Geräte kryptographisch geschützt werden und wobei beispielsweise das kryptographische Schützen vor dem Senden des Nachrichteninhalts oder der Daten (oder der konvertierten Varianten der hier genannten Daten, Nachrichten und Nachrichteninhalte) erfolgt.

Die Sendevorrichtung ist dahingehend vorteilhaft, um insbesondere die Nachrichten, die an das verteilte Datenbanksystem (oder an die Netzwerk-Applikation) gesendet werden (und/oder von diesem gespeichert werden) kryptographisch zu schützen. Dies kann beispielsweise dadurch erfolgen, dass die entsprechenden Daten oder der entsprechende Nachrichteninhalt mittels einer (kryptographischen) Prüfsumme (z. B. eine Transaktionsprüfsumme) geschützt wird und/oder verschlüsselt wird. Hierzu kann die Sendevorrichtung beispielsweise einen ersten kryptographischen Schlüssel (diese ist z. B. spezifisch für das Gerät) umfassen, mit dem beispielsweise eine Prüfsumme über die Daten oder die Nachrichten bzw. den Nachrichteninhalt gebildet wird. Alternativ kann mit diesem ersten kryptographischen Schlüssel beispielsweise auch der Nachrichteninhalt verschlüsselt werden oder auch die Daten verschlüsselt werden. Ein Empfänger der Nachricht kann beispielsweise mit dem ersten kryptographischen Schlüssel (im Falle eines symmetrischen kryptographischen Verfahrens) oder einem zweiten kryptographischen Schlüssel, der dem ersten kryptographischen Schlüssel zugeordnet ist (z. B. bei einem asymmetrischen kryptographischen Verfahren bei dem z. B. der erste Schlüssel ein privater Schlüssel ist und der zweite Schlüssel ein öffentlicher Schlüssel ist), die Entschlüsselung oder Überprüfung des entsprechenden Nachrichteninhalts oder der entsprechenden Daten durchführen. Hier kann das entsprechende Schlüsselmaterial dem Empfänger beispielsweise über einen sicheren Kanal übermittelt worden sein.

Die kryptographischen Daten (z. B. die kryptographischen Schlüssel) können beispielsweise anhand von gerätespezifischen Daten erzeugt worden sein (z. B. eine UID des Gerätes, einer Zufallszahl, die durch das entsprechende Gerät erzeugt wurde, oder anhand von für das Gerät charakteristischen Sensordaten berechnet wurde - z. B. eine berechnete Charakteristik für ein Rauschsignal, das durch einen Sensor des Gerätes ermittelt wurde). Alternativ oder zusätzlich sind die kryptographischen Daten eine Kombination aus gerätespezifischen Daten und sendevorrichtungsspezifischer Daten (z. B. eine UID der Sendevorrichtung, einer Zufallszahl, die durch die Sendevorrichtung erzeugt wurde, oder anhand von für die Sendevorrichtung Sensordaten berechnet wurde - z. B. eine berechnete Charakteristik für ein Rauschsignal, das durch einen Sensor der Sendevorrichtung ermittelt wurde). Beispielsweise ist es auch möglich, dass mittels der gerätespezifischen Daten und/oder sendevorrichtungsspezifischer Daten für das entsprechende Gerät die kryptographischen Daten reproduzierbar ermittelt werden. Beispielsweise kann mittels der gerätespezifischen Daten und/oder sendevorrichtungsspezifischer Daten ein kryptographischer Schutz (z. B. eine Verschlüsselung), mit dem die entsprechenden kryptographischen Daten eines Gerätes geschützt sind, aufgehoben (z. B. entschlüsselt werden) und/oder überprüft werden (z. B. eine digitale Signatur überprüft wird oder eine (kryptographische) Prüfsumme für die kryptographischen Daten überprüft wird), wenn z. B. aus den gerätespezifischen Daten und/oder sendevorrichtungsspezifischer Daten hierfür ein separater kryptographischer Schlüssel abgeleitet bzw. berechnet wird. Die gerätespezifischen Daten können beispielsweise in der Nachricht des entsprechenden Gerätes gespeichert sein. Bei den gerätespezifischen Daten und/oder sendevorrichtungsspezifischen Daten handelt es sich vorzugsweise um Daten die nur schwer gefälscht werden können, z. B. eine Charakteristik eines Rauschsignals (z. B. von einem Sensor oder einem Manipulationsschutzmodul erfasst wird), das bei einer Manipulation des Gerätes derart verändert wird, dass sich die Charakteristik derart verändert, dass die kryptographischen Daten ungültig werden oder auf diese nicht mehr zugegriffen werden kann. Die gerätespezifischen Daten können auch mittels eines Challenge-Response-Verfahren ermittelt bzw. ausgetauscht werden, indem beispielsweise das Verfahren auf Geräteseite und auf Sendevorrichtungsseite mit entsprechenden Initialwerten konfiguriert wird (z. B. indem in einem geschützten Speicher des Gerätes bzw. der Sendevorrichtung entsprechende Initialwerte vorkonfiguriert sind bzw. diese Initialwerte durch den geschützten Speicher berechnet und/oder bereitgestellt werden) und entsprechende gerätespezifischen Daten (z. B. ein kryptographischer Schlüssel oder ein Teil eines kryptographischen Schlüssels) von der Sendevorrichtung abgerufen werden können.

Bei weiteren Ausführungsformen der Sendevorrichtung und/oder der Empfangsvorrichtung ist die Netzwerkapplikation oder das verteilte Datenbanksystem eine Blockkette, wobei beispielsweise die Nachrichten die von dem verteilten Datenbanksystem (oder der Netzwerk-Applikation) gesendet und/oder empfangen werden Transaktionen sind.

Bei weiteren Ausführungsformen der Sendevorrichtung und/oder der Empfangsvorrichtung sind zumindest ein Teil der Geräte, Geräte eines Automatisierungsnetzwerkes.

In weiteren Ausführungsformen der Sendevorrichtungen kann diese zusätzlich jeweils beispielsweise eine Konfigurationsschnittstelle und/oder einen Lüfter und/oder ein Monitoringmodul umfassen. Mit der Konfigurationsschnittstelle können beispielsweise Updates oder Firmwareversionen eingespielt werden. Mit dem Lüfter kann z. B. die Sendevorrichtung gekühlt werden. Mit dem Monitoringmodul kann der Zustand und/oder das Betriebsverhalten der entsprechenden Sendevorrichtung überwacht werden und z. B. in einer Datei gespeichert werden (z. B. einer Logging-Datei).

Bei anderen Ausführungsformen umfasst das System ein einziges **Kryptographiemodul,** wobei das Kryptographiemodul den Geräten zugeordnete kryptographische Daten umfasst. Vorteilhaft können so die kryptographischen Daten sowohl von der Empfangsvorrichtung als auch der Sendevorrichtung genutzt werden. Aufwände für die Realisierung und Verwaltung von mehreren Kryptographiemodulen können zu reduziert werden. Auch sinkt die Fehleranfälligkeit, weil durch die Reduktion der Anzahl der Komponenten Komplexität aus dem System genommen wird.

Gemäß einem weiteren Aspekt der Erfindung umfasst das System ein **Eindeutigkeitssicherungsmodul,** das dazu eingerichtet ist, die Aktivität der zumindest einen Empfangs- oder Sendevorrichtung nur dann zu ermöglichen, wenn kein weiteres System aktiv ist, das dieselbe Kopplung, insbesondere Konvertierung bewirkt wie das System. Vorteilhaft erlaubt dieser Aspekt, die Verfügbarkeit der Kopplung zwischen alten Legacy-Geräten und verteilten Datenbankensystemen oder Netzwerk-Applikationen zu erhöhen, indem das System mehrmals vorgesehen wird, ohne dadurch gleichzeitig das für die verteilten Datenbankensysteme oder Netzwerk-Applikationen prägende Eindeutigkeitsparadigma in den verteilten Datenbankensystemen oder Netzwerk-Applikationen zu verletzten, weil zwei funktionsgleiche Systeme, von denen dieselbe Kopplung - insbesondere mit identischen kryptographischen Daten bzw. Schlüsseln - bewirkt wird, was ohne die Erfindung zwangsläufig zu einer Vervielfältigung von allen empfangenen und gesendeten Daten führen würde.

In einer weiteren Ausführung ist das Eindeutigkeitssicherungsmodul dazu eingerichtet, die Aktivität des weiteren Systems mit Hilfe eines Zustandsynchronisationskanals zu prüfen, der zur Synchronisation zumindest eines Teils des Zustands des Systems und des weiteren Systems dient. Vorteilhaft können so mithilfe desselben Kanals gleichzeitig 1) die Systeme synchron gehalten werden, wodurch die für das industrielle Umfeld wichtige Verfügbarkeit der Kopplung erheblich gesteigert werden kann, falls ein System inaktiv werden sollte, weil ein weitgehend synchrones System existiert, das in diesem Fall aktiviert werden kann, und 2) sichergestellt werden, dass nicht beide Systeme gleichzeitig aktiv sind.

Besonders schöne Vorteile ergeben sich, wenn das Eindeutigkeitssicherungsmodul dazu eingerichtet ist, die den Geräten zugeordneten kryptographischen Daten zu synchronisieren. In diesem Fall wäre es vor allem den verteilten Datenbankensystemen oder Netzwerk-Applikationen kaum möglich, Verletzungen des für sie prägenden Eindeutigkeitsparadigmas selbstständig zu erkennen, weil alle beteiligten Systeme die Kopplung mit gültigen Schlüsseln - insbesondere gültigen privaten Schlüsseln - bewirken. Diese Gefahr wird elegant durch die Eindeutigkeitssicherung der Aktivität der Systeme gebannt.

Die Eindeutigkeitssicherung kann sowohl einseitig als auch wechselseitig vorgesehen werden. Eine einseitige Eindeutigkeitssicherung erlaubt die Anbindung einer funktionsgleichen Kopplung, die selbst keine erfindungsgemäße Eindeutigkeitssicherung aufweist. Eine wechselseitige Kopplung erlaubt einen Rollenwechsel zwischen mehreren Systemen mit funktionsgleicher Kopplung, wobei die Eindeutigkeitssicherung gegenüber dem jeweils gerade aktiven System von dem oder den dann gerade inaktiven System(en) bewirkt wird.

Das Eindeutigkeitssicherungsmodul kann dazu eingerichtet sein, die Aktivität der zumindest einen Empfangs- oder Sendevorrichtung dann zu ermöglichen, wenn bei der Synchronisation ein Fehler auftritt. Vorteilhaft kann so eine besonders hohe Verfügbarkeit der Kopplung erreicht werden, was insbesondere im industriellen Umfeld von hoher Bedeutung ist.

In einer Ausführung der Erfindung ist das Eindeutigkeitssicherungsmodul als separates Gerät oder als separates Computerprogrammprodukt, insbesondere eines, das in einer Cloud zum Ablauf kommt, ausgebildet. Vorteilhaft kann so ein Teil des Systems separat hergestellt und betrieben werden, wodurch sich Abhängigkeiten verringen und die Flexibilität bei der Auswahl der zum Einsatz kommenden Entwicklungswerkzeuge, Plattformen und Laufzeitumgebungen gesteigert wird.

Gemäß einem weiteren Ausführungsbeispiel kann das Eindeutigkeitssicherungsmodul ein Sendeprüfmodul umfasst, das dazu eingerichtet ist zu prüfen, ob von den Geräten gesendete erste Nachrichten oder Daten in einer vorbestimmten Zeitperiode oder Anzahl von Datenblöcken erfolgreich in das verteilte Datenbanksystem gespeichert werden. Das Sendeprüfmodul kann dabei alternativ oder parallel zu dem Zustandsynchronisationskanal vorgesehen werden. Bei einem parallelen Einsatz wird die Qualität der Eindeutigkeitssicherung erhöht, wenn die Inaktivität eines weiteren Systems durch mehrere Kriterien festgelegt wird und das System nur dann aktiviert wird, wenn alle Kriterien erfüllt sind.

In einer Ausführungsvariante ist das Eindeutigkeitssicherungsmodul dazu eingerichtet, die Aktivität der zumindest einen Empfangs- oder Sendevorrichtung dann zu ermöglichen, wenn die Speicherung nicht in der vorbestimmten Zeitperiode oder Anzahl von Datenblöcken erfolgt. Dies ist insbesondere dann von Vorteil, wenn eine Inaktivität des weiteren Systems nur indirekt ermittelt werden kann, z.B. weil kein direkter Zustandsynchronisationskanal vorgesehen oder der Kanal ausgefallen ist.

Gemäß einem weiteren Aspekt betrifft die Erfindung ein Verfahren zum rechnergestützten Empfangen von Nachrichten oder Daten.

Bei weiteren Ausführungsformen des Verfahrens umfasst das Verfahren weitere Verfahrensschritte, um die funktionalen Merkmale oder um weitere Merkmale der Empfangsvorrichtung bzw. deren Ausführungsformen zu realisieren.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die genannte erfindungsgemäße Sendevorrichtung und/oder Empfangsvorrichtung erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die erfindungsgemäße Sendevorrichtung und/oder die Empfangsvorrichtung erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel;
- Fig. 2: ein weiteres Ausführungsbeispiel;
- Fig. 3: ein weiteres Ausführungsbeispiel;
- Fig. 4: ein weiteres Ausführungsbeispiel; und
- Fig. 5: ein weiteres Ausführungsbeispiel.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

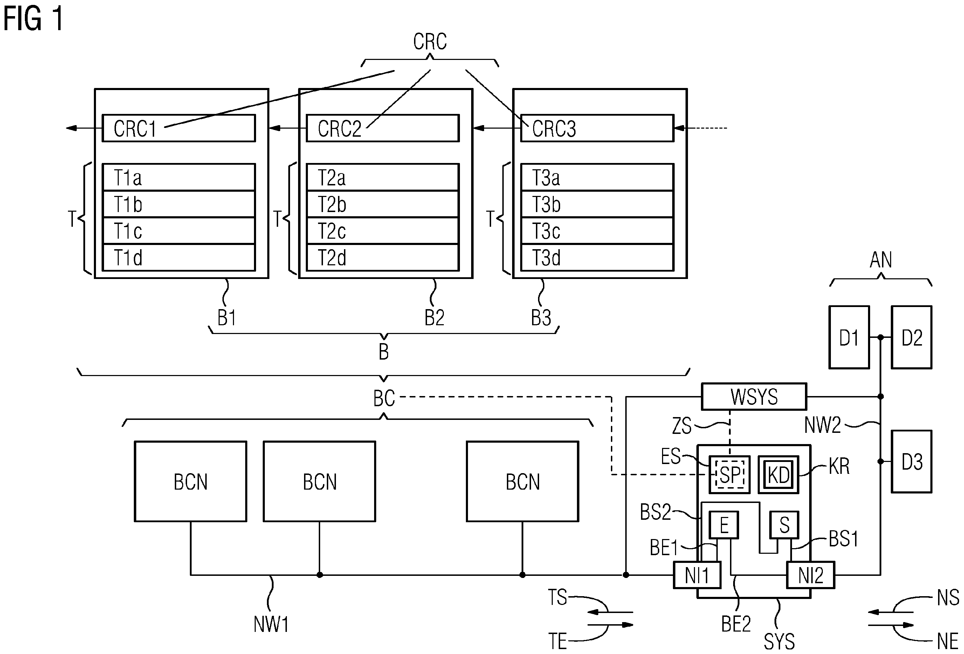

Die Fig. 1 zeigt als erstes Ausführungsbeispiel ein System SYS und ein weiteres System WSYS, mit denen dieselben alten Geräte oder Legacy-Geräte D1, D2, D3 und ein verteiltes Datenbanksystem wie eine Blockkette BC gekoppelt werden.

Das System SYS umfasst in diesem Beispiel sowohl eine Sendevorrichtung S als auch eine Empfangsvorrichtung E, ein Kryptographiemodul KR und ein Eindeutigkeitssicherungsmodul ES. Das Kryptographiemodul KR umfasst seinerseits den Geräten zugeordnete kryptographische Daten KD.

Optional ist zwischen dem Eindeutigkeitssicherungsmodul ES und dem weiteren System WSYS ein Zustandsynchronisationskanal ZS vorgesehen. Alternativ oder parallel hierzu umfasst das Eindeutigkeitssicherungsmodul ES in diesem Ausführungsbeispiel ein Sendeprüfmodul SP, das derart mit der Blockkette BC verbunden ist, dass es zumindest prüfen kann, ob von den Geräten D1, D2, D3 gesendete erste Nachrichten oder Daten in einer vorbestimmten Zeitperiode oder Anzahl von Datenblöcken erfolgreich in die Blockkette BC gespeichert werden.

Alternativ können der Zustandsynchronisationskanal ZS und das Sendeprüfmodul SP unterschiedlichen Eindeutigkeitssicherungsmodulen ES zugeordnet sein.

Zusätzlich zeigt Fig. 1 ein Automatisierungsnetzwerk AN mit einem ersten Gerät D1, einem zweiten Gerät D2 und einem dritten Gerät D3. Die Geräte (D1, D2, D3) des Automatisierungsnetzwerkes (das auch als Automatisierungsnetz bezeichnet sein kann) sind über ein zweites Netzwerk NW2 (z. B. ein Kommunikationsnetzwerk wie das Internet oder ein Ethernet-Netzwerk) miteinander kommunikativ verbunden.

Des Weiteren zeigt die Fig. 1 Blöcke B, beispielsweise einen ersten Block B1, einen zweiten Block B2 und einen dritten Block B3, einer Blockkette BC, wobei hier insbesondere ein Ausschnitt der Blockkette BC exemplarisch gezeigt ist.

Die Blöcke B umfassen jeweils mehrere Transaktionen T. Die Transaktionen T können dabei Steuertransaktionen und/oder Bestätigungstransaktionen umfassen.

Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten Vorgänger-Block gebildet wird. Somit umfasst der erste Block B1 eine erste Verkettungsprüfsumme CRC1 von seinem Vorgänger-Block, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen HashFunktion wie z.B. SHA-256, KECCAK-256 oder SHA-3 gebildet werden. Beispielsweise kann die Verkettungsprüfsumme zusätzlich über die Datenblockprüfsumme berechnet werden oder der Header umfasst die Datenblockprüfsumme (die Datenblockprüfsumme ist im Nachgang erläutert).

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen, so wie es in den Ausführungsformen der Erfindung erläutert wurde.

Die Blockkette BC selbst wird durch eine Blockketten-Infrastruktur mit mehreren Blockketten-Knoten BCN, realisiert. Bei den Knoten kann es sich beispielsweise um Blocckettenorakel oder vertrauenswürdige Knoten oder ein System SYS handeln. Die Knoten sind über ein erstes Netzwerk NW1 (z. B. ein Kommunikationsnetzwerk wie das Internet oder ein Ethernet-Netzwerk) miteinander kommunikativ verbunden. Mittels der Blockketten-Infrastruktur werden beispielsweise zumindest ein Teil der Datenblöcke B oder alle Datenblöcke B der Blockkette BC für einen Teil oder alle Knoten der Blocckette repliziert.

Mittels des Systems SYS ist das Automatisierungsnetzwerk AN mit dem verteilten Datenbanksystem oder einer Netzwerk-Applikation verbunden, wobei z. B. die Netzwerk-Applikation z. B. das verteilte Datenbanksystem (z. B. eine Blockkette) umfasst oder realisiert. Hierzu umfasst das System SYS neben der Sendevorrichtung S und der Empfangsvorrichtung E eine erste Kommunikationsschnittstelle NI1, die mit dem ersten Netzwerk NW1 verbunden ist und damit eine Kommunikationsverbindung mit dem verteilten Datenbanksystem (oder der Netzwerk-Applikation) realisiert. Zudem umfasst das System SYS eine zweite Kommunikationsschnittstelle NI2, die mit dem zweiten Netzwerk NW2 verbunden ist und damit eine Kommunikationsverbindung mit dem Automatisierungsnetzwerk AN realisiert.

Die Empfangsvorrichtung E ist über einen ersten Bus BE1 mit der ersten Kommunikationsschnittstelle NI1 kommunikativ verbunden und über einen zweiten Bus BE2 mit der zweiten Kommunikationsschnittstelle NI2 kommunikativ verbunden.

Die Sendevorrichtung S ist über einen dritten Bus BS1 mit der zweiten Kommunikationsschnittstelle NI2 kommunikativ verbunden und über einen vierten Bus BS2 mit der ersten Kommunikationsschnittstelle NI1 kommunikativ verbunden.

Vorzugsweise unterbindet das System SYS bzw. die Sendevorrichtung S und/oder die Empfangsvorrichtung E eine direkte Kommunikation zwischen den Automatisierungsnetzwerk AN und dem verteilten Datenbanksystem (z. B. als Blockchain BC realisiert) oder der Netzwerk-Applikation. Dies ist vorteilhaft, da es sich bei dem Automatisierungsnetzwerk AN mit den Geräten (D1, D2, D3) um ein altes System handeln kann, dessen Betrieb beispielsweise gestört werden kann, wenn die Nachrichten des verteilten Datenbanksystems (oder der Netzwerk-Applikation) direkt in das Automatisierungsnetzwerk übertragen werden. Probleme können hierbei beispielsweise hinsichtlich der Bandbreite auftreten, sodass die Kommunikation zwischen den Geräten (D1-D3) z. B. wegen einer hohen Netzwerklast (die durch die Nachrichten des verteilten Datenbanksystems oder der Netzwerk-Applikation erzeugt werden) des zweiten Netzwerkes NW2 eingeschränkt oder gestört wird. Zusätzlich kann der Betrieb der Geräte beispielsweise gestört werden, da die Geräte Nachrichten empfangen, die in einem für sie nicht verarbeitbaren bzw. nicht zu verarbeitenden Datenformat vorliegen.

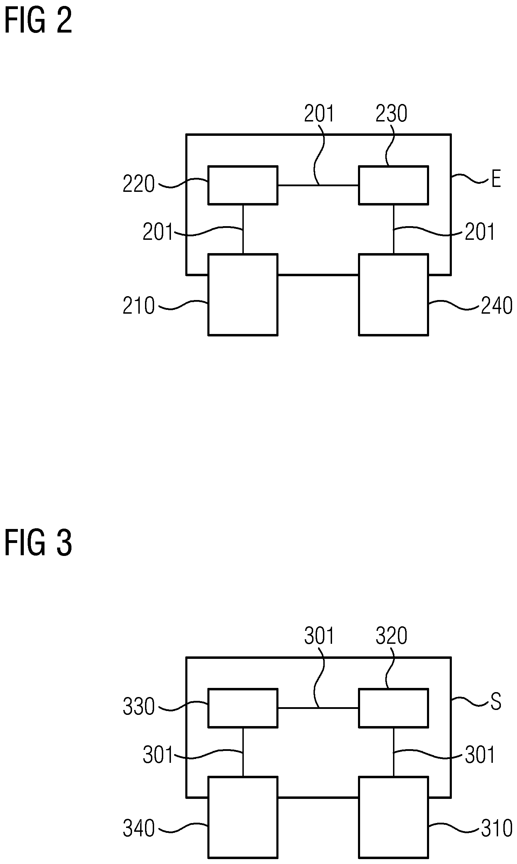

Die Fig. 2 und die Fig. 3 erläutern detailliert die Funktionsweise der Sendevorrichtung S (Fig. 3) und der Empfangsvorrichtung E (Fig. 2).

Je nach Implementierungsvariante kann das System SYS die Sendevorrichtung S, die Empfangsvorrichtung E oder beide umfassen.

Sollte das System SYS die Sendevorrichtung S umfassen (also ohne die Empfangsvorrichtung E), ist ein solches System dahingehend vorteilhaft, um beispielsweise (nur) ein Senden der Nachrichten von den Geräten zu erlauben. Dies kann der Fall sein, wenn die Geräte z. B. Statusinformationen senden oder Steuerbefehle senden, aber keine Informationen von dem verteilten Datenbanksystem (oder der Netzwerk-Applikation) verarbeiten sollen/müssen.

Sollte das System SYS beispielsweise eine Empfangsvorrichtung E umfassen (ohne die Sendevorrichtung S), so kann dies vorteilhaft sein, wenn die Geräte (D1-D3) beispielsweise nur Daten empfangen sollen und diese abarbeiten ohne dabei Nachrichten zurück zum verteilten Datenbanksystem (oder zu der Netzwerk-Applikation) zu schicken/übertragen. Beispielsweise könnten in einem solchen Fall Informationen über den Status der Verarbeitung der Nachrichten durch die Geräte über einen anderen Kommunikationskanal übertragen werden (z. B. mittels Sensoren die über ein drittes Kommunikationsnetzwerk oder über das erste Kommunikationsnetzwerk mit dem verteilten Datenbanksystem oder der Netzwerk-Applikation verbunden sind).

Die Empfangsvorrichtung E umfasst eine erste Kommunikationsschnittstelle 210 (z. B. eine Netzwerkschnittstelle zu einem Ethernetnetzwerk), ein Identifikationsmodul 220, ein Konvertierungsmodul 230 und eine zweite Kommunikationsschnittstelle 240 (z. B. eine Netzwerkschnittstelle zu einem Ethernetnetzwerk), die über einen Bus 201 miteinander kommunikativ verbunden sind.

Die Empfangsvorrichtung E ist über einen ersten Bus BE1 mit der ersten Kommunikationsschnittstelle NI1 kommunikativ verbunden und über einen zweiten Bus BE2 mit der zweiten Kommunikationsschnittstelle NI2 kommunikativ verbunden.

Die Kommunikationsschnittstellen der Empfangsvorrichtung oder der Sendevorrichtung können beispielsweise auch als Kommunikationsmodul oder Netzwerkschnittstelle bezeichnet werden.

Die erste Kommunikationsschnittstelle 210 ist dazu eingerichtet ist mit einem verteilten Datenbanksystem oder einer Netzwerk-Applikation kommunizieren und ist mit dem ersten Bus BE1 verbunden. Damit ist die erste Kommunikationsschnittstelle 210 über den ersten Bus BE1 mit der ersten Kommunikationsschnittstelle NI1 des Systems SYS kommunikativ verbunden. Zudem ist die erste Kommunikationsschnittstelle dazu eingerichtet erste Nachrichten (z. B. die erste Transaktion Tla und/oder weitere Transaktionen des ersten Blocks B1) oder Daten von dem verteilten Datenbanksystem (oder der Netzwerk-Applikation) zu empfangen. Die ersten Nachrichten oder Daten sind beispielsweise in einem Datenformat (z. B. ein XML-Datenformat) des verteilten Datenbanksystems (oder der Netzwerk-Applikation) gespeichert.

Das Identifikationsmodul ist dazu eingerichtet anhand der Daten oder des jeweiligen Nachrichteninhalts der Daten oder des jeweiligen Nachrichteninhalts der ersten Nachrichten eine Zuordnung zu berechnen, für welche Geräte eine entsprechende erste Nachricht TE (z. B. ist die erste Nachricht eine Nachricht der ersten Nachrichten) oder die (entsprechenden) Daten bestimmt ist oder sind. Beispielsweise können die (entsprechenden) Daten oder kann ein entsprechender Nachrichteninhalt eine digitale Signatur, ein digitales Zertifikat, eine Geräteadresse (z. B. eine Netzwerkadresse), eine bestimmte technische Aufgabe, einen eindeutigen Identifizierer (z. B. eine UID) oder eine Kombination hiervon umfassen, anhand dessen das Gerät oder die Geräte bestimmt werden können. Beispielsweise können die Daten oder kann die Nachricht bzw. der Nachrichteninhalt eine Angabe umfassen, dass die Geräte eine bestimmte technische Aufgabe erfüllen sollen. Das Identifikationsmodul 220 identifiziert dann welche Geräte für die Erfüllung dieser Aufgabe geeignet sind. Beispielsweise kann die Aufgabe sein, dass ein Reservekraftwerk innerhalb einer vorgegebenen Zeit (z. B. 4 Stunden) für einen vorgegebenen Zeitraum (z. B. 24 Stunden) eine vorgegebene Leistung (z. B. 500 MW) erbringen soll. Das Identifikationsmodul 220 bestimmt dann die Geräte die für eine Umsetzung einer solchen Aufgabe notwendig sind. Beispielsweise kann das erste Gerät D1 eine Gasturbine mit 200 MW Leistung sein, das zweite Gerät eine Gastrubine mit 200 MW Leistung sein und das dritte Gerät eine Gasturbine mit 200 MW Leistung sein. Ist das Automatisierungsnetzwerk bzw. sind die Geräte in der Lage die Aufgabe zu erfüllen, wird eine entsprechende Bestätigungsnachricht an das verteilte Datenbanksystem (oder die Netzwerk-Applikation) geschickt. Ist das Automatisierungsnetzwerk bzw. sind die Geräte nicht in der Lage die Aufgabe zu erfüllen, wird eine entsprechende Ablehnungsnachricht für die Aufgabe an das verteilte Datenbanksystem (oder die Netzwerk-Applikation) geschickt.

Die Zuordnung kann beispielsweise als Zuordnungsdatensatz realisiert sein, der z. B. die entsprechenden Informationen für Zuordnung umfasst. Dies können beispielsweise ein digitales Zertifikat des Gerätes sein, eine Geräteadresse (z. B. eine Netzwerkadresse), ein eindeutigen Identifizierer (z. B. eine UID) oder eine Kombination hiervon sein. Die Zuordnung oder der Zuordnungsdatensatz kann beispielsweise noch weitere Daten umfassen. Dies können beispielsweise Geräteeigenschaften sein, die z. B. angeben, welche Daten (oder Datenteile) z. B. von Daten oder Nachrichten oder von einem entsprechenden Nachrichteninhalt (z. B. des Nachrichteninhalts der ersten Nachricht oder die erste Nachricht selbst) von einem entsprechende Gerät (also durch eine Zuordnung bestimmtes Gerät) verarbeitet werden können und/oder welche Daten oder welche Daten der Nachricht und/oder des Nachrichteninhalts für das Gerät konvertiert werden müssen. Die Zuordnung kann beispielsweise auch konkrete Konvertierungsangaben umfassen, wie die Daten oder der entsprechende Nachrichteninhalt oder die entsprechende Nachricht konvertiert werden muss.

Mit der Zuordnung bzw. dem Zuordnungsdatensatz kann damit beispielsweise (den entsprechenden) Daten oder einer entsprechenden Nachricht bzw. einem entsprechenden Nachrichteninhalt z. B. einem Gerät zugeordnet werden, das diese Daten oder diese Nachricht bzw. den entsprechenden Nachrichteninhalt verarbeiten kann. Ein solches Gerät, das auf diese Weise zugeordnet wird, kann beispielsweise auch als zugeordnetes Gerät bezeichnet werden.

Das Konvertierungsmodul 230 ist dazu eingerichtet die Daten oder den Nachrichteninhalt der entsprechenden ersten Nachricht TE (z. B. ist die erste Nachricht eine Nachricht der ersten Nachrichten) in ein Datenformat für das zugeordnete Gerät (z. B. das erste Gerät D1) zu konvertieren. Insbesondere alte Geräte (sog. Legacy-Geräte) sind nicht in der Lage die Kommunikationsdaten eines verteilten Datenbanksystems (oder einer Netzwerk-Applikation) bzw. einer Blockkette zu verarbeiten. Entsprechend wird anhand des zugeordneten Gerätes überprüft, welche Daten oder welche Daten des Nachrichteninhalts überhaupt von dem Gerät verarbeitet werden können und/oder es wird auch anhand des zugeordneten Gerätes überprüft wie diese Daten für ein entsprechendes Gerät konvertiert werden können. Beispielsweise kann im Falle der oben genannten technischen Aufgabe (ansteuern des Reservekraftwerkes), die in der Nachricht gespeichert ist, in konkrete Steuerbefehle für die Geräte bzw. Generatoren konvertiert werden. Die Steuerbefehle werden entsprechend den Anforderungen der Aufgabe ermittelt. Beispielsweise werden die ersten beiden Geräte bzw. Gasturbinen mit voller Leistung genutzt bzw. gefahren und die dritte Gasturbine nur mit halber Leistung um die geforderten 500 MW Leistung zu erbringen. Dabei ist das Datenformat z. B. ein proprietäres Datenformat der Geräte.

Die zweite Kommunikationsschnittstelle 240 ist dazu eingerichtet den konvertieren Nachrichteninhalt an das Gerät zu übertragen, das der entsprechenden ersten Nachricht zugeordnet ist. Entsprechend ist die zweite Kommunikationsschnittstelle 240 mit dem zweiten Bus BE2 verbunden und steht über diesen mit der zweiten Kommunikationsschnittstelle NI2 des Systems SYS kommunikativ in Verbindung. Die Daten oder der entsprechende Nachrichteninhalt, der an das entsprechende Gerät bzw. die entsprechenden Geräte übertragen wird, kann z. B. in Form einer zweiten Nachricht NE an die Geräte/das Gerät übertragen werden.

In einer Variante ist das Konvertierungsmodul 230 insbesondere ein optionales Modul. Dies ist beispielsweise der Fall, wenn die Daten oder der Nachrichteninhalt der entsprechenden ersten Nachricht nicht konvertiert werden muss bzw. die Daten oder der Nachrichteninhalt bzw. die entsprechende erste Nachricht ein Datenformat aufweist, das von den Geräten verarbeitet werden kann. In einem solchen Fall entspricht der konvertierte Nachrichteninhalt (oder die konvertierten Daten) beim Übertragen an das Gerät bzw. die Geräte dem (unkonvertierten) Nachrichteninhalt der entsprechenden ersten Nachricht (oder den unkonvertierten Daten). Folglich wird beispielsweise die entsprechende erste Nachricht als zweite Nachricht an das Gerät oder die entsprechenden Geräte gesendet. Folglich entspricht insbesondere für andere Ausführungsformen ggf. der Empfangsvorrichtung der Nachrichteninhalt der entsprechenden ersten Nachricht dem konvertierten Nachrichteninhalt.

In dieser Variante kann die Empfangsvorrichtung folgende Merkmale umfassen:
- beispielsweise eine erste Kommunikationsschnittstelle, wobei
   - beispielsweise die erste Netzwerkschnittstelle dazu eingerichtet ist mit einem verteilten Datenbanksystem oder einer Netzwerk-Applikation kommunizieren,
   - beispielsweise die erste Kommunikationsschnittstelle dazu eingerichtet ist Daten oder erste Nachrichten von dem verteilten Datenbanksystem oder der Netzwerk-Applikation zu empfangen;
- beispielsweise ein Identifikationsmodul, wobei
   - beispielsweise das Identifikationsmodul dazu eingerichtet ist anhand der Daten oder des jeweiligen Nachrichteninhalts der ersten Nachrichten eine Zuordnung berechnet, für welche Geräte eine entsprechende erste Nachricht oder die Daten bestimmt ist/sind;
- beispielsweise eine zweite Kommunikationsschnittstelle, wobei
   - beispielsweise die zweite Kommunikationsschnittstelle dazu eingerichtet ist die Daten oder die konvertierten Daten oder den konvertieren Nachrichteninhalt und/oder den Nachrichteninhalt der entsprechenden ersten Nachricht (und/oder die erste Nachricht selbst) an das Gerät zu übertragen, das der entsprechenden ersten Nachricht zugeordnet ist.

In einer Variante ruft die Empfangsvorrichtung einen Gerätezustand von dem einer entsprechenden ersten Nachricht TE oder den Daten zugeordneten Gerät (z. B. Gerät D1) ab. Eine Übertragung an das zugeordnete Gerät ist dabei abhängig von dem abgerufenen Gerätezustand.

Auch können beispielsweise mit dem Gerätezustand ein Datensatz über die verfügbaren Geräteressourcen und/oder aktuellen Geräteeigenschaften mit abgerufen werden.

Insbesondere bei älteren Geräten ist es sinnvoll eine Überprüfung durchzuführen, ob die Geräte überhaupt in der Lage sind die entsprechenden Nachrichten zu verarbeiten.

Hat beispielsweise die zweite Turbine (zweites Gerät) aufgrund von Verschleiß oder eines technischen Defekts aktuell eine reduzierte Leistung kann dies beispielsweise beim Bestimmen der Geräte berücksichtigt werden und auch beim Konvertieren bzw. erstellen der Steuerbefehle zum Anfahren bzw. Ansteuern der Gasturbinen berücksichtigt werden. Entsprechend kann beispielsweise das erste und das dritte Gerät auf voller Leistung genutzt bzw. angefahren werden und das zweite Gerät wird entsprechend mit halber Leistung genutzt.

Mit anderen Worten erfolgt die Übertragung an das entsprechende Gerät bzw. Geräte, wenn vorgegebene Anforderungen der Daten oder der entsprechenden ersten Nachricht TE durch das zugeordnete Gerät erfüllt sind, indem beispielsweise die Erfüllung der vorgegebenen Anforderungen anhand des Gerätezustandes überprüft wird. Die technische Aufgabe kann dabei beispielsweise durch die vorgegebenen Anforderungen festgelegt sein. Die vorgegebenen Anforderungen können dabei in einem entsprechenden Datensatz der entsprechenden ersten Nachricht TE oder der Daten gespeichert sein. Die vorgegebenen Anforderungen können beispielsweise eine Anforderung zum Bereitstellen von 500 MW für 24 h an einem vorgegebenen Datum (z. B. 9. Juli 2018 um 14:43 Uhr) an einem vorgegebenen Ort oder Region (z. B. München oder Bayern oder Deutschland). Die vorgegebenen Anforderungen können beispielsweise Fertigungsanweisungen oder Fertigungsvorgaben umfassen, um z. B. ein Getriebe oder Getriebeteile an einem vorgegebenen Datum (z. B. 9. Juli 2018 um 14:43 Uhr), an einem vorgegebenen Ort oder Region (z. B. München oder Bayern oder Deutschland), innerhalb eines vorgegebenen Zeitraums (startend am vorgegebenen Datum), mit einer vorgegebenen Präzision (z. B. Abweichung von CAD-Daten um maximal 1 mm) zu fertigen. Entsprechend können die vorgegebenen Anforderungen die genannten Beispiele oder eine Kombination der genannten Beispiele umfassen.

Die vorgegebenen Anforderungen können beispielsweise auch vorausgesetzte Steuerbefehle sein bzw. solche umfassen. Die vorgegebenen Anforderungen geben dabei z. B. vor, dass die vorausgesetzten Steuerbefehle beispielsweise von einem der Geräte bzw. dem entsprechenden Gerät bereits ausgeführt sein sollen, bevor die Daten oder die entsprechenden Nachrichten bzw. Nachrichteninhalt (z. B. der konvertierte Nachrichteninhalt) an die Geräte übermittelt werden. Alternativ oder zusätzlich können die vorausgesetzten Steuerbefehle auch weitere Geräte betreffen, wobei die weiteren Geräte beispielsweise Geräte eines weiteren Automatisierungsnetzwerkes sind. Beispielsweise wird gefordert, dass von dem weiteren Automatisierungsnetzwerk (z. B. ein Verteilungsnetzwerk für Treibstoff) zumindest eine vorgegebene Menge an Treibstoff für die Generatoren bereitgestellt wurde, bevor die entsprechenden Nachrichten mit Steuerbefehlen an die Geräte (z. B. Turbinen, Gasturbinen) übertragen werden. Um z. B. zu überprüfen, ob die vorausgesetzten Steuerbefehle bereits ausgeführt sind, können beispielsweise entsprechende Nachrichten bzw. Transaktionen im verteilten Datenbanksystem (oder in der Netzwerk-Applikation) ausgelesen bzw. überprüft werden, die beispielsweise eine Ausführung der vorausgesetzten Steuerbefehle bestätigen. Diese entsprechenden Nachrichten bzw. Transaktionen können beispielsweise als Bestätigungstransaktionen bezeichnet werden und werden von den entsprechenden Geräten beispielsweise nach einer Ausführung der vorausgesetzten Steuerbefehle, z. B. mittels der Sendevorrichtung S, in dem verteilten Datenbanksystem (oder in der Netzwerk-Applikation) gespeichert. Diese Bestätigungstransaktionen können beispielsweise Informationen über die Ausführung der vorausgesetzten Steuerbefehle umfassen (z. B. Ort, Zeitpunkt und Ausführungsdauer der vorausgesetzten Steuerbefehle), Geräteeigenschaften (z. B. welche Geräte haben die vorausgesetzten Steuerbefehle ausgeführt), Gerätezustände (z. B. war das Gerät in einem regulären Betriebszustand, war es in einem Wartungszustand) .

Die vorausgeführten Steuerbefehle sind auch dahingehend vorteilhaft, wenn das Automatisierungsnetzwerk AN und die Geräte eine Fertigungsanlage sind (z. B. sind die Gerät Fertigungsmaschinen). Beispielsweise kann mit den vorausgesetzten Steuerbefehlen auch sichergestellt werden, dass ein zu fertigendes Werkstück sich in einem (Fertigungs-)Zustand befindet, damit die Steuerbefehle des zu übertragenden (konvertierten) Nachrichteninhalts oder der zu übertragenden Daten korrekt für eine weitere Bearbeitung des Werkstücks ausgeführt werden können. Beispielsweise wird in den vorausgesetzten Steuerbefehlen vorgegeben, dass ein Werkstück von einer Drehbank (z. B. das erste Gerät D1) zunächst bearbeitet wird und für die weitere Bearbeitung an einer vorgegebenen Position bereitgestellt wird. Der (aktuelle, konvertierte) Nachrichteninhalt oder die (aktuell, konvertierten) Daten mit Steuerbefehlen, der übertragen werden soll, ist beispielsweiseweise für eine Poliermaschine ((z. B. das zweite Gerät D2) bestimmt (soll also an diese übertragen werden), die das entsprechende Werkstück an der vorgegebenen Position aufnimmt und poliert.

Die vorausgeführten Steuerbefehle sind auch dahingehend vorteilhaft, wenn das Automatisierungsnetzwerk AN und die Geräte beispielsweise vernetzte Geldautomaten oder Bankautomaten sind. Beispielsweise kann mit den vorausgesetzten Steuerbefehlen auch sichergestellt werden, dass eine Geldauszahlung durch einen Bankautomaten (z. B. durch das Gerät D1) dann erfolgt, wenn vorher eine Authentifizierung des Bankkunden erfolgreich durchgeführt wurde und eine Bestätigung dafür in entsprechenden Bestätigungstransaktionen des verteilten Datenbanksystems (oder der Netzwerk-Applikation) gespeichert wurde.

Beispielsweise wird in den vorausgesetzten Steuerbefehlen (also den vorgegebenen Anforderungen) vorgegeben, dass z. B. eine Nutzerauthentisierung bzw. Nutzerauthentifizierung mittels eines vorgegebenen Authentifizierungsverfahrens (z. B. Zwei-Faktor-Authentifizierung, Pin-Eingabe) erfolgreich erfolgt sein muss, bevor z. B. die Auszahlung des Geldes erlaubt bzw. durchführt wird. Die Empfangsvorrichtung E (z. B. mittels der zweiten Kommunikationsschnittstelle 240) überträgt erst dann die entsprechenden (konvertierten) Daten oder den entsprechenden (konvertierten) Nachrichteninhalt (der entsprechenden ersten Nachricht) mit Steuerbefehlen an das Gerät (z. B. den Geldautomat), wenn z. B. in dem verteilten Datenbanksystem (oder in der Netzwerk-Applikation) eine Bestätigungstransaktion vorliegt, die beispielsweise eine erfolgreiche Nutzerauthentisierung bzw. Nutzerauthentifizierung bestätigt. Mit den Steuerbefehlen wird dann beispielsweise der Geldzähler konfiguriert, dass die von dem Nutzer bzw. Bankkunden angeforderte Geldmenge bereitgestellt wird und anschließend die Klappe zu Geldentnahme geöffnet wird.

Insbesondere ist in diesen Varianten auch die Sendevorrichtung S dahingehend ausgebildet, die entsprechenden Nachrichten bzw. Bestätigungstransaktionen ggf. für die vorausgesetzten Steuerbefehle an das verteilte Datenbanksystem (oder an die Netzwerk-Applikation) zu übermitteln bzw. im verteilten Datenbanksystem (oder in der Netzwerk-Applikation) zu speichern, wenn die Geräte die entsprechenden vorausgesetzten Steuerbefehle bzw. Steuerbefehl erfolgreich ausgeführt haben. War die Ausführung beispielsweise nicht erfolgreich, so kann auch dies in Bestätigungstransaktionen bzw. entsprechenden Nachrichten im verteilten Datenbanksystem (oder in der Netzwerk-Applikation) gespeichert werden.

In einer Variante ist das Konvertierungsmodul 230 z. B. dazu eingerichtet die Daten oder den Nachrichteninhalt der entsprechenden ersten Nachricht TE (z. B. ist die erste Nachricht eine Nachricht der ersten Nachrichten) in ein Datenformat für das zugeordnete Gerät (z. B. das erste Gerät D1) zu konvertieren. Insbesondere alte Geräte (sog. Legacy-Geräte) sind nicht in der Lage die Kommunikationsdaten einer Netzwerk-Applikation oder eines verteilten Datenbanksystems bzw. einer Blockkette zu verarbeiten. Entsprechend wird anhand des zugeordneten Gerätes überprüft, welche der Daten oder Teile der Daten oder Daten des Nachrichteninhalts von dem Gerät (z. B. dem zugeordneten Gerät) verarbeitet werden können und/oder es wird anhand des zugeordneten Gerätes überprüft wie diese Daten für ein entsprechendes Gerät (z. B. dem zugeordneten Gerät) konvertiert werden können.

Das Konvertierungsmodul in dann beispielsweise dazu eingerichtet für das Geräte zu überprüfen (z. B. anhand der Zuordnung, die z. B. für die Bestimmung für ein entsprechendes Gerät berechnet wurde) wie diese Daten (z. B. des Nachrichteninhalts oder der Nachricht oder die Teile der Daten) für das entsprechende Gerät (z. B. dem zugeordneten Gerät) zu konvertieren sind.

Beispielsweise kann im Falle der oben genannten technischen Aufgabe (ansteuern des Reservekraftwerkes), die in den Daten oder in der Nachricht gespeichert ist, in konkrete Steuerbefehle für die Geräte (z. B. das zugeordnete Gerät) bzw. Generatoren konvertiert werden. Die Steuerbefehle werden entsprechend den Anforderungen der Aufgabe ermittelt. Beispielsweise werden die ersten beiden Geräte bzw. Gasturbinen mit voller Leistung genutzt bzw. gefahren und die dritte Gasturbine nur mit halber Leistung, um die geforderten 500 MW Leistung zu erbringen. Dabei ist das Datenformat z. B. ein proprietäres Datenformat der Geräte.

Für die erläuterten Ausführungsbeispiele, Ausführungsformen oder Varianten von diesen können beispielsweise anstelle von ersten Nachrichten oder des Nachrichteninhaltes der ersten Nachricht TE auch Daten verwendet werden.

Die Daten können dabei beispielsweise die ersten Nachrichten oder die erste Nachricht oder der Nachrichteninhalt der ersten Nachricht oder Daten einer Kommunikationsverbindung sein.

Nachfolgend werden noch einige Varianten des Ausführungsbeispiels der Empfangsvorrichtung erläutert, bei dem insbesondere Varianten des Konvertierungsaspektes erläutert werden.

In einer weiteren Variante kann die Empfangsvorrichtung folgende Merkmale umfassen:
- beispielsweise eine erste Kommunikationsschnittstelle, wobei
   - beispielsweise die erste Netzwerkschnittstelle dazu eingerichtet ist mit einem verteilten Datenbanksystem (oder einer Netzwerk-Applikation) kommunizieren,
   - beispielsweise die erste Kommunikationsschnittstelle dazu eingerichtet ist Daten oder erste Nachrichten von dem verteilten Datenbanksystem (oder der Netzwerk-Applikation) zu empfangen;
- beispielsweise ein Identifikationsmodul, wobei
   - beispielsweise das Identifikationsmodul dazu eingerichtet ist anhand der Daten oder des jeweiligen Nachrichteninhalts der ersten Nachrichten eine Zuordnung zu berechnen, um z. B. zu ermitteln für welche Geräte eine entsprechende erste Nachricht bestimmt ist;
- beispielsweise ein Konvertierungsmodul, wobei
   - beispielsweise das Konvertierungsmodul dazu eingerichtet ist die Daten oder den Nachrichteninhalt der entsprechenden ersten Nachricht TE in ein Datenformat für ein Gerät (z. B. ein durch die Zuordnung bestimmtes Gerät wie z. B. ein Legacy-Gerät oder eines der Geräte D1-D3) zu konvertieren,
   - beispielsweise das Konvertierungsmodul dazu eingerichtet ist anhand des Gerätes (z. B. anhand der entsprechenden Zuordnung für ein entsprechendes Gerät) zu überprüfen, welche Daten (oder Datenteile) z. B. der Daten oder des Nachrichteninhalts von dem Gerät verarbeitet werden können,
   - beispielsweise das Konvertierungsmodul dazu eingerichtet ist für das Geräte zu überprüfen (z. B. anhand der Zuordnung, die z. B. für die Bestimmung für ein entsprechendes Gerät berechnet wurde) wie diese Daten (z. B. des Nachrichteninhalts oder der Nachricht) oder Datenteile für das entsprechende Gerät (z. B. dem zugeordneten Gerät) zu konvertieren sind;
- beispielsweise eine zweite Kommunikationsschnittstelle, wobei
   - beispielsweise die zweite Kommunikationsschnittstelle dazu eingerichtet ist die Daten und/oder die konvertierte Daten und/oder den konvertieren Nachrichteninhalt und/oder den Nachrichteninhalt der entsprechenden ersten Nachricht (und/oder die erste Nachricht selbst) an das Gerät zu übertragen, das der entsprechenden ersten Nachricht zugeordnet ist.

In einer weiteren Variante kann die Empfangsvorrichtung folgende Merkmale umfassen:
- beispielsweise eine erste Kommunikationsschnittstelle, wobei
   - beispielsweise die erste Netzwerkschnittstelle dazu eingerichtet ist mit einem verteilten Datenbanksystem (oder einer Netzwerk-Applikation) kommunizieren,
   - beispielsweise die erste Kommunikationsschnittstelle dazu eingerichtet ist Daten oder erste Nachrichten von dem verteilten Datenbanksystem (oder der Netzwerk-Applikation) zu empfangen;
- beispielsweise ein Konvertierungsmodul, wobei
   - beispielsweise das Konvertierungsmodul dazu eingerichtet ist den Daten oder den Nachrichteninhalt der entsprechenden ersten Nachricht TE in ein Datenformat für ein Gerät (z. B. ein zugeordnetes Gerät wie z. B. ein Legacy-Gerät oder eines der Geräte D1-D3 oder z. B. ein durch die Zuordnung bestimmtes Gerät wie z. B. ein Legacy-Gerät oder eines der Geräte D1-D3) zu konvertieren,
   - beispielsweise das Konvertierungsmodul dazu eingerichtet ist anhand des Gerätes zu überprüfen, welche Daten (oder Datenteile) z. B. der Daten oder des Nachrichteninhalts von dem Gerät verarbeitet werden können,
   - beispielsweise das Konvertierungsmodul dazu eingerichtet ist für das Gerätes zu überprüfen (z. B. das zugeordnete Gerät) wie diese Daten (oder Datenteile) für das entsprechende Gerät (z. B. dem zugeordneten Gerät) zu konvertieren sind;
- beispielsweise eine zweite Kommunikationsschnittstelle, wobei
   - beispielsweise die zweite Kommunikationsschnittstelle dazu eingerichtet ist den konvertieren Nachrichteninhalt und/oder den Nachrichteninhalt der entsprechenden ersten Nachricht (und/oder die erste Nachricht selbst) an das Gerät zu übertragen, das der entsprechenden ersten Nachricht zugeordnet ist.

In einer weiteren Variante kann die Empfangsvorrichtung folgende Merkmale umfassen:
- beispielsweise eine erste Kommunikationsschnittstelle, wobei
   - beispielsweise die erste Kommunikationsschnittstelle dazu eingerichtet ist Daten oder erste Nachrichten von dem verteilten Datenbanksystem (oder einer Netzwerk-Applikation) zu empfangen;
- beispielsweise ein Konvertierungsmodul, wobei
   - beispielsweise das Konvertierungsmodul dazu eingerichtet ist die Daten oder den Nachrichteninhalt der entsprechenden ersten Nachricht TE (z. B. ist die erste Nachricht eine Nachricht der ersten Nachrichten) in ein Datenformat für ein Gerät (z. B. ein zugeordnetes Gerät wie z. B. ein Legacy-Gerät oder eines der Geräte D1-D3 oder z. B. ein durch die Zuordnung bestimmtes Gerät wie z. B. ein Legacy-Gerät oder eines der Geräte D1-D3) zu konvertieren,
   - beispielsweise das Konvertierungsmodul dazu eingerichtet ist anhand des Gerätes zu überprüfen, welche Daten (oder Datenteile) z. B. der Daten oder des Nachrichteninhalts von dem Gerät verarbeitet werden können,
   - beispielsweise das Konvertierungsmodul dazu eingerichtet ist für das Gerätes zu überprüfen (z. B. das zugeordnete Gerät) wie diese Daten (oder Datenteile) für das entsprechende Gerät (z. B. dem zugeordneten Gerät) zu konvertieren sind;
- beispielsweise eine zweite Kommunikationsschnittstelle, wobei
   - beispielsweise die zweite Kommunikationsschnittstelle dazu eingerichtet ist die Daten und/oder die konvertierten Daten und/oder den konvertieren Nachrichteninhalt und/oder den Nachrichteninhalt der entsprechenden ersten Nachricht (und/oder die erste Nachricht selbst) an das Gerät zu übertragen, das der entsprechenden ersten Nachricht zugeordnet ist.

In einer weiteren Variante kann die Empfangsvorrichtung folgende Merkmale umfassen:
- beispielsweise eine erste Kommunikationsschnittstelle, wobei
   - beispielsweise die erste Kommunikationsschnittstelle dazu eingerichtet ist Daten oder erste Nachrichten von dem verteilten Datenbanksystem (oder der Netzwerk-Applikation) zu empfangen;
- beispielsweise ein Konvertierungsmodul, wobei
   - beispielsweise das Konvertierungsmodul dazu eingerichtet ist die Daten oder den Nachrichteninhalt der entsprechenden ersten Nachricht TE (z. B. ist die erste Nachricht eine Nachricht der ersten Nachrichten) in ein Datenformat für ein Gerät (z. B. ein zugeordnetes Gerät wie z. B. ein Legacy-Gerät oder eines der Geräte D1-D3 oder z. B. ein durch die Zuordnung bestimmtes Gerät wie z. B. ein Legacy-Gerät oder eines der Geräte D1-D3) zu konvertieren,
   - beispielsweise das Konvertierungsmodul dazu eingerichtet ist anhand des Gerätes zu überprüfen, welche Daten (oder Datenteile) z. B. der Daten oder des Nachrichteninhalts von dem Gerät verarbeitet werden können,
   - beispielsweise das Konvertierungsmodul dazu eingerichtet ist für das Gerätes zu überprüfen (z. B. das zugeordnete Gerät) wie diese Daten (oder Datenteile) für das entsprechende Gerät (z. B. dem zugeordneten Gerät) zu konvertieren sind;
- beispielsweise eine zweite Kommunikationsschnittstelle, wobei
   - beispielsweise die zweite Kommunikationsschnittstelle dazu eingerichtet ist die Daten und/oder die konvertierten Daten und/oder den konvertieren Nachrichteninhalt und/oder den Nachrichteninhalt der entsprechenden ersten Nachricht (und/oder die erste Nachricht selbst) an das Gerät zu übertragen, das der entsprechenden ersten Nachricht zugeordnet ist.

Das Gerät für das der Nachrichteninhalt der erste Nachricht TE und/oder die erste Nachricht TE konvertiert wird, kann beispielsweise anhand der den Daten oder der dem Nachrichteninhalt und/oder der ersten Nachricht TE zugeordneten Gerät konvertiert werden. Dies kann z. B. Anhand von der Zuordnung und/oder dem Zuordnungsdatensatz und den darin gespeicherten Daten gesteuert werden, indem z. B. die Zuordnung und/oder dem Zuordnungsdatensatz entsprechende Inforationen oder Anweisungen für die Konvertierung umfassen.

In einer weiteren Variante kann hierzu beispielsweise die Empfangsvorrichtung folgende Merkmale umfassen:
- beispielsweise eine erste Kommunikationsschnittstelle, wobei
   - beispielsweise die erste Kommunikationsschnittstelle dazu eingerichtet ist Daten oder erste Nachrichten von dem verteilten Datenbanksystem (oder der Netzwerk-Applikation) zu empfangen;
- beispielsweise ein Konvertierungsmodul, wobei
   - beispielsweise das Konvertierungsmodul dazu eingerichtet ist die Daten oder den Nachrichteninhalt der entsprechenden ersten Nachricht TE (z. B. ist die erste Nachricht eine Nachricht der ersten Nachrichten) in ein Datenformat zu konvertieren,
   - beispielsweise in ein Datenformat eines Gerätes konvertiert wird (z. B. ein zugeordnetes Gerät wie z. B. ein Legacy-Gerät oder eines der Geräte D1-D3 oder z. B. ein durch die Zuordnung bestimmtes Gerät wie z. B. ein Legacy-Gerät oder eines der Geräte D1-D3),
   - beispielsweise das Gerät mittels einer/der Zuordnung den Daten oder dem Nachrichteninhalt der entsprechenden ersten Nachricht TE oder der ersten Nachricht TE zugeordnet ist,
   - beispielsweise das Konvertierungsmodul dazu eingerichtet ist anhand des Gerätes zu überprüfen, welche Daten (oder Datenteile) z. B. der Daten oder des Nachrichteninhalts von dem Gerät verarbeitet werden können,
   - beispielsweise das Konvertierungsmodul dazu eingerichtet ist für das Gerätes zu überprüfen (z. B. das zugeordnete Gerät) wie diese Daten (oder Datenteile) für das entsprechende Gerät (z. B. dem zugeordneten Gerät) zu konvertieren sind;
- beispielsweise eine zweite Kommunikationsschnittstelle, wobei
   - beispielsweise die zweite Kommunikationsschnittstelle dazu eingerichtet ist die Daten und/oder die konvertierten Daten und/oder den konvertieren Nachrichteninhalt und/oder den Nachrichteninhalt der entsprechenden ersten Nachricht (und/oder die erste Nachricht selbst) an das Gerät zu übertragen, das der entsprechenden ersten Nachricht zugeordnet ist.

Unter Datenteile oder Teil der Daten oder Teile der Daten wird beispielsweise ein Datenbereich (z. B. ein Adressbereich oder ein Speicherbereich) und/oder Datentypen verstanden, wobei die Daten beispielsweise binäre Daten und/oder textbasierte Daten (z. B. XML-Daten oder JSON, ASCII-Daten) sind, die vorzugsweise ein spezifischen Datenformat aufweisen. Bei den binären Daten handelt es sich z. B. um Daten einer Binärdatei und bei den textbasierenden Daten handelt es sich beispielsweise um Daten einer Textdatei.

Beispielsweise kann die Empfangsvorrichtung auch ein Identifikationsmodul, so wie es in den diversen Varianten und Ausführungsbeispielen der Empfangsvorrichtung erläutert ist.

Die Empfangsvorrichtung kann beispielsweise anstelle des Nachrichteninhalts der ersten Nachricht TE, die Nachricht TE selbst oder auch die Daten (z. B die ersten Nachrichten) einer Kommunikationsverbindung konvertieren und/oder einem Gerät zuordnen und/oder dem zugeordneten Gerät übertragen.

Die erste Kommunikationsschnittstelle ist z. B. dazu eingerichtet mit einem verteilten Datenbanksystem (oder einer Netzwerk-Applikation) zu kommunizieren. Beispielsweise ist die erste Kommunikationsschnittstelle dazu eingerichtet Daten oder erste Nachrichten von dem verteilten Datenbanksystem (oder der Netzwerk-Applikation) zu empfangen und/oder über eine Kommunikationsverbindung mit dem verteilten Datenbanksystem (oder der Netzwerk-Applikation) zu kommunizieren und z. B. Daten mit dem verteilten Datenbanksystem (oder der Netzwerk-Applikation) auszutauschen.

Beispielsweise ist das Identifikationsmodul dazu eingerichtet anhand der Daten oder des jeweiligen Nachrichteninhalts der ersten Nachrichten oder der ersten Nachrichten oder einer Nachricht TE der ersten Nachrichten oder der Daten der Kommunikationsverbindung eine Zuordnung zu berechnen, um z. B. zu ermitteln für welche Geräte die daten oder eine entsprechende erste Nachricht TE oder erste Nachrichten oder der Nachrichteninhalt einer Nachricht (oder der Nachrichten) oder die Daten der Kommunikationsverbindung bestimmt sind. Mit anderen Worten ordnet das Identifikationsmodul z. B. Daten (z. B. der jeweilige Nachrichteninhalts der ersten Nachrichten oder die ersten Nachrichten oder die erste Nachricht TE der ersten Nachrichten oder die Daten der Kommunikationsverbindung oder der Nachrichteninhalt) ein entsprechendes Gerät zu.

Beispielsweise ist das Konvertierungsmodul dazu eingerichtet die Daten oder den Nachrichteninhalt der entsprechenden ersten Nachricht TE oder die ersten Nachrichten oder die erste Nachricht oder die Daten der Kommunikationsverbindung in ein Datenformat für ein Gerät (z. B. ein durch die Zuordnung bestimmtes Gerät wie z. B. ein Legacy-Gerät oder eines der Geräte D1-D3) zu konvertieren.

Beispielsweise ist das Konvertierungsmodul dazu eingerichtet anhand des Gerätes (z. B. anhand der entsprechenden Zuordnung für ein entsprechendes Gerät bzw. das zugeordnete Gerät) zu überprüfen, welche Daten z. B. des Nachrichteninhalts oder der Daten der Kommunikationsverbindung oder der Nachrichten oder der ersten Nachricht von dem Gerät verarbeitet werden können.

Beispielsweise ist das Konvertierungsmodul dazu eingerichtet für das Geräte zu überprüfen (z. B. anhand der Zuordnung, die z. B. für die Bestimmung für ein entsprechendes Gerät berechnet wurde) wie diese Daten (z. B. des Nachrichteninhalts oder der Nachricht) für das entsprechende Gerät (z. B. dem zugeordneten Gerät) zu konvertieren sind.

Beispielsweise ist die zweite Kommunikationsschnittstelle dazu eingerichtet die konvertierten Daten an das Gerät zu übertragen, das den entsprechenden Daten zugeordnet ist.

Die konvertierten Daten sind dabei ggf. der jeweilige konvertierte Nachrichteninhalt der ersten Nachrichten oder die konvertierte erste Nachrichten oder der konvertierte Nachrichteninhalt oder die konvertierte erste Nachricht TE der ersten Nachrichten oder die konvertierten Daten der Kommunikationsverbindung.

Beispielsweise kann anstelle eines verteilten Datenbanksystems in den Ausführungsbeispielen und Varianten auch eine Netzwerkapplikation (oder auch Netzwerk-Applikation genannt) verwendet werden.

In einer weiteren Variante kann beispielsweise die Empfangsvorrichtung folgende Merkmale umfassen:
- beispielsweise eine erste Kommunikationsschnittstelle, wobei
   - beispielsweise die erste Kommunikationsschnittstelle dazu eingerichtet ist Daten von einer Netzwerkapplikation zu empfangen;
- beispielsweise ein Konvertierungsmodul, wobei
   - beispielsweise das Konvertierungsmodul dazu eingerichtet ist die Daten in ein Datenformat zu konvertieren,
   - beispielsweise in das Datenformat eines Gerätes konvertiert wird (z. B. ein zugeordnetes Gerät wie z. B. ein Legacy-Gerät oder eines der Geräte D1-D3 oder z. B. ein durch die Zuordnung bestimmtes Gerät wie z. B. ein Legacy-Gerät oder eines der Geräte D1-D3),
   - beispielsweise das Gerät mittels einer/der Zuordnung der Daten zugeordnet ist,
   - beispielsweise das Konvertierungsmodul dazu eingerichtet ist anhand des Gerätes zu überprüfen, welche Daten (z. B. welcher Teil der Daten oder welcher Datenteil) z. B. der Daten von dem Gerät verarbeitet werden können,
   - beispielsweise das Konvertierungsmodul dazu eingerichtet ist für das Gerätes zu überprüfen (z. B. das zugeordnete Gerät) wie diese Daten (z. B. der entsprechende Teil der Daten) für das entsprechende Gerät (z. B. dem zugeordneten Gerät) zu konvertieren ist;
- beispielsweise eine zweite Kommunikationsschnittstelle, wobei
   - beispielsweise die zweite Kommunikationsschnittstelle dazu eingerichtet ist die konvertierten Daten an das Gerät zu übertragen, das den Daten oder Datenteilen zugeordnet ist.

Die Empfangsvorrichtung kann beispielsweise ein Identifikationsmodul umfassen, wobei beispielsweise das Identifikationsmodul dazu eingerichtet ist anhand der Daten die Zuordnung zu berechnen, um z. B. zu ermitteln für welche Geräte die Daten bestimmt sind.

In einer weiteren Variante des Ausführungsbeispiels umfasst die Empfangsvorrichtung beispielsweise eine erste Kommunikationsschnittstelle 210, wobei beispielsweise die erste Kommunikationsschnittstelle dazu eingerichtet ist Daten von einer Netzwerkapplikation zu empfangen.

Darüber hinaus umfasst die Empfangsvorrichtung beispielsweise ein Konvertierungsmodul, wobei beispielsweise das Konvertierungsmodul dazu eingerichtet ist die Daten in ein Datenformat für ein den Daten zugeordnetes Gerät zu konvertieren. Zudem ist beispielsweise das Konvertierungsmodul dazu eingerichtet für das (zugeordnete) Gerät zu bestimmen, ob und/oder wie diese Daten für das entsprechende (zugeordnete) Gerät (z. B. das zugeordnete Gerät) zu konvertieren sind.

Darüber hinaus umfasst die Empfangsvorrichtung beispielsweise eine zweite Kommunikationsschnittstelle (240), wobei beispielsweise die zweite Kommunikationsschnittstelle dazu eingerichtet ist die konvertieren Daten und/oder die Daten an das Gerät zu übertragen, das den Daten zugeordnet ist.

In einer weiteren Variante des Ausführungsbeispiels umfasst die Empfangsvorrichtung beispielsweise eine erste Kommunikationsschnittstelle, wobei beispielsweise die erste Kommunikationsschnittstelle dazu eingerichtet ist Daten von einer Netzwerkapplikation zu empfangen.

Darüber hinaus umfasst die Empfangsvorrichtung beispielsweise ein Konvertierungsmodul, wobei beispielsweise das Konvertierungsmodul dazu eingerichtet ist ein Konvertierungsprüfergebnis für die Daten zu bestimmen. Das Konvertierungsprüfergebnis gibt dabei z. B. an, ob und/oder wie die Daten beispielsweise in ein Datenformat für das den Daten zugeordnete Gerät zu konvertieren sind. Das Bestimmen des Konvertierungsprüfergebnisses erfolgt vorzugsweise gerätespezifisch für ein den Daten zugeordnetes Gerät (oder das den Geräten zugeordnete Gerät), um z. B. festzustellen, ob das zugeordnete Gerät überhaupt die entsprechenden Daten (oder Teile der Daten) verarbeiten kann und/oder falls notwendig, die Daten oder Teile der Daten spezifisch für das zugeordnete Gerät zu konvertieren.

Damit kann beispielsweise für die Daten, denen z. B. das Gerät zugeordnet ist, das Konvertierungsprüfergebnis gerätespezifisch (z. B. für das zugeordnete Gerät) bestimmt werden. Mit anderen Worten ist das Konvertierungsmodul z. B. dazu eingerichtet das Konvertierungsprüfergebnis für die Daten zu bestimmen, wobei z. B. das Konvertierungsprüfergebnis abhängig von dem zugeordneten Gerät bestimmt wird. Beim Bestimmen des Prüfergebnisses wird beispielsweise geprüft, ob das zugeordnete Gerät die Daten (überhaupt) verarbeiten kann und/oder es wird auch anhand des zugeordneten Gerätes überprüft wie diese Daten für ein entsprechendes Gerät konvertiert werden, damit das zugeordnete Gerät diese Daten z. B. verarbeiten kann. Das Konvertierungsprüfergebnis gibt dann z. B. an ob und/oder wie die Daten beispielsweise in ein Datenformat für das den Daten zugeordnete Gerät zu konvertieren sind.

Darüber hinaus ist das Konvertierungsmodul z. B. dazu eingerichtet die Daten abhängig von dem Konvertierungsprüfergebnis in das Datenformat für das den Daten zugeordnetes Gerät zu konvertieren.

Darüber hinaus umfasst die Empfangsvorrichtung beispielsweise eine zweite Kommunikationsschnittstelle, wobei beispielsweise die zweite Kommunikationsschnittstelle dazu eingerichtet ist die konvertieren Daten und/oder die Daten an das Gerät zu übertragen, das den Daten zugeordnet ist.

In weiteren Varianten der Empfangsvorrichtung ist das Konvertierungsmodul dazu eingerichtet anhand des Gerätes zu überprüfen, welche Daten (z. B. welcher Teil der Daten und/oder alle Daten) der Daten von dem (zugeordneten) Gerät verarbeitet werden können.

Das Ergebnis dieser Prüfung wird beispielsweise im Konvertierungsprüfergebnis gespeichert, wobei beispielsweise das Konvertierungsprüfergebnis angibt welche Teile der Daten oder ob die Daten als solche für das zugeordnete Gerät zu konvertieren sind. Mit anderen Worten umfasst das Konvertierungsprüfergebnis z. B. gerätespezifische Konvertierungsanweisungen für die Daten, um die Daten beispielsweise spezifisch für das zugeordnete Gerät zu konvertieren, damit das zugeordnete Gerät z. B. die entsprechenden Daten (z. B. auch die zu konvertierenden Teile der Daten) verarbeiten kann. Um beispielsweise festzustellen, ob die Daten von dem zugeordneten Gerät ausgeführt und/oder verarbeitet werden können, können für die Prüfung die Geräteeigenschaften und/oder die aktuellen Geräteeigenschaften und/oder Geräteinformationen des zugeordneten Gerätes berücksichtigt werden. Die Geräteinformationen können beispielsweise auch die entsprechenden Geräteeigenschaften (z. B. aktuelle Geräteeigenschaften) umfassen.

Beispielsweise können die Daten in einem Text-Format, XML-Format oder JSON-Format vorliegen, das zugeordnete Gerät kann jedoch entsprechend seiner Geräteeigenschaften (nur) ein bestimmtes binäres Datenformat verarbeiten. Bei dem Prüfen wird dies dann festgestellt und das Konvertierungsprüfergebnis umfasst dann beispielsweise Angaben darüber, dass die Daten für eine Verarbeitung durch das Gerät konvertiert werden müssen und/oder kann zusätzlich beispielsweise Anweisungen umfassen, wie die Daten zu konvertieren sind. In den Daten können beispielsweise auch Datentypen verwendet werden, die mit dem zugeordneten Gerät inkompatibel sind. Dies können beispielsweise Double-Datentypen, Big-Integer-Datentypen oder Datumsformate sein, die das zugeordnete Gerät nicht verarbeiten kann. Auch hierfür kann dann z. B. eine entsprechende Konvertierung vorgenommen werden, wie dies bereits für andere Beispiele gezeigt wurde.

Wird beispielsweise beim Prüfen festgestellt, dass Teile der Daten (z. B. ein Teil eines Nachrichteninhalts, der in den Daten gespeichert ist) von dem zugeordneten Gerät nicht verarbeitet werden können (also z. B. das entsprechende Datenformat für die entsprechenden Teile der Daten inkompatibel ist) und weitere Teile der Daten durch das Gerät verarbeitet werden können, so konvertiert beispielsweise das Konvertierungsmodul vorzugsweise nur die Daten, die durch das Gerät nicht verarbeitet werden können (bzw. inkompatibel sind). Die konvertierten Teile der Daten und die Teile der Daten, die das zugeordnete Gerät ausführen konnte, werden dann wieder zu (konvertierten) Daten (oder einem Datensatz) zusammengeführt, der z. B. von dem zugeordneten Gerät als Ganzes verarbeitet werden kann. Diese konvertierten Daten (oder Datensatz) werden dann entsprechend an das zugeordnete Gerät übertragen.

Dies ist beispielsweise vorteilhaft, wenn das zugeordnete Gerät beispielsweise Datumsangaben nur bis zu einem bestimmten Zeitpunkt verarbeiten kann (z. B. 31.12.1999). In einem solchen Fall können z. B. aktuelle Datumsangaben (1.1.2018) in ein verarbeitbares Datum konvertiert werden (z. B. 1.1.1988). Bei der Konvertierung werden beispielsweise die inkompatiblen Datenteile (z. B. Datumsangaben, die nach dem 31.12.1999 liegen) mittels einer Konvertierungsvorschrift der gerätespezifischen Konvertierungsanweisungen (z. B. aktuelles Datum - 30 Jahre) in ein kompatibles Datenformat für das zugeordnete Gerät gebracht (z. B. 1.1.1988).

Es kann beispielsweise beim Überprüfen auch festgestellt werden, dass bestimmte Teile der Daten nicht konvertierbar sind. Das heißt beispielsweise, es gibt keine Möglichkeit, entsprechende Daten bzw. Teile der Daten in ein Datenformat zu konvertieren, das vom zugeordneten Gerät verarbeitet werden kann. In einem solchen Fall kann beispielsweise eine Übertragung von solchen Daten an das zugeordnete Gerät unterbunden werden und/oder eine Fehlermeldung an einen Administrator geschickt werden. Alternativ oder zusätzlich können entsprechende Daten oder Teile der Daten mit Standardwerten belegt werden (z. B. ein Leer-String, ein Datum in einem gültigen Format, das z. B. nicht das aktuelle Datum ist), damit z. B. zumindest andere Teile der Daten übertragen werden können.

In weiteren Varianten der Empfangsvorrichtung umfasst die Empfangsvorrichtung ein Identifikationsmodul (falls noch nicht vorhanden), wobei das Identifikationsmodul insbesondere dazu eingerichtet ist anhand der Daten eine Zuordnung zu berechnen, für welche Geräte beispielsweise die Daten bestimmt sind und wobei das Identifikationsmodul insbesondere dazu eingerichtet ist beispielsweise anhand der Daten eine Zuordnung oder die Zuordnung zu berechnen, um beispielsweise das zugeordnete Gerät zu bestimmen.

Mit anderen Worten wird beispielsweise anhand der Daten durch das Identifikationsmodul berechnet (oder festgestellt), welches Gerät die Daten verarbeiten soll. Entsprechend wird ein solches Gerät dann beispielsweise mittels der Zuordnung, z. B. in Form eines Zuordnungsdatensatzes, den Daten zugeordnet. Die Zuordnung oder der Zuordnungsdatensatz kann beispielsweise Geräteinformationen oder Geräteeigenschaften des zugeordneten Gerätes umfassen. Diese Zuordnung oder der Zuordnungsdatensatz kann dann beispielsweise von dem Konvertierungsmodul verwendet werden, um z. B. zu überprüfen, welche Daten (z. B. welcher Teil der Daten und/oder alle Daten) der Daten von dem zugeordneten Gerät verarbeitet werden können.

In weiteren Ausführungsformen der Empfangsvorrichtungen kann diese zusätzlich jeweils beispielsweise eine Konfigurationsschnittstelle und/oder einen Lüfter und/oder ein Monitoringmodul umfassen. Mit der Konfigurationsschnittstelle können beispielsweise Updates oder Firmwareversionen eingespielt werden. Mit dem Lüfter kann z. B. die Empfangsvorrichtung gekühlt werden. Mit dem Monitoringmodul kann der Zustand und/oder das Betriebsverhalten der entsprechenden Empfangsvorrichtung überwacht werden und z. B. in einer Datei gespeichert werden (z. B. einer Logging-Datei).

Die Sendevorrichtung S umfasst eine erste Kommunikationsschnittstelle 310 (z. B. eine Netzwerkschnittstelle zu einem Ethernetnetzwerk), ein Identifikationsmodul 320, ein Konvertierungsmodul 330 und eine zweite Kommunikationsschnittstelle (z. B. eine Netzwerkschnittstelle zu einem Ethernetnetzwerk) 340, die über einen Bus 301 miteinander kommunikativ verbunden sind.

Die erste Kommunikationsschnittstelle 310 ist dazu eingerichtet mit den Geräten zu kommunizieren. Die erste Kommunikationsschnittstelle 310 ist mit dem dritten Bus BS1 verbunden und steht damit mit der zweiten Kommunikationsschnittstelle NI2 des Systems SYS kommunikativ in Verbindung. Zudem ist die erste Kommunikationsschnittstelle dazu eingerichtet erste Nachrichten oder Daten von den Geräten zu empfangen. Dabei sind die die Daten oder die ersten Nachrichten z. B. in einem proprietären Datenformat der Geräte gespeichert.

Das Identifikationsmodul 320 ist dazu eingerichtet anhand der Daten oder des jeweiligen Nachrichteninhalts der ersten Nachrichten eine Zuordnung zu berechnen, welches Gerät eine entsprechende erste Nachricht NS oder die Daten gesendet hat.

Beispielsweise können die Daten oder kann ein entsprechender Nachrichteninhalt eine digitale Signatur, ein digitales Zertifikat, eine Geräteadresse (z. B. eine Netzwerkadresse), ein Gerätestatus (z. B. einen Gerätezustand) oder einen eindeutigen Identifizierer (z. B. eine UID) umfassen, anhand dessen das entsprechende Gerät oder die Geräte bestimmt werden können. Beispielsweise können die Daten oder kann die Nachricht bzw. der Nachrichteninhalt einen Gerätestatus umfassen, zu welchem Grad die technische Aufgabe durch die Geräte bzw. das Automatisierungsnetzwerk erfüllt wurde.

Zurückkommend auf das oben genannte Beispiel mit den Gasturbinen: Es könnte z. B. sein, dass die Geräte in Summe nicht die geforderte Leistung erbringen. Beispielsweise kann die erbrachte Leistung in Summe nur 300 MW betragen. Auch können jeweils einzelne Nachrichten durch die Geräte verschickt worden sein, z. B. zu welchem Grad bzw. in welchem Umfang sie jeweils die technische Aufgabe erfüllt haben (z. B. erstes Gerät 50 MW, zweites Gerät 100 MW, drittes Gerät 150 MW erbrachte Leistung). Die Sendevorrichtung S oder ein weiteres Gerät (z. B. das Gerät, das die Nachricht an die Sendevorrichtung S gesendet hat) des Automatisierungsnetzwerkes AN berechnen dann, inwieweit die technische Aufgabe erfüllt ist.

Der fehlende Teil der Leistung kann beispielsweise wieder als Nachricht über das verteilte Datenbanksystem (oder die Netzwerk-Applikation) an ein weiteres Automatisierungsnetzwerk eines Kohlekraftwerkes oder eines Windkraftwerkanlage als zweite Nachricht TS gesendet werden. Diese können dann beispielsweise den Leistungsfehlbetrag bei der Energieerzeugung erbringen. Die zweite Nachricht TS wird dann beispielsweise in Transaktionen (z. B. die zwölfte Transaktion T3d) des verteilten Datenbanksystems (oder der Netzwerk-Applikation) gespeichert oder die zweite Nachricht (z. B. die zwölfte Transaktion T3d) ist bereits eine in dem verteilten Datenbanksystem (oder der Netzwerk-Applikation) gespeicherte Transaktion, nachdem diese erfolgreich versendet bzw. übertragen wurde.

Das Konvertierungsmodul 330 ist dazu eingerichtet die Daten oder den Nachrichteninhalt der entsprechenden ersten Nachricht NS in ein Datenformat für das verteilte Datenbanksystem (oder die Netzwerk-Applikation) zu konvertieren. Beispielsweise können die Daten oder der Nachrichteninhalt der entsprechenden ersten Nachricht in ein allgemeingültiges Datenformat (z. B. XML bzw. entsprechend eines XML-Schemas) konvertiert werden, das kompatibel mit dem verteilten Datenbanksystem (oder der Netzwerk-Applikation) ist bzw. ein Datenformat ist, welches das verteilte Datenbanksystem (oder die Netzwerk-Applikation) verarbeiten kann.

In einer Variante ist das Konvertierungsmodul 330 insbesondere ein optionales Modul. Dies ist beispielsweise der Fall, wenn die Daten oder der Nachrichteninhalt der entsprechenden ersten Nachricht nicht konvertiert werden muss bzw. der Nachrichteninhalt bzw. die entsprechende erste Nachricht ein Datenformat aufweist, das von dem verteilten Datenbanksystem (oder der Netzwerk-Applikation) verarbeitet werden kann. In einem solchen Fall entspricht der konvertierte Nachrichteninhalt oder die konvertierten Daten beim Übertragen an die Netzwerk-Applikation oder das verteilte Datenbanksystem dem (unkonvertierten) Nachrichteninhalt der entsprechenden ersten Nachricht. Folglich wird beispielsweise die entsprechende erste Nachricht als zweite Nachricht an das verteilte Datenbanksystem (oder die Netzwerk-Applikation) gesendet oder analog werden die unkonvertierten Daten an das verteilte Datenbanksystem oder die Netzwerkapplikation gesendet. Folglich entspricht insbesondere für entsprechende Ausführungsformen der Sendevorrichtung ggf. der Nachrichteninhalt der entsprechenden ersten Nachricht dem konvertierten Nachrichteninhalt.

In dieser Variante kann die Sendevorrichtung folgende Merkmale umfassen:
- beispielsweise eine erste Kommunikationsschnittstelle, wobei
   - beispielsweise die erste Kommunikationsschnittstelle dazu eingerichtet ist mit Geräten zu kommunizieren,
   - beispielsweise die Kommunikationsschnittstelle dazu eingerichtet ist erste Nachrichten oder Daten von den Geräten zu empfangen;
- beispielsweise ein Identifikationsmodul, wobei
   - beispielsweise das Identifikationsmodul dazu eingerichtet ist anhand der Daten oder des jeweiligen Nachrichteninhalts der ersten Nachrichten eine Zuordnung berechnet, welches Gerät eine entsprechende erste Nachricht gesendet hat;
- beispielsweise eine zweite Kommunikationsschnittstelle, wobei
   - beispielsweise die zweite Kommunikationsschnittstelle dazu eingerichtet ist mit einem verteilten Datenbanksystem (oder einer Netzwerk-Applikation) kommunizieren,
   - beispielsweise die Kommunikationsschnittstelle dazu eingerichtet ist die Daten oder die konvertierten Daten oder den konvertierten Nachrichteninhalt und/oder den Nachrichteninhalt der entsprechenden ersten Nachricht (und/oder die erste Nachricht selbst) an das verteilte Datenbanksystem (oder die Netzwerk-Applikation) zu übertragen.

Die zweite Kommunikationsschnittstelle 340 ist dazu eingerichtet den konvertieren Nachrichteninhalt oder die konvertierten Daten an das verteilte Datenbanksystem (oder die Netzwerk-Applikation) zu übertragen. Entsprechend ist die zweite Kommunikationsschnittstelle 340 mit dem vierten Bus BS2 verbunden und steht über diesen mit der zweiten Kommunikationsschnittstelle NI2 des Systems SYS kommunikativ in Verbindung. Die (entsprechenden) Daten oder der entsprechende Nachrichteninhalt, der an das verteilte Datenbanksystem (oder die Netzwerk-Applikation) übertragen wird, kann z. B. in Form einer zweiten Nachricht TE an die Geräte/das Gerät übertragen werden. Die zweite Nachricht TE kann hierbei beispielsweise eine Transaktion des verteilten Datenbanksystems (oder der Netzwerk-Applikation) sein, wobei die zweite Nachricht den konvertierten Nachrichteninhalt oder die konvertierten Daten umfasst/speichert.

Die Sendevorrichtung S und die Empfangsvorrichtung E können in unterschiedlichen Varianten jeweils ein eigenständiges Kryptographiemodul umfassen. Dies ist vorteilhaft, um die Sicherheit zu erhöhen. Sollte z. B. jemand einen unbefugten Zugriff auf die kryptographischen Daten eines der Kryptographiemodule erhalten haben, erhält dieser Unbefugte nicht automatisch Zugriff auf die anderen kryptographischen Daten des anderen Kryptographiemoduls. Alternativ können die Sendevorrichtung S und die Empfangsvorrichtung E ein gemeinsames Kryptographiemodul nutzen. Dies ist vorteilhaft, um die Herstellungskosten für die einzelnen Module gering zu halten. Im Falle eines gemeinsamen Kryptographiemoduls können die entsprechenden kryptographischen Daten von der Sendevorrichtung S und/oder der Empfangsvorrichtung E gemeinsam genutzt werden.

Das Kryptographiemodul ist vorzugsweise durch ein einem Manipulationsschutzmodul (z. B. durch Tamper-Mechanismen / Manipulationsschutz-Mechanismen) vor einem Zugriff von Unbefugten geschützt. Beispielsweise kann das Kryptographiemodul eine mechanische und/oder eine elektrische und/oder elektronische und/oder elektromechanische Schutzvorrichtung umfassen. Dies kann beispielsweise dadurch realisiert werden, dass das Kryptographiemodul die kryptographischen Daten für die Geräte in einem geschützten Speichermodul bzw. Speicher (z. B. ein Schlüsselspeicher) speichert, auf dessen Daten (nur) das Kryptographiemodul zugreifen kann. Entsprechend sind dieser Speicher und/oder das Kryptographiemodul durch ein Stahlgehäuse geschützt (mechanische Schutzvorrichtung), das z. B. einen Zugriff von Unbefugten unterbindet. Alternativ oder zusätzlich kann das Kryptographiemodul oder der Speicher durch eine Bohrschutzfolie geschützt sein. Sobald jemand versucht auf unberechtigte Weise oder über eine unerlaubte Schnittstelle auf den Speicher zuzugreifen, werden z. B. die kryptographischen Daten gelöscht.

Das Kryptographiemodul umfasst beispielsweise kryptographische Daten spezifisch für die Geräte (gerätespezifische kryptographische Daten).

Bei den kryptographischen Daten kann es sich beispielsweise um einen oder mehrere kryptographische Schlüssel handeln, die spezifisch für ein jeweiliges Gerät berechnet wurden. Bei den kryptographischen Schlüsseln kann es sich z. B. um symmetrische kryptographische Schlüssel oder um asymmetrische kryptographische Schlüssel handeln (z. B. ein Public / Private Schlüsselpaar).

Diese kryptographischen Daten können beispielsweise dauerhaft im bzw. durch das Kryptographiemodul gespeichert werden.

Alternativ können die kryptographischen Daten nach einer vorgegebenen Zeit (z. B. wenn ein entsprechendes Gerät für einige Stunden keine Daten/Nachrichten kommuniziert hat) aus dem Kryptographiemodul gelöscht werden. Kommuniziert das entsprechende Gerät später wieder, kann der notwendige kryptographische Schlüssel wieder neu berechnet werden. Entsprechend können die kryptographischen Daten für ein jeweiliges Gerät reproduzierbar berechnet werden bzw. erneut berechnet werden. Hierzu können beispielsweise eindeutige gerätespezifische Daten des entsprechenden Gerätes genutzt werden. Eindeutige gerätespezifische Daten sind beispielsweise eine UID des Gerätes, ein eindeutiger Identifizierer, der anhand von für das Gerät charakteristischen Sensordaten berechnet wurde - z. B. eine berechnete Charakteristik für ein Rauschsignal, das durch einen Sensor des Gerätes ermittelt wurde. Diese eindeutigen gerätespezifischen Daten können beispielsweise in Kombination mit einem geheimen Startwert (z. B. eine Seed), der beispielsweise durch das Kryptographiemodul sicher gespeichert bzw. verwaltet, genutzt werden, um die entsprechenden kryptographischen Daten erneut zu berechnen. Beispielsweise kann ein erster geheimer Startwert genutzt werden, um die kryptographischen Daten für die Sendevorrichtung zu berechnen und ein zweiter geheimer Startwert kann dazu verwendet werden die kryptographischen Daten für die Empfangsvorrichtung zu berechnen. Die genannten Berechnungen erfolgen vorzugsweise durch das Kryptographiemodul, so dass z. B. auch die verwendeten Algorithmen und temporär berechneten Daten vor dem Zugriff Unbefugter geschützt sind.

Das Kryptographiemodul kann dann beispielsweise anhand des zugeordneten Gerätes die entsprechenden kryptographischen Daten laden, diese berechnen oder auf diese zugreifen.

Das Laden der kryptographische Daten kann beispielsweise auch dadurch erfolgen, dass mittels der gerätespezifischen Daten und/oder mit vorrichtungsspezifischen Daten (z. B. sendevorrichtungsspezifischen Daten und/oder empfangsvorrichtungsspezifischen Daten) zunächst ein weiterer kryptographischer Schlüssel gebildet wird, um beispielsweise auf die gerätespezifischen kryptographischen Daten eines entsprechenden Gerätes zugreifen zu können. Die (gerätespezifischen) kryptographischen Daten sind dabei - wie bereits erwähnt - vorzugsweise durch das bzw. im Kryptographiemodul gespeichert. Beispielsweise wird eine UID eines entsprechenden Gerätes mit einem geheimen Startwert der Sendevorrichtung S und/oder der Empfangsvorrichtung E und/oder des Systems SYS kombiniert, um den weiteren kryptographischen Schlüssel zu bilden, um beispielsweise die kryptographischen Daten zu entschlüsseln. Zum Bilden des Weiteren kryptographischen Schlüssels können z. B. die Daten zu einer kombinierten Zeichenkette zusammengefügt werden (UID + geheimer Startwert). Alternativ oder zusätzlich dient die kombinierte Zeichenkette oder ein Teil der kombinierten Zeichenkette als Eingabeparameter für eine Schlüsselableitungsfunktion, wobei ein entsprechender Schlüssel reproduzierbar abgeleitet werden kann, sofern z. B. die inhaltlich gleiche/identische Zeichenkette als Eingabeparameter verwendet wird.

Im Falle der Sendevorrichtung S kann beispielsweise mittels der entsprechenden kryptographischen Daten zumindest ein Teil der Daten oder des Nachrichteninhalts der entsprechenden ersten Nachricht gerätespezifischen für das zugeordnete Gerät kryptographisch geschützt werden (also z. B. ein gerätespezifischer kryptographischer Schutz erzeugt werden). Dieses kryptographische Schützen erfolgt beispielsweise vor dem Senden des Nachrichteninhalts oder der Daten. Im Falle einer Empfangsvorrichtung E wird anhand der kryptographischen Daten zumindest einen Teil der Daten oder des Nachrichteninhalts der entsprechenden ersten Nachricht für ein zugeordnetes Gerät überprüft und/oder entschlüsselt. Dabei ist beispielsweise unter einem gerätespezifischen kryptographischen Schutz zu verstehen, dass z. B. die Daten oder die Nachrichten (bzw. deren Nachrichteninhalt), die von einem entsprechenden Gerät stammen, mittels der gerätespezifischen kryptographischen Daten geschützt werden, um vorzugsweise eine Authentizität der entsprechenden Daten oder der entsprechenden Nachrichten bzw. des Nachrichteninhalts überprüfbar zu machen.

Bei der Sendevorrichtung S ist dies dahingehend vorteilhaft, um insbesondere die Nachrichten, die an das verteilte Datenbanksystem (oder die Netzwerk-Applikation) gesendet werden (und/oder von diesem gespeichert werden), kryptographisch zu schützen (oder Nachrichten, die von den Geräten geschickt wurden, kryptographisch zu überprüfen z. B. analog zur Empfangsvorrichtung). Dies kann beispielsweise dadurch erfolgen, dass die entsprechenden Daten oder der entsprechende Nachrichteninhalt mittels einer (kryptographischen) Prüfsumme geschützt wird und/oder verschlüsselt wird. Hierzu kann die Sendevorrichtung S beispielsweise einen ersten kryptographischen Schlüssel (dieser ist z. B. spezifisch für das Gerät) umfassen, mit dem beispielsweise eine Prüfsumme über die Daten oder die Nachrichten bzw. den Nachrichteninhalt gebildet wird. Alternativ können mit diesem ersten kryptographischen Schlüssel beispielsweise auch der Nachrichteninhalt oder die Daten verschlüsselt werden. Ein Empfänger der Nachricht oder der Daten kann beispielsweise mit dem ersten kryptographischen Schlüssel (im Falle eines symmetrischen kryptographischen Verfahrens) oder einem zweiten kryptographischen Schlüssel, der dem ersten kryptographischen Schlüssel zugeordnet ist (z. B. bei einem asymmetrischen kryptographischen Verfahren, bei dem z. B. der erste Schlüssel ein privater Schlüssel und der zweite Schlüssel ein öffentlicher Schlüssel ist), die Entschlüsselung oder Überprüfung des entsprechenden Nachrichteninhalts oder der Daten durchführen. Hierzu kann das entsprechende Schlüsselmaterial dem Empfänger beispielsweise über einen sicheren Kanal übermittelt worden sein.

Die kryptographischen Daten (z. B. die kryptographischen Schlüssel), für z. B. die Sendevorrichtung S, können beispielsweise anhand von gerätespezifischen Daten oder eindeutig gerätespezifischen Daten eines entsprechenden Gerätes erzeugt worden sein (z. B. eine UID des Gerätes, einer Zufallszahl, die durch das entsprechende Gerät erzeugt wurde, oder anhand von für das Gerät charakteristischen Sensordaten berechnet wurde - z. B. eine berechnete Charakteristik für ein Rauschsignal, das durch einen Sensor des Gerätes ermittelt wurde). Alternativ oder zusätzlich sind die kryptographischen Daten eine Kombination aus (eindeutigen) gerätespezifischen Daten und sendevorrichtungsspezifischer Daten (z. B. eine UID der Sendevorrichtung, einer Zufallszahl, die durch die Sendevorrichtung erzeugt wurde, oder anhand von für die Sendevorrichtung Sensordaten berechnet wurde - z. B. eine berechnete Charakteristik für ein Rauschsignal, das durch einen Sensor der Sendevorrichtung ermittelt wurde).

Die Sensordaten können dabei beispielsweise von einem Sensor erfasst werden, der z. B. das thermische Rauschen eines Schaltkreises des Gerätes erfasst oder das Rauschen des Sensors selbst verwendet werden. Es kann beispielsweise auch das Rauschen an einer ungenutzten Datenschnittstelle oder auch an einer genutzten Datenschnittstelle verwendet werden. Dies kann beispielsweise (z. B. für die Geräte oder für das System SYS) eine Tokenring-Netzwerkschnittstelle eines Gerätes sein oder eine RS232 Schnittstelle. Auch kann z. B. das Rauschen einer Datenakquisitionshardware verwenden werden.

Beispielsweise ist es für die Sendevorrichtung S auch möglich, dass mittels der gerätespezifischen Daten und/oder sendevorrichtungsspezifischer Daten (z. B. der geheime Startwert) für das entsprechende Gerät die kryptographischen Daten reproduzierbar ermittelt werden oder mittels dieser Daten ein kryptographischer Schutz (z. B. eine Verschlüsselung), mit dem die entsprechenden kryptographischen Daten eines Gerätes geschützt sind, aufgehoben wird (z. B. entschlüsselt wird) und/oder überprüft wird (z. B. eine digitale Signatur überprüft wird). Die gerätespezifischen Daten können beispielsweise in der Nachricht des entsprechenden Gerätes gespeichert sein. Bei den gerätespezifischen Daten und/oder sendevorrichtungsspezifischen Daten handelt es sich vorzugsweise um Daten die nur schwer gefälscht werden können, z. B. eine Charakteristik eines Rauschsignals (z. B. von einem Sensor oder einem Manipulationsschutzmodul erfasst wird). Bei einer Manipulation des Gerätes oder der Vorrichtung (z. B. Sendevorrichtung oder Empfangsvorrichtung) würden diese gerätespezifischen Daten und/oder (sende)vorrichtungsspezifischen Daten derart verändert werden, dass sich z. B. die Charakteristik derart verändert, dass die kryptographischen Daten ungültig werden oder auf diese nicht mehr zugegriffen werden kann.

Es können z. B. auch mittels eines Challenge-Response-Verfahren kryptographische Daten oder Schlüsselmaterial oder gerätespezifischen Daten oder eindeutig gerätespezifischen Daten eines entsprechenden Gerätes ausgetauscht werden. Dies kann beispielsweise dadurch erfolgen, dass das Verfahren auf Geräteseite und auf Sendevorrichtungsseite mit entsprechenden Initialwerten konfiguriert wird (z. B. indem in einem geschützten Speicher des Gerätes bzw. der Sendevorrichtung entsprechende Initialwerte vorkonfiguriert sind bzw. diese Initialwerte durch den geschützten Speicher berechnet und/oder bereitgestellt werden) und/oder entsprechende gerätespezifischen Daten (z. B. ein kryptographischer Schlüssel oder ein Teil eines kryptographischen Schlüssels) von der Sendevorrichtung abgerufen werden können.

Die Empfangsvorrichtung E ist mit einem Kryptographiemodul dahingehend vorteilhaft, um insbesondere die Nachrichten, die an ein entsprechendes Gerät übermittelt werden sollen, kryptographisch zu überprüfen (oder z. B. analog zur Sendevorrichtung auch kryptographisch zu schützen). Hierzu kann der Nachrichtenerstelle beispielsweise einen ersten kryptographischen Schlüssel erhalten haben, mit dem beispielsweise eine Prüfsumme über die Nachrichten bzw. den Nachrichteninhalt oder die Daten gebildet wurde, die von der Empfangsvorrichtung E empfangen wurde. Alternativ können mit diesem ersten kryptographischen Schlüssel beispielsweise auch der Nachrichteninhalt oder die Daten verschlüsselt worden sein. Beispielsweise kann mit dem ersten kryptographischen Schlüssel (im Falle eines symmetrischen kryptographischen Verfahrens) oder einem zweiten kryptographischen Schlüssel, der dem ersten kryptographischen Schlüssel zugeordnet ist (z. B. bei einem asymmetrischen kryptographischen Verfahren bei dem z. B. der erste Schlüssel ein privater Schlüssel und der zweite Schlüssel ein öffentlicher Schlüssel ist), die Entschlüsselung oder Überprüfung des entsprechenden Nachrichteninhalts oder der Daten erfolgen.

Die kryptographischen Daten (z. B. die kryptographischen Schlüssel) der Empfangsvorrichtung E können beispielsweise anhand von gerätespezifischen Daten oder eindeutigen gerätespezifischen Daten eines entsprechenden Gerätes erzeugt worden sein (z. B. eine UID des Gerätes, einer Zufallszahl, die durch das entsprechende Gerät erzeugt wurde, oder anhand von für das Gerät charakteristischen Sensordaten berechnet wurde - z. B. eine berechnete Charakteristik für ein Rauschsignal, das durch einen Sensor des Gerätes ermittelt wurde).

Die Sensordaten können für die Empfangsvorrichtung E und/oder das System SYS beispielsweise von einem Sensor erfasst werden, der z. B. das thermische Rauschen eines Schaltkreises des Gerätes erfasst oder das Rauschen des Sensors selbst verwendet werden. Es kann beispielsweise auch das Rauschen an einer ungenutzten Datenschnittstelle oder auch an einer genutzten Datenschnittstelle verwendet werden. Dies kann beispielsweise eine Tokenring-Netzwerkschnittstelle eines Gerätes sein oder eine RS232 Schnittstelle. Auch kann z. B. das Rauschen einer Datenakquisitionshardware verwenden werden.

Alternativ oder zusätzlich sind die kryptographischen Daten für eine Empfangsvorrichtung E eine Kombination aus gerätespezifischen Daten und empfangsvorrichtungsspezifischer Daten (z. B. eine UID der Empfangsvorrichtung, einer Zufallszahl, die durch die Empfangsvorrichtung erzeugt wurde, oder anhand von für die Empfangsvorrichtung Sensordaten berechnet wurde - z. B. eine berechnete Charakteristik für ein Rauschsignal, das durch einen Sensor der Empfangsvorrichtung ermittelt wurde). Beispielsweise ist es auch möglich, dass mittels der gerätespezifischen Daten und/oder empfangsvorrichtungsspezifischer Daten für das entsprechende Gerät die kryptographischen Daten reproduzierbar ermittelt werden. Beispielsweise kann mittels dieser gerätespezifischen Daten und/oder empfangsvorrichtungsspezifischer Daten ein kryptographischer Schutz (z. B. eine Verschlüsselung), mit dem die entsprechenden kryptographischen Daten eines Gerätes geschützt sind, aufgehoben werden (z. B. entschlüsselt werden) und/oder überprüft werden (z. B. eine digitale Signatur überprüft werden). Hierzu kann ggf. anhand dieser Daten ein kryptographischer Schlüssel berechnet werden, um die dafür notwendigen kryptographischen Operationen durchzuführen.

Die gerätespezifischen Daten der Geräte für die Empfangsvorrichtung E können beispielsweis beim Abrufen des Gerätezustandes für ein Gerät mit abgerufen werden. Bei den gerätespezifischen Daten und/oder empfangsvorrichtungsspezifischer Daten handelt es sich vorzugsweise um Daten die nur schwer gefälscht werden können, z. B. ein geheimer Startwert oder eine Charakteristik eines Rauschsignals (z. B. von einem Sensor oder einem Manipulationsschutzmodul erfasst wird), das bei einer Manipulation des Gerätes derart verändert wird, dass sich z. B. die Charakteristik derart verändert, sodass wiederum die kryptographischen Daten ungültig werden oder auf diese nicht mehr zugegriffen werden kann.

Wurde beispielsweise ein Gerät durch ein manipuliertes anderes Gerät von einem Unbefugten ausgetauscht, ist es beispielsweise sehr schwer die Charakteristik eines Rauschsignals des ursprünglichen Gerätes durch das manipulierte Gerät zu duplizieren oder zu fälschen. Es wird nun beispielsweise die Charakteristik des Rauschsignals (des manipulierten Gerätes) verwendet, um einen kryptographischen Schlüssel zu erzeugen. Mittels des kryptographischen Schlüssels wird nun versucht, z. B. die kryptographischen Daten zu entschlüsseln. Da anhand der veränderten Charakteristik des Rauschsignals nicht der korrekte Schlüssel zum Entschlüsseln gebildet werden könnte, ist folglich z. B. das Entschlüsseln der kryptographischen Daten erfolglos.

Es können z. B. auch mittels eines Challenge-Response-Verfahren gerätespezifischen Daten oder eindeutigen gerätespezifischen Daten ermittelt bzw. ausgetauscht werden (z. B. beim Abrufen eines Gerätezustandes), indem beispielsweise das Verfahren auf Geräteseite und auf Empfangsvorrichtungsseite mit entsprechenden Initialwerten konfiguriert wird (z. B. indem in einem geschützten Speicher des Gerätes bzw. der Empfangsvorrichtung entsprechende Initialwerte vorkonfiguriert sind bzw. diese Initialwerte durch den geschützten Speicher berechnet und/oder bereitgestellt werden) und entsprechende gerätespezifischen Daten (z. B. ein kryptographischer Schlüssel oder ein Teil eines kryptographischen Schlüssels) von der Empfangsvorrichtung abgerufen werden können.

Auch können die Sendevorrichtung S und/oder die Empfangsvorrichtung E jeweils ein Initialisierungsmodul umfassen oder ein gemeinsames Initialisierungsmodul nutzen. Dieses Initialisierungsmodul ist dazu eingerichtet, dass z. B. bei einem neuen Gerät die entsprechenden kryptographischen Daten berechnet werden, wenn für dieses Gerät erstmalig Daten Empfangen werden oder an dieses gesendet werden sollen. Dies kann z. B. anhand der genannten Verfahren generiert werden (Eindeutige gerätespezifische Daten + Seed).

In einer Variante können die Sendevorrichtung S und/oder die Empfangsvorrichtung E auch virtuelle Geräte bilden, die die entsprechenden Schnittstellen und technischen Merkmale aufweisen, um mit dem verteilten Datenbanksystem (oder der Netzwerk-Applikation) zu kommunizieren. Beispielsweise können entsprechende virtuelle Geräte mit einer vorgegebenen Konfiguration instanziiert werden, wobei die Konfiguration abhängig von entsprechenden Geräteinformationen über das physische Geräte bestimmt oder berechnet wird. Dabei ist beispielsweise unter Konfiguration zu verstehen, welche Schnittstellen und Funktionen ein entsprechendes virtuelles Gerät bereitstellen soll.

Dies kann beispielsweise mittels einer Virtualisierungsumgebung wie z. B. VM-Ware erfolgen. Kommuniziert nun ein Knoten des verteilten Datenbanksystems (oder der Netzwerk-Applikation) mit einem virtuellen Gerät, so leitet die Sendevorrichtung S und/oder die Empfangsvorrichtung E die entsprechenden Informationen an das Alt-Gerät bzw. Legacy-Gerät weiter, wobei vor der Weiterleitung die entsprechende Konvertierung und Verarbeitung erfolgt, so wie dies oben schrieben ist. Dies ist insbesondere für Fertigungsmaschinen vorteilhaft, wenn diese zwar z. B. nicht blockkettenfähig sind, aber durch ein blockkettenbasiertes Steuersystem gesteuert werden sollen. Beispielsweise kann das Identifikationsmodul die entsprechenden virtuellen Geräte hierfür nutzen oder das Identifikationsmodul ist ein Bauteil/Element, das von einem oder mehreren virtuellen Geräten realisiert ist. Vorzugsweise verhalten sich die virtuellen Geräte wie ein Knoten des verteilten Datenbanksystems (oder der Netzwerk-Applikation) und emulieren bzw. ergänzen Funktionen für die physischen Geräte, die diesen für eine Kommunikation bzw. einem Zusammenarbeiten mit den Knoten des verteilten Datenbanksystems (oder der Netzwerk-Applikation) fehlen.

Ein entsprechendes Identifikationsmodul (mit virtuellen Geräten) für eine Empfangsvorrichtung E kann beispielsweise wie folgt realisiert sein. Das Identifikationsmodul ist dabei dazu eingerichtet anhand der Daten oder des jeweiligen Nachrichteninhalts der ersten Nachrichten eine Zuordnung zu berechnen, für welches virtuelle Geräte eine entsprechende erste Nachricht bestimmt ist. Die virtuellen Geräte umfassen dabei z. B. das Konvertierungsmodul und/oder die zweite Kommunikationsschnittstelle bzw. umfassen jeweils eine eigene virtuelle Variante von diesen bzw. greifen auf das Konvertierungsmodul und/oder die zweite Kommunikationsschnittstelle zu, um die Daten oder die Nachrichten bzw. den Nachrichteninhalt an das dem entsprechenden virtuellen Gerät zugeordnete physische Gerät zu übertragen.

Eine Empfangsvorrichtung mit entsprechenden virtuellen Geräten kann beispielsweise folgende Merkmale aufweisen:
- beispielsweise eine erste Kommunikationsschnittstelle, wobei
   - beispielsweise die erste Netzwerkschnittstelle dazu eingerichtet ist mit einem verteilten Datenbanksystem (oder einer Netzwerk-Applikation) kommunizieren,
   - beispielsweise die erste Kommunikationsschnittstelle dazu eingerichtet ist erste Nachrichten oder Daten von dem verteilten Datenbanksystem (oder der Netzwerk-Applikation) zu empfangen;
- beispielsweise virtuelle Geräte, wobei
   - beispielsweise den virtuellen Geräten jeweils ein entsprechendes (physisches) Gerät (z. B. des Automatisierungsnetzwerkes AN) zugeordnet ist,
   - beispielsweise anhand der Daten oder des jeweiligen Nachrichteninhalts (z. B. Zieladresse der entsprechenden Nachricht) der ersten Nachrichten eine Zuordnung berechnet wird, für welches der virtuellen Geräte eine entsprechende erste Nachricht oder Daten bestimmt ist;
- beispielsweise ein Konvertierungsmodul, wobei
   - beispielsweise das Konvertierungsmodul dazu eingerichtet ist die Daten oder den Nachrichteninhalt der entsprechenden ersten Nachricht in ein Datenformat für das zugeordnete Gerät zu konvertieren;
- beispielsweise eine zweite Kommunikationsschnittstelle, wobei
   - beispielsweise die zweite Kommunikationsschnittstelle dazu eingerichtet ist die Daten und/oder die konvertierten Daten und/oder den konvertieren Nachrichteninhalt und/oder den Nachrichteninhalt der entsprechenden ersten Nachricht (und/oder die erste Nachricht selbst) an das Gerät zu übertragen, das der entsprechenden ersten Nachricht zugeordnet ist.

Ein entsprechendes Identifikationsmodul für eine Sendevorrichtung S kann beispielsweise wie folgt realisiert sein. Das Identifikationsmodul ist dabei dazu eingerichtet anhand der Daten oder des jeweiligen Nachrichteninhalts der ersten Nachrichten eine Zuordnung zu berechnen, von welchem physischen Gerät eine Nachricht empfangen wurde. Anhand dieser Zuordnung wird nun festgelegt welches virtuelle Gerät eine entsprechende Nachricht verarbeiten und/oder senden soll. Die virtuellen Geräte umfassen dabei das Konvertierungsmodul und/oder die zweite Kommunikationsschnittstelle bzw. umfassen jeweils eine eigene virtuelle Variante von diesen bzw. greifen auf das Konvertierungsmodul und/oder die zweite Kommunikationsschnittstelle zu, um die Daten oder die Nachrichten bzw. den Nachrichteninhalt mittels dem entsprechenden virtuellen Gerät an das verteilte Datenbanksystem (oder die Netzwerk-Applikation) zu übertragen.

Eine Sendevorrichtung S mit entsprechenden virtuellen Geräten kann beispielsweise folgende Merkmale aufweisen:
- beispielsweise eine erste Kommunikationsschnittstelle, wobei
   - beispielsweise die erste Kommunikationsschnittstelle dazu eingerichtet ist mit Geräten zu kommunizieren,
   - beispielsweise die Kommunikationsschnittstelle dazu eingerichtet ist erste Nachrichten oder Daten von den Geräten zu empfangen;
- beispielsweise virtuelle Geräte, wobei
   - beispielsweise den virtuellen Geräten jeweils ein entsprechendes (physisches) Gerät (z. B. eines Automatisierungsnetzwerkes) zugeordnet ist,
   - beispielsweise anhand der Daten oder des jeweiligen Nachrichteninhalts (z. B. Netzwerkadresse des Senders) der ersten Nachrichten eine Zuordnung berechnet wird, welches Gerät eine
   entsprechende erste Nachricht oder die Daten gesendet hat;
- beispielsweise ein Konvertierungsmodul, wobei
   - beispielsweise das Konvertierungsmodul dazu eingerichtet ist die Daten oder den Nachrichteninhalt der entsprechenden ersten Nachricht in ein Datenformat für das verteilte Datenbanksystem (oder die Netzwerk-Applikation) zu konvertieren;
- beispielsweise eine zweite Kommunikationsschnittstelle, wobei
   - beispielsweise die zweite Kommunikationsschnittstelle dazu eingerichtet ist mit einem verteilten Datenbanksystem (oder einer Netzwerk-Applikation) kommunizieren,
   - beispielsweise die Kommunikationsschnittstelle dazu eingerichtet ist die Daten und/oder die konvertierten Daten und/oder den konvertierten Nachrichteninhalt und/oder den Nachrichteninhalt der entsprechenden ersten Nachricht (und/oder die erste Nachricht selbst) an das verteilte Datenbanksystem (oder die Netzwerk-Applikation) zu übertragen.

Die genannten Varianten mit den virtuellen Geräten können beispielsweise auch auf das Konvertierungsmodul verzichten, wenn beispielsweise keine Datenkonversion notwendig ist.

Auch können die Varianten mit den virtuellen Geräten jeweils ein entsprechendes Kryptographiemodul umfassen, dass die entsprechenden kryptographischen Daten für ein Gerät (physisch und/oder virtuell) und/oder für mehrere Geräte (physisch und/oder virtuell) umfassen. Hierzu kann beispielsweise ein virtuelles Gerät jeweils ein entsprechendes Kryptographiemodul umfassen oder die virtuellen Geräte greifen auf ein gemeinsames Kryptographiemodul zu.

Die Empfangsvorrichtung E kann beispielsweise passiv oder aktiv implementiert sein.

Bei einer aktiven Implementierung werden die ersten Nachrichten beispielsweise direkt durch das verteilte Datenbanksystem (oder die Netzwerk-Applikation) an die Empfangsvorrichtung E bzw. das System SYS geschickt (bzw. von der Empfangsvorrichtung E bzw. dem System SYS empfangen). Die entsprechenden Nachrichten können dabei z. B. eine Angabe umfassen für welches der Geräte des Automatisierungsnetzes AN die entsprechende Nachricht bestimmt ist.

Bei einer passiven Implementierung werden die ersten Nachrichten beispielsweise indirekt durch die Empfangsvorrichtung E bzw. das System SYS empfangen. Hierzu erfasst bzw. empfängt die Empfangsvorrichtung E bzw. das System SYS die Nachrichten aus dem ersten Netzwerk NW1 beispielsweise mit einem Paketfilter oder einem Netzwerkanalysewerkzeug (z. B. Wireshark) oder einem Werkzeug, um Datenpakete aus dem Netzwerk abzurufen (z. B. WinPCap, libpcap). Die entsprechenden Nachrichten sind z. B. dabei nicht an die Empfangsvorrichtung E (oder das System SYS) bzw. dessen Netzwerkadresse gerichtet, sondern sind an die Geräte des Automatisierungsnetzwerkes AN gerichtet (indem z. B. ein bestimmter Gerätetyp in der Nachricht bzw. deren Inhalt angegeben ist).

Um festzustellen, ob beispielsweise eine entsprechende erste Nachricht für ein Gerät des Automatisierungsnetzwerkes AN bestimmt ist, umfasst die Empfangsvorrichtung (bzw. das System SYS) beispielsweise eine Gerätedatenbank, die ein Verzeichnis der Geräte des Automatisierungsnetzwerkes AN umfasst. Zusätzlich können in diesem Verzeichnis beispielsweise auch Geräteinformationen zu den jeweiligen Geräten gespeichert sein. Die Geräteinformationen können beispielsweise generelle Informationen zu einem Gerät umfassen. Dies können z. B. technische Merkmale wie Leistung, Fertigungsgeschwindigkeit, Energieverbrauch, Fertigungspräzision, Standort des Gerätes oder eine Kombination hiervon sein. Alternativ oder zusätzlich können die entsprechenden Geräteinformationen auch den zuletzt empfangenen bzw. abgerufenen Gerätezustand umfassen. Wurde beispielsweise innerhalb eines vorgegebenen Zeitraums bereits ein Gerätezustand empfangen, so kann beispielsweise auf ein erneutes Abrufen eines aktuellen Gerätezustandes verzichtet werden. Ist der vorgegebene Zeitraum 5 Minuten und wurde vor 1 Minute ein Gerätezustand für das Gerät empfangen, ist es beispielsweise nicht notwendig bis zum Ablauf des vorgegangen Zeitraums erneut einen Gerätezustand zu empfangen.

Die Geräteinformationen können beispielsweise auch die entsprechenden Geräteeigenschaften (z. B. aktuelle Geräteeigenschaften) umfassen.

Die Sendevorrichtung S kann beispielsweise passiv oder aktiv implementiert sein.

Bei einer aktiven Implementierung werden die ersten Nachrichten beispielsweise direkt durch die Geräte des Automatisierungsnetzwerkes an die Sendevorrichtung S bzw. das System SYS geschickt. Die entsprechenden Nachrichten können dabei z. B. eine Angabe umfassen für welche Netzwerk-Applikation oder welches verteilte Datenbanksystem (falls es mehrere dieser Systeme gibt) oder Netzwerk (z. B. das erste Kommunikationsnetzwerk) die entsprechende Nachricht bestimmt ist.

Bei einer passiven Implementierung werden die ersten Nachrichten beispielsweise indirekt durch die Sendevorrichtung S bzw. das System SYS empfangen. Hierzu erfasst bzw. empfängt die Sendevorrichtung S bzw. das System SYS die Nachrichten aus dem zweiten Netzwerk NW2 beispielsweise mit einem Paketfilter oder einem Netzwerkanalysewerkzeug (z. B. Wireshark) oder einem Werkzeug um Datenpakete aus dem Netzwerk abzurufen (z. B. WinPCap, libpcap). Die entsprechenden Nachrichten sind z. B. dabei nicht an die Sendevorrichtung S (oder des Systems SYS) bzw. dessen Netzwerkadresse gerichtet, sondern sind z. B. an eine andere Adresse oder anderes Gerät gerichtet. Beispielsweise kann ein Teil einer ursprünglich vorhandenen Kommunikationsinfrastruktur durch das das verteilte Datenbanksystem (oder die Netzwerk-Applikation) ersetzt worden sein und die entsprechenden Geräte oder Netzwerkadressen, an die die entsprechenden ersten Nachrichten geschickt werden sollen, existieren nicht mehr. Da die entsprechenden Geräte auch nicht mehr ohne weiteres umkonfiguriert werden können, würden ohne die Sendevorrichtung S die entsprechenden Nachrichten nicht für die neue Kommunikations-Infrastruktur verfügbar sein bzw. nicht an diese übermittelt werden können.

Auch die Sendevorrichtung S kann eine Gerätedatenbank umfassen (z. B. analog zur Empfangsvorrichtung), um beispielsweise festzustellen welches Gerät eine entsprechende Nachricht geschickt hat. Werden die Nachrichten beispielsweise zunächst passiv empfangen, kann eine solche Information beispielsweise anhand der Sendeadresse der Nachricht ermittelt werden. Hierzu werden die Geräteinformationen z. B. mittels der Sendeadresse abgerufen.

Die Erfindung ist dahingehend vorteilhaft um z. B. Legacy Geräte, an deren Konfiguration nichts geändert werden darf, mit einer neuen Blockketteninfrastruktur kommunizieren zu lassen. Die Konvertierung der Daten übernehmen die Vorrichtung bzw. das System.

Auch können die Vorrichtungen (z. B. die Sendevorrichtung oder die Empfangsvorrichtung) bzw. das System jeweils Smart-Contracts für die die Legacy-Systeme bzw. Geräte ausführen. Damit können insbesondere die Geräte blockkettenfähig gemacht werden, ohne an diesen Geräten überhaupt etwas zu ändern.

Insbesondere umfasst diese Vorrichtungen bzw. das System die notwendigen Komponenten, um mit einer Blockkette zu kommunizieren. Dies sind zum Beispiel Schlüsselspeicher bzw. Kryptographiemodul mit kryptographischen Schlüsseln bzw. Daten, um Transaktionen/Nachrichten für die Blockkette zu signieren oder entsprechende Prüfsummen zu überprüfen.

In einer Implementierungsvariante kann ein Modul, können mehrere Module oder können alle Module als Softwarekomponente oder als Hardwarekomponente oder als eine Kombination aus Hardware- und Softwarekomponenten realisiert werden.

Das System und/oder die Module und/oder die Sendevorrichtung und/oder die Empfangsvorrichtung und/oder das verteilte Datenbanksystem und/oder die Netzwerk-Applikation und/oder die Netzwerkinfrastruktur der Netzwerk-Applikation und/oder Knoten der Netzwerk-Applikation und/oder die Knoten des verteilten Datenbanksystems(z. B. Blockketten-Knoten) und/oder, Geräte können beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

In den genannten Ausführungsbeispielen können die Netzwerkschnittstellen auch als integrale Netzwerkschnittstellen ausgebildet sein. Beispielsweise kann die erste Kommunikationsschnittstelle NI1 des Systems SYS und die erste Kommunikationsschnittstelle 210 der Empfangsvorrichtung E und/oder die zweite Kommunikationsschnittstelle 340 der Sendevorrichtung S als eine erste integrale Kommunikationsschnittstelle ausgebildet sein. Beispielsweise kann die zweite Kommunikationsschnittstelle NI2 des Systems SYS und die zweite Kommunikationsschnittstelle 240 der Empfangsvorrichtung E und/oder die erste Kommunikationsschnittstelle 310 der Sendevorrichtung S als eine zweite integrale Kommunikationsschnittstelle ausgebildet sein. Es kann beispielsweise die erste integrale Kommunikationsschnittstelle und die zweite integrale Kommunikationsschnittstelle als gemeinsame integrale Kommunikationsschnittstelle ausgebildet sein.

In weiteren Varianten können die Sendevorrichtung S und/oder die Empfangsvorrichtung E und/oder das System SYS beispielsweise als ein integrales Bauteil eines der Geräte ausgebildet sein, wobei die entsprechenden Kommunikationsschnittstellen zum Kommunizieren mit dem entsprechenden Gerät beispielsweise in einem solchen Fall eine Kommunikationsschnittstelle für einen Datenbus ist (z. B. eine PCI-Schnittstelle, eine USB-Schnittstelle). Beispielsweise können in einer solchen Variante Legacy-Geräte bzw. Geräte direkt an das verteilte Datenbanksystem (oder die Netzwerk-Applikation) angebunden werden, indem beispielsweise die Sendevorrichtung S und/oder die Empfangsvorrichtung E und/oder das System SYS in eine Kommunikationsschnittstelle des Legacy-Gerätes bzw. des Gerätes integriert wird (z. B. als ASIC oder FPGA). Bei der Kommunikationsschnittstelle des Gerätes kann es sich beispielsweise um eine austauschbare Netzwerkkarte handeln, wobei beispielsweise eine alte Netzwerkkarte durch eine entsprechende erfindungsgemäße Kommunikationsschnittstelle ersetzt wurde. Mit anderen Worten kann in einer solchen Variante eine Kommunikationsschnittstelle die Sendevorrichtung S und/oder die Empfangsvorrichtung E und/oder das System SYS umfassen oder die Kommunikationsschnittstelle ist als die Sendevorrichtung S und/oder die Empfangsvorrichtung E und/oder das System SYS ausgebildet.

In einer weiteren möglichen Variante der Sendevorrichtung umfasst die Sendevorrichtung folgendes:
- beispielsweise eine erste Kommunikationsschnittstelle, wobei
   - beispielsweise die erste Kommunikationsschnittstelle dazu eingerichtet ist mit Geräten zu kommunizieren,
   - beispielsweise die Kommunikationsschnittstelle dazu eingerichtet ist erste Nachrichten oder Daten von den Geräten zu empfangen;
- beispielsweise ein Identifikationsmodul, wobei
   - beispielsweise das Identifikationsmodul dazu eingerichtet ist anhand der Daten oder des jeweiligen Nachrichteninhalts der ersten Nachrichten eine Zuordnung berechnet, welches Gerät die Daten oder eine entsprechende erste Nachricht gesendet hat;
- beispielsweise ein Konvertierungsmodul, wobei
   - beispielsweise das Konvertierungsmodul dazu eingerichtet ist die Daten oder den Nachrichteninhalt der entsprechenden ersten Nachricht in ein Datenformat für das verteilte Datenbanksystem oder für eine Netzwerk-Applikation zu konvertieren,
   - beispielsweise das Konvertierungsmodul dazu eingerichtet ist die Daten spezifisch für das verteilte Datenbanksystem oder für die Netzwerk-Applikation anhand des zugeordneten Gerätes zu konvertieren,
   - beispielsweise das Konvertierungsmodul dazu eingerichtet ist zu überprüfen, welche Datenformate von dem verteilten Datenbanksystem oder von der Netzwerk-Applikation oder von weiteren verteilten Datenbanksystemen oder weiteren Netzwerk-Applikationen verarbeiten können,
   - beispielsweise das Konvertierungsmodul dazu eingerichtet ist die Daten in ein mit dem verteilten Datenbanksystem oder der Netzwerk-Applikation kompatibles Datenformat zu konvertieren;
- beispielsweise eine zweite Kommunikationsschnittstelle, wobei
   - beispielsweise die zweite Kommunikationsschnittstelle dazu eingerichtet ist mit einem verteilten Datenbanksystem oder der Netzwerk-Applikation zu kommunizieren,
   - beispielsweise die Kommunikationsschnittstelle dazu eingerichtet ist die konvertierten Daten oder den konvertierten Nachrichteninhalt an das verteilte Datenbanksystem oder die Netzwerk-Applikation zu übertragen.

In einer weiteren möglichen Variante der Sendevorrichtung umfasst die Sendevorrichtung folgendes:
- beispielsweise eine erste Kommunikationsschnittstelle, wobei
   - beispielsweise die erste Kommunikationsschnittstelle dazu eingerichtet ist mit Geräten zu kommunizieren,
   - beispielsweise die Kommunikationsschnittstelle dazu eingerichtet ist erste Nachrichten oder Daten von den Geräten zu empfangen;
- beispielsweise ein Identifikationsmodul (320), wobei
   - beispielsweise das Identifikationsmodul dazu eingerichtet ist anhand der Daten oder des jeweiligen Nachrichteninhalts der ersten Nachrichten eine Zuordnung berechnet, welches Gerät die Daten oder eine entsprechende erste Nachricht gesendet hat;
- beispielsweise ein Konvertierungsmodul (330), wobei
   - beispielsweise das Konvertierungsmodul dazu eingerichtet ist spezifisch für das den Daten zugeordnete Gerät Datenformatanforderungen zu bestimmen, die z. B. durch das zugeordnete Gerät vorgegebenen sind,
   - beispielsweise das Konvertierungsmodul dazu eingerichtet ein Prüfergebnis darüber zu ermitteln, welche Datenformate von verteilten Datenbanksystemen oder von Netzwerk-Applikationen verarbeiten können,
   - beispielsweise das Konvertierungsmodul dazu eingerichtet ist abhängig von dem Prüfergebnis und/oder den Datenformatanforderungen die Daten in ein Datenformat für eine Netzwerk-Applikation der Netzwerk-Applikationen oder ein verteiltes Datenbanksystem der verteilten Datenbanksysteme zu konvertieren;
- beispielsweise eine zweite Kommunikationsschnittstelle, wobei
   - beispielsweise die zweite Kommunikationsschnittstelle dazu eingerichtet ist, die konvertierten Daten oder den konvertierten Nachrichteninhalt an das verteilte Datenbanksystem oder die Netzwerk-Applikation zu übertragen.

Beispielsweise kann das Konvertierungsmodul dazu eingerichtet sein, die Daten oder den Nachrichteninhalt der entsprechenden ersten Nachricht in ein Datenformat für das verteilte Datenbanksystem oder für eine Netzwerk-Applikation zu konvertieren, wobei das Datenformat z. B. durch das zugeordnete Gerät vorgegeben ist.

Beispielsweise kann das Konvertierungsmodul dazu eingerichtet sein, das (entsprechende) verteilte Datenbanksystem aus den verteilten Datenbanksystemen oder die (entsprechende) Netzwerk-Applikation aus den Netzwerkapplikationen anhand des Prüfergebnisses und/oder der Datenformatanforderungen auszuwählen. Beispielsweise kann die zweite Kommunikationsschnittstelle dazu eingerichtet sein die konvertierten Daten und/oder die Daten an das ausgewählte (entsprechende) verteilte Datenbanksystem oder die ausgewählte (entsprechende) Netzwerk-Applikation zu übertragen. Mit anderen Worten ist beispielsweise die Netzwerk-Applikation die ausgewählte Netzwerk-Applikation oder das verteilte Datenbanksystem ist das ausgewählte verteilte Datenbanksystem.

Die Datenformatanforderungen können beispielsweise durch die Zuordnung und/oder von Geräteeigenschaften (des zugeordneten Gerätes), die in der Zuordnung (oder einem Zuordnungsdatensatz) gespeichert sind, vorgegeben sein.

Erfüllen beispielsweise mehrere verteilte Datenbanksysteme oder mehrere Netzwerk-Applikationen die Datenformatanforderungen - sprich sie sind jeweils mit den Datenformatanforderungen kompatibel - , so können die Daten z. B. für die jeweils kompatiblen verteilten Datenbanksysteme oder die jeweils kompatiblen Netzwerk-Applikationen konvertiert werden und/oder jeweils an diese übertragen werden. Kompatibel bedeutet beispielsweise, dass das jeweilige verteilte Datenbanksystem oder die jeweilige Netzwerkapplikation zumindest ein Datenformat der Datenformatanforderungen unterstützt und/oder verarbeiten kann. Das Datenformat gibt dabei beispielsweise ein Format für Daten an, das von der Netzwerk-Applikation oder dem verteilten Datenbanksystem verarbeitet werden kann.

Beispielsweise kann alternativ oder zusätzlich aus den kompatiblen verteilten Datenbanksystemen oder aus den kompatiblen Netzwerk-Applikationen auch die Netzwerk-Applikation oder das verteilte Datenbanksystem für eine Datenkonvertierung (oder für eine Konvertierung der Daten) und/oder Datenübertragung (der konvertierten Daten oder der Daten) ausgewählt werden, das ein zusätzliches Auswahlkriterium erfüllt. Das Auswahlkriterium kann beispielsweise eine Zuverlässigkeit, kryptographische Anforderungen (z. B. verwendete Schlüssellängen, kryptographische Protokolle) oder Anforderungen an die entsprechende Infrastruktur (z. B. es muss mindestens eine vorgegebene Anzahl von Knoten geben oder die Netzwerk-Applikation oder das verteilte Datenbanksystem sind z. B. als Cloud-Service realisiert) vorgeben, die von der Netzwerk-Applikation oder dem verteilten Datenbanksystem unterstützt werden sollen. Beispielsweise wird dann nur ein verteiltes Datenbanksystem oder eine Netzwerk-Applikation ausgewählt, die das Auswahlkriterium am besten erfüllt.

Beispielsweise kann die zweite Kommunikationsschnittstelle dazu eingerichtet sein mit den verteilten Datenbanksystemen (z. B. das verteilte Datenbanksystem oder die weiteren verteilten Datenbanksysteme oder das ausgewählte verteilte Datenbanksystem) oder den Netzwerk-Applikationen (z. b. die Netzwerk-Applikation oder die weiteren Netzwerk-Applikationen oder der ausgewählten Netzwerk-Applikation) zu kommunizieren um z. B. die unterstützten Datenformate der Netzwerk-Applikationen oder der verteilten Datenbanksysteme abzurufen und/oder die konvertierten Daten zu übermitteln.

Konkrete Beispiele wie z. B. eine Konvertierung der Daten realisiert sein kann, können analog zu den Beispielen der Empfangsvorrichtung realisiert sein.

Die Daten können dabei beispielsweise die ersten Nachrichten oder die erste Nachricht oder der Nachrichteninhalt der ersten Nachricht oder Daten einer Kommunikationsverbindung sein.

Mit der Erfindung ist es insbesondere möglich eine dezentrale Infrastruktur mit alten bzw. legacy Geräten zu koppeln. Mit der Erfindung kann insbesondere eine Koppelung von solchen Altgeräten (z. B. Legacy-Geräte) an eine neue blockkettenbasierte Infrastruktur erfolgen. Dies ist beispielsweise für Energieversorgungsnetze vorteilhaft, deren Steuerung auf eine Blockketten Infrastruktur umgestellt wird, wobei jedoch nicht jedes einzelne Gerät des bestehenden Energieversorgungsnetzes ausgetauscht wird. Die Erfindung erlaubt es beispielsweise, dass z. B. ein Gerät Nachrichten (z. B. mit Steuerbefehlen oder Statusmeldungen zur Abarbeitung von Steuerbefehlen) an das verteilte Datenbanksystem oder die Netzwerk-Applikation sendet, wobei die Sendevorrichtung kommunikativ zwischen den Geräten und dem verteilten Datenbanksystem (oder der Netzwerk-Applikation) angeordnet ist und die Zuordnung und/oder Übermittlung der jeweiligen Nachrichten an das verteilte Datenbanksystem (oder an die Netzwerk-Applikation) realisiert. Insbesondere werden die entsprechenden Nachrichteninhalte oder Daten auch in ein Datenformat konvertiert, das mit dem verteilten Datenbanksystem (oder der Netzwerk-Applikation) kompatibel ist. Insbesondere müssen die Geräte nicht an die neue Infrastruktur angepasst werden.

Beispielsweise wird durch Geräteeigenschaften des zugeordneten Gerätes vorgegeben, dass die Daten in einem oder mehreren Datenformaten in dem verteilten Datenbanksystem oder der Netzwerk-Applikation gespeichert werden können. Beispielsweise kann durch die Datenformatanforderungen vorgegeben werden, dass die Daten des zugeordneten Gerätes in einem XML-Format oder einem JSON-Format, jedoch nicht in einem Binärformat gespeichert werden sollen. Beispielsweise unterstützt das verteilte Datenbanksystem ein XML-Format und die Netzwerk-Applikation nur ein proprietäres Binärformat. Die zweite Kommunikationsschnittstelle und/oder das Konvertierungsmodul überprüfen zunächst, welche Datenformate, die von dem verteilten Datenbanksystem oder der Netzwerk-Applikation unterstützt werden (unterstützt bedeutet dabei z. B., welche Datenformate von dem verteilten Datenbanksystem oder der Netzwerk-Applikation verarbeitet werden können), ebenfalls den Datenformatvorgaben der Datenformatanforderungen des zugeordneten Gerätes entsprechen. Die zweite Kommunikationsschnittstelle übermittelt dann in einer Variante beispielsweise anhand des bei dieser Prüfung ermittelten Prüfergebnisses an welches verteilte Datenbanksystem (es können auch mehrere verteilte Datenbanksysteme vorliegen) oder an welche Netzwerk-Applikation die konvertierten Daten übermittelt werden. Dieses Prüfergebnis kann alternativ auch vom Konvertierungsmodul oder vom Identifikationsmodul auf die gleiche Weise ermittelt werden und z. B. der zweiten Kommunikationsschnittstelle bereitgestellt werden.

Beispielsweise kann die zweite Kommunikationsschnittstelle dazu eingerichtet sein, die konvertierten Daten oder den konvertierten Nachrichteninhalt abhängig von dem Prüfergebnis an das verteilte Datenbanksystem oder ein weiteres verteiltes Datenbanksystem oder die Netzwerk-Applikation oder eine weitere Netzwerkapplikation zu übertragen.

Die erläuterten Sendevorrichtungen und/oder Empfangsvorrichtungen und/oder verteilten Datenbanksysteme (oder deren Ausführungsbeispiele, Ausführungsformen oder Varianten) und/oder Netzwerk-Applikation können zusätzlich jeweils beispielsweise eine Konfigurationsschnittstelle und/oder einen Lüfter und/oder ein Monitoringmodul umfassen. Mit der Konfigurationsschnittstelle können beispielsweise Updates oder Firmwareversionen eingespielt werden. Mit dem Lüfter können z. B. die entsprechende Sendevorrichtung S und/oder der Empfangsvorrichtung E und/oder das verteilte Datenbanksystem gekühlt werden. Mit dem Monitoringmodul kann der Zustand und/oder das Betriebsverhalten einer entsprechenden Sendevorrichtung und/oder einer entsprechenden Empfangsvorrichtung und/oder des verteilten Datenbanksystems überwacht werden und z. B. in einer Datei gespeichert werden (z. B. einer Logging-Datei).

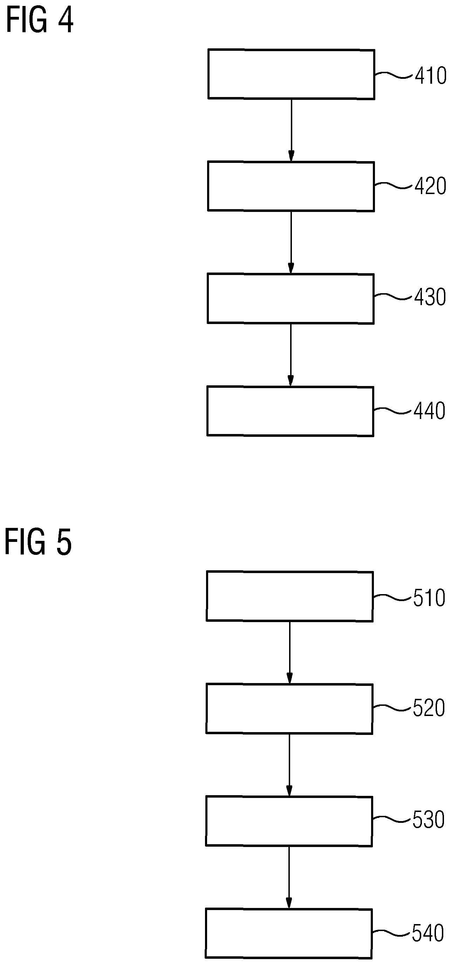

Die Fig. 4 zeigt ein viertes Ausführungsbeispiel der Erfindung als Ablaufdiagramm des erfindungsgemäßen Verfahrens.

Das Verfahren ist vorzugsweise rechnergestützt realisiert.

Im Einzelnen wird in diesem Ausführungsbeispiel ein Verfahren zum rechnergestützten Empfangen von Nachrichten realisiert.

Das Verfahren umfasst einen ersten Verfahrensschritt 410 zum Empfangen von ersten Nachrichten von einem verteilten Datenbanksystem mittels einer ersten Kommunikationsschnittstelle. Die ersten Nachrichten sind beispielsweise in einem Datenformat (z. B. ein XML-Datenformat) des verteilten Datenbanksystems oder einer Netzwerkapplikation gespeichert.

Das Verfahren umfasst einen zweiten Verfahrensschritt 420 zum Berechnen einer Zuordnung für die ersten Nachrichten, wobei beim Berechnen bestimmt wird für welche Geräte eine entsprechende erste Nachricht bestimmt ist.

Das Verfahren umfasst einen dritten Verfahrensschritt 430 zum Konvertieren des Nachrichteninhalts der entsprechenden ersten Nachricht in ein Datenformat für das zugeordnete Gerät. Das Datenformat ist insbesondere ein proprietäres Datenformat der Geräte.

Der dritte Verfahrensschritt ist insbesondere ein optionaler Verfahrensschritt. Dies ist beispielsweise der Fall, wenn der Nachrichteninhalt der entsprechenden ersten Nachricht nicht konvertiert werden muss bzw. der Nachrichteninhalt bzw. die entsprechende erste Nachricht ein Datenformat aufweist, das von den Geräten verarbeitet werden kann. In einem solchen Fall entspricht der konvertierte Nachrichteninhalt des vierten Verfahrensschrittes dem (unkonvertierten) Nachrichteninhalt der entsprechenden ersten Nachricht bzw. die entsprechende erste Nachricht wird als zweite Nachricht an das oder die entsprechenden Geräte gesendet.

Das Verfahren umfasst einen vierten Verfahrensschritt 440 zum Übertragen des konvertierten Nachrichteninhalts an das Gerät, das der entsprechenden ersten Nachricht zugeordnet ist.

Die Fig. 5 zeigt ein fünftes Ausführungsbeispiel der Erfindung als Ablaufdiagramm des erfindungsgemäßen Verfahrens.

Das Verfahren ist vorzugsweise rechnergestützt realisiert.

Im Einzelnen wird in diesem Ausführungsbeispiel ein Verfahren zum rechnergestützten Senden von Nachrichten.

Das Verfahren umfasst einen ersten Verfahrensschritt 510 zum Empfangen von ersten (weiteren) Nachrichten von Geräten mittels einer Kommunikationsschnittstelle. Diese Nachrichten sind beispielsweise in einem proprietären Datenformat der Geräte gespeichert.

Das Verfahren umfasst einen zweiten Verfahrensschritt 520 zum Berechnen einer Zuordnung anhand des jeweiligen Nachrichteninhalts der ersten (weiteren) Nachrichten, wobei berechnet wird, welches Gerät eine entsprechende erste weitere Nachricht gesendet hat.

Das Verfahren umfasst einen dritten Verfahrensschritt 530 zum Konvertieren des Nachrichteninhalts der entsprechenden ersten (weiteren) Nachricht in ein Datenformat für das verteilte Datenbanksystem (oder die Netzwerk-Applikation), wobei das Datenformat z. B. von dem verteilten Datenbanksystem (oder der Netzwerk-Applikation) verarbeitet werden kann. Bei dem Datenformat kann es sich z. B. um ein XML Datenformat, für das ein passendes XML Schema verfügbar ist. Die Knoten des verteilten Datenbanksystems (oder der Netzwerk-Applikation) können so z. B. einen Gerätestatus eines der Geräte des Automatisierungsnetzwerkes auswerten, um z. B. dem entsprechenden Automatisierungsnetzwerk bzw. dem entsprechenden Gerät abhängig von dem Gerätezustand eine Nachricht zu schicken.

Der dritte Verfahrensschritt ist insbesondere ein optionaler Verfahrensschritt. Dies ist beispielsweise der Fall, wenn der Nachrichteninhalt der entsprechenden ersten Nachricht nicht konvertiert werden muss bzw. der Nachrichteninhalt bzw. die entsprechende erste Nachricht ein Datenformat aufweist, das von dem verteilten Datenbanksystem (oder der Netzwerk-Applikation) verarbeitet werden kann. In einem solchen Fall entspricht der konvertierte Nachrichteninhalt des vierten Verfahrensschrittes dem (unkonvertierten) Nachrichteninhalt der entsprechenden ersten Nachricht bzw. die entsprechende erste Nachricht wird als zweite Nachricht an das verteilte Datenbanksystem (oder an die Netzwerk-Applikation) gesendet.

Das Verfahren umfasst einen vierten Verfahrensschritt 540 zum Übertragen des konvertierten Nachrichteninhalts an das verteilte Datenbanksystem (oder die Netzwerk-Applikation).

Den in FIG. 4 und FIG. 5 ausgeführten Verfahren ist gemeinsam, dass beide zur Eindeutigkeitssicherung in einem System SYS nur dann durchgeführt werden, wenn eine zuvor durchgeführte Prüfung, ob von einem weiteren System WSYS, das dieselbe Konvertierung bewirken kann wie das System SYS, ergibt, dass die Konvertierung nicht von dem weiteren System WSYS durchgeführt wird.

In einer Ausführung der Erfindung wird die Prüfung mit Hilfe des Zustandsynchronisationskanal ZS bewirkt. Dabei wird über den Kanal ZS das System SYS mit dem weiteren System WSYS synchronisiert und von einem Scheitern der Synchronisation darauf geschlossen, dass die Konvertierung von dem weiteren System WSYS nicht (mehr) durchgeführt wird. In diesem Fall können die in FIG. 4 und FIG. 5 beschriebenen Verfahren von dem System SYS durchgeführt werden. Das System SYS wird dadurch zu dem aktiven System, von dem die Konvertierung bewirkt wird.

Optional kann von dem System SYS zusätzlich ein sog. Fault Recovery Signal an das inaktive weitere System WSYS gesendet werden.

Sobald das weitere System - z.B. nach erfolgreicher Durchführung eines Fault Recovery Prozesses - wieder selbst aktiv werden könnte, kann die Durchführung der in FIG. 4 und FIG. 5 beschriebenen Verfahren wieder von dem weiteren System WSYS übernommen werden. In diesen Fall wird das System SYS bezüglich der Konvertierung wieder inaktiv und beschränkt seine Aktivität auf die Synchronisation mit dem weiteren System WSYS. In dieser Ausführung hat das weitere System WSYS die Rolle einer Masterkopplung und das System SYS die Rolle einer Backupkopplung.

Alternativ kann das System SYS dauerhaft solange aktiv sein und die Synchronisation von dem weiteren System WSYS bewirkt werden. In dieser Ausführung tauschen die beiden Systeme ihre Rollen und das jeweils aktive System übernimmt bezüglich der Kopplung, insb. der Konvertierung, die Rolle einer Masterkopplung und das jeweils inaktive System die Rolle einer Backupkopplung.

In einer Ausführungsvariante wird die Prüfung mit Hilfe eines Sendeprüfmoduls SP bewirkt. Dabei wird geprüft, ob von den Geräten gesendete erste Nachrichten oder Daten in einer vorbestimmten Zeitperiode oder Anzahl von Datenblöcken erfolgreich in das verteilte Datenbanksystem gespeichert werden. Von einem Scheitern der Speicherung wird darauf geschlossen, dass die Konvertierung von dem weiteren System WSYS nicht (mehr) durchgeführt wird. In diesem Fall können die in FIG. 4 und FIG. 5 beschriebenen Verfahren von dem System SYS durchgeführt werden. Das System SYS wird dadurch zu dem aktiven System, von dem die Konvertierung bewirkt wird. Hinsichtlich der Rollen und deren Tausch gelten sinngemäß dieselben technischen Überlegungen wie in dem vorherigen Ausführungsbeispiel.

Die Prüfung und der daraus resultierende Rollentausch zwischen dem System SYS und einem weiteren System WSYS können durch ein Eindeutigkeitssicherungsmodul ES durchgeführt werden, das als separates Gerät oder als separates Computerprogrammprodukt, insbesondere eines, das in einer Cloud zum Ablauf kommt, ausgebildet ist. In diesem Ausführungsbeispiel können gesonderte Anweisungen zur Aktivierung eines bislang inaktiven Systems und ggf. auch zu Inaktivierung eines bislang aktiven Systems vorgesehen werden. Die Kontrolle darüber, von welchem System die in FIG. 4 und FIG. 5 beschriebenen Verfahren durchgeführt werden, liegt in diesem Beispiel bei dem separaten Gerät oder Computerprogrammprodukt.

Es ist auch möglich, dass die in FIG. 4 und FIG. 5 beschriebenen Verfahren aufgeteilt werden und z.B. das in FIG. 4 beschriebene Verfahren von dem System SYS und das in FIG. 5 beschriebene Verfahren von dem weiteren System WSYS durchgeführt wird. So kann beispielsweise eine Lastverteilung bewirkt werden.

Die Erfindung betrifft beispielsweise ein Gateway oder einen Netzwerkadapter mit dem alte Geräte oder Legacy-Geräte an ein verteiltes Datenbanksystem (oder an eine Netzwerk-Applikation) wie eine Blockkette angebunden werden können, ohne eine Konfiguration bei den alten Geräten ändern zu müssen.

Entsprechend sind beispielsweise die Nachrichten die von dem verteilten Datenbanksystem (oder der Netzwerk-Applikation) gesendet bzw. von diesem empfangen werden Transaktionen. Entsprechend sind beispielsweise die Nachrichten die an das verteilte Datenbanksystem (oder die Netzwerk-Applikation) gesendet werden Transaktionen.

Ist beispielsweise das zweite Netzwerk NW2 mit seinen Geräten (Fig. 1 - 3) beispielsweise auch ein verteiltes Datenbanksystem (oder eine Netzwerk-Applikation), so können beispielsweise mittels der Erfindung (Vorrichtungen, System, Verfahren) auch zwei unterschiedliche verteilte Datenbanksysteme (oder Netzwerk-Applikationen) miteinander kommunizieren.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1]
   Andreas M. Antonopoulos "Mastering Bitcoin: Unlocking Digital Cryptocurrencies", O'Reilly Media, December 2014
[2]
   Roger M. Needham, Michael D. Schroeder "Using encryption for authentication in large networks of computers" ACM: Communications of the ACM. Band 21, Nr. 12 December 1978,
[3]
   Ross Anderson "Security Engineering. A Guide to Building Dependable Distributed Systems" Wiley, 2001
[4]
   Henning Diedrich "Ethereum: Blockchains, Digital Assets, Smart Contracts, Decentralized Autonomous Organizations", CreateSpace Independent Publishing Platform, 2016
[5]
   "The Ethereum Book Project/Mastering Ethereum" https://github.com/ethereumbook/ethereumbook, Stand 5.10.2017
[6]
   Leemon Baird
   "The Swirlds Hashgraph Consensus Algorithm: Fair, Fast, Byzantine Fault Tolerance",
   Swirlds Tech Report SWIRLDS-TR-2016-01, 31.5.2016
[7]
   Leemon Baird
   "Overview of Swirlds Hashgraph",
   31.5.2016
[8]
   Blockchain Oracles https://blockchainhub.net/blockchain-oracles/ Stand 14.03.2018

## Patentansprüche

1. System (SYS) aufweisend:
a) zumindest eine Empfangsvorrichtung (E) oder eine Sendevorrichtung (S);
dabei die Empfangsvorrichtung aufweisend:
- eine erste Kommunikationsschnittstelle (210), die dazu eingerichtet ist, Daten von einer Netzwerkapplikation zu empfangen;
- ein Konvertierungsmodul (230), das dazu eingerichtet ist,
- ein Konvertierungsprüfergebnis für die Daten abhängig von einem den Daten zugeordneten Gerät zu bestimmen,
- beim Bestimmen festzustellen, ob und/oder wie die Daten in ein Datenformat für das den Daten zugeordnete Gerät zu konvertieren sind,
- die Daten abhängig von dem Konvertierungsprüfergebnis in das Datenformat für das den Daten zugeordnetes Gerät zu konvertieren;
- eine zweite Kommunikationsschnittstelle (240) die dazu eingerichtet ist, die konvertierten Daten an das Gerät zu übertragen, das den Daten zugeordnet ist;
dabei die Sendevorrichtung aufweisend:
- eine erste Kommunikationsschnittstelle (310), die dazu eingerichtet ist erste Nachrichten oder Daten von den Geräten zu empfangen;
- ein Identifikationsmodul (320), das dazu eingerichtet ist, anhand der Daten oder des jeweiligen Nachrichteninhalts der ersten Nachrichten eine Zuordnung zu berechnen, welches Gerät die Daten oder eine entsprechende erste Nachricht gesendet hat;
- ein Konvertierungsmodul (330), das dazu eingerichtet ist,
- spezifisch für das den Daten zugeordnete Gerät Datenformatanforderungen zu bestimmen, die z. B. durch das zugeordnete Gerät vorgegebenen sind,
- ein Prüfergebnis darüber zu ermitteln, welche Datenformate von verteilten Datenbanksystemen oder von Netzwerk-Applikationen verarbeiten können,
- abhängig von dem Prüfergebnis und/oder den Datenformatanforderungen die Daten in ein Datenformat für eine Netzwerk-Applikation der Netzwerk-Applikationen oder ein verteiltes Datenbanksystem der verteilten Datenbanksysteme zu konvertieren;
- eine zweite Kommunikationsschnittstelle (340), die dazu eingerichtet ist, die konvertierten Daten oder den konvertierten Nachrichteninhalt an das verteilte Datenbanksystem oder die Netzwerk-Applikation zu übertragen;
b) zumindest ein Kryptographiemodul (KR), das dazu eingerichtet ist, den Geräten zugeordnete kryptographische Daten (KD) zu umfassen;
c) ein Eindeutigkeitssicherungsmodul (ES), das dazu eingerichtet ist, die Aktivität der zumindest einen Empfangs- oder Sendevorrichtung nur dann zu ermöglichen, wenn kein weiteres System (WSYS) aktiv ist, dass dieselbe Konvertierung bewirkt wie das System.

2. System nach dem vorhergehenden Anspruch, wobei die Empfangsvorrichtung einen Gerätezustand von dem den Daten zugeordneten Gerät abruft und eine Übertragung an das zugeordnete Gerät abhängig von dem abgerufenen Gerätezustand erfolgt.

3. System nach dem vorhergehenden Anspruch, wobei der Gerätezustand einen Datensatz über die verfügbaren Geräteressourcen und/oder aktuellen Geräteeigenschaften umfasst.

4. System nach einem der vorhergehenden Ansprüche, wobei eine Übertragung von der Empfangsvorrichtung an das entsprechende Gerät erfolgt, wenn vorgegebene Anforderungen der entsprechenden Daten durch das zugeordnete Gerät erfüllt sind, beispielsweise die Erfüllung der vorgegebenen Anforderungen anhand des Gerätezustandes überprüft wird.

5. System nach dem vorhergehenden Anspruch, wobei von der Empfangsvorrichtung anhand der kryptographischen Daten zumindest einen Teil der Daten für ein zugeordnetes Gerät überprüft und/oder entschlüsselt wird, beispielsweise für das Überprüfen und/oder das Entschlüsseln die entsprechenden kryptographischen Daten anhand des zugeordneten Gerätes geladen werden.

6. System nach dem vorhergehenden Anspruch, wobei das Konvertierungsmodul dazu eingerichtet ist anhand des Gerätes zu überprüfen, welche Daten der Daten von dem Gerät verarbeitet werden können.

7. System nach einem der vorhergehenden Ansprüche, wobei vor der Sendevorrichtung anhand des zugeordneten Gerätes entsprechende kryptographische Daten geladen werden und mittels der entsprechenden kryptographischen Daten zumindest ein Teil der Daten oder ein Teil des Nachrichteninhalts der entsprechenden ersten Nachricht gerätespezifischen für das zugeordnete Geräte kryptographisch geschützt wird, beispielsweise das kryptographische Schützen vor dem Senden des Nachrichteninhalts oder der Daten erfolgt.

8. System nach einem der vorhergehenden Ansprüche, wobei die Empfangsvorrichtung ein Identifikationsmodul (220) umfasst, das insbesondere dazu eingerichtet ist anhand der Daten eine Zuordnung zu berechnen, für welche Geräte beispielsweise die Daten bestimmt sind,

9. System nach dem vorhergehenden Anspruch, wobei das Identifikationsmodul insbesondere dazu eingerichtet ist beispielsweise anhand der Daten eine Zuordnung oder die Zuordnung zu berechnen, um beispielsweise das zugeordnete Gerät zu bestimmen.

10. System nach einem der vorhergehenden Ansprüche, wobei das verteilte Datenbanksystem eine Blockkette (BC) ist, beispielsweise die Nachrichten die von dem verteilten Datenbanksystem gesendet und/oder empfangen werden Transaktionen sind.

11. System nach einem der vorhergehenden Ansprüche, wobei von den Geräten zumindest ein Teil Geräte eines Automatisierungsnetzwerkes sind.

12. System nach einem der vorhergehenden Ansprüche, wobei das Eindeutigkeitssicherungsmodul dazu eingerichtet ist, die Aktivität des weiteren Systems mit Hilfe eines Zustandsynchronisationskanals (ZS) zu prüfen, der zur Synchronisation zumindest eines Teils des Zustands des Systems und des weiteren Systems dient.

13. System nach dem vorhergehenden Anspruch, wobei das Eindeutigkeitssicherungsmodul dazu eingerichtet ist, die den Geräten zugeordneten kryptographischen Daten zu synchronisieren.

14. System nach einem der beiden vorhergehenden Ansprüche, wobei das Eindeutigkeitssicherungsmodul dazu eingerichtet ist, die Aktivität der zumindest einen Empfangs- oder Sendevorrichtung dann zu ermöglichen, wenn bei der Synchronisation ein Fehler auftritt.

15. System nach einem der vorhergehenden Ansprüche, wobei das Eindeutigkeitssicherungsmodul als separates Gerät oder als separates Computerprogrammprodukt, insbesondere eines, das in einer Cloud zum Ablauf kommt, ausgebildet ist.

16. System nach einem der vorhergehenden Ansprüche, wobei das Eindeutigkeitssicherungsmodul ein Sendeprüfmodul (SP) umfasst, das dazu eingerichtet ist zu prüfen, ob von den Geräten gesendete erste Nachrichten oder Daten in einer vorbestimmten Zeitperiode oder Anzahl von Datenblöcken erfolgreich in das verteilte Datenbanksystem gespeichert werden.

17. System nach dem vorhergehenden Anspruch, wobei das Eindeutigkeitssicherungsmodul dazu eingerichtet ist, die Aktivität der zumindest einen Empfangs- oder Sendevorrichtung dann zu ermöglichen, wenn die Speicherung nicht in der vorbestimmten Zeitperiode oder Anzahl von Datenblöcken erfolgt.

18. Verfahren zum rechnergestützten Empfangen von Daten mit folgenden Verfahrensschritten:
- Prüfen, ob von einem weiteren System (WSYS), das dieselbe Konvertierung bewirken kann wie ein System (SYS), das nach einem der Systemansprüche ausgebildet ist, die Konvertierung durchgeführt wird und Durchführen der nachfolgenden Schritte nur dann, wenn die Prüfung ergibt, dass die Konvertierung nicht von dem weiteren System (WSYS) durchgeführt wird;
- Empfangen von Daten oder ersten Nachrichten von einem verteilten Datenbanksystem oder einer Netzwerk-Applikation mittels einer ersten Kommunikationsschnittstelle;
- Bestimmen eines Konvertierungsprüfergebnisses die Daten, wobei
- das Konvertierungsprüfergebnis abhängig von einem den Daten zugeordnetes Gerät bestimmen wird
- bestimmt wird ob und/oder wie die Daten in ein Datenformat für das den Daten zugeordnete Gerät zu konvertieren ist,
- die Daten abhängig von dem Konvertierungsprüfergebnis in das Datenformat für das den Daten zugeordnetes Gerät konvertiert wird,
- Übertragen der konvertierten Daten und/oder der Daten an das Gerät, das der entsprechenden ersten Nachricht oder den Daten zugeordnet ist.

19. Verfahren zum rechnergestützten Senden von Nachrichten oder Daten mit folgenden Verfahrensschritten:
- Prüfen, ob von einem weiteren System (WSYS), das dieselbe Konvertierung bewirken kann wie ein System (SYS), das nach einem der Systemansprüche ausgebildet ist, die Konvertierung durchgeführt wird und Durchführen der nachfolgenden Schritte nur dann, wenn die Prüfung ergibt, dass die Konvertierung nicht von dem weiteren System (WSYS) durchgeführt wird;
- Empfangen von Daten oder ersten Nachrichten von Geräten mittels einer Kommunikationsschnittstelle;
- Berechnen einer Zuordnung anhand der Daten oder des jeweiligen Nachrichteninhalts der ersten Nachrichten, wobei berechnet wird, welches Gerät die Daten oder eine entsprechende erste weitere Nachricht gesendet hat;
- Bestimmen von Datenformatanforderungen, die spezifisch für das den Daten zugeordnete Gerät bestimmt werden, wobei die Datenformatanforderungen z. B. durch das zugeordnete Gerät vorgegebenen werden;
- Ermitteln eines Prüfergebnisses darüber, welche Datenformate von verteilten Datenbanksystemen oder von Netzwerk-Applikationen verarbeiten können;
- Konvertieren der Daten in ein Datenformat für eine Netzwerk-Applikation der Netzwerk-Applikationen oder ein verteiltes Datenbanksystem der verteilten Datenbanksysteme abhängig von dem Prüfergebnis und/oder den Datenformatanforderungen;
- Übertragen der konvertierten Daten oder des konvertierten Nachrichteninhalts an das verteilte Datenbanksystem oder die Netzwerk-Applikation.

20. Computerprogrammprodukt mit Programmbefehlen zur Durchführung eines Verfahren nach einem der Verfahrensansprüche.

21. Bereitstellungsvorrichtung für das Computerprogrammprodukt nach dem vorhergehenden Anspruch, wobei die Bereitstellungsvorrichtung das Computerprogrammprodukt speichert und/oder bereitstellt.

## Claims

1. System (SYS) comprising:
a) at least one receiver apparatus (E) or a transmitter apparatus (S);
wherein the receiver apparatus comprises:
- a first communication interface (210), which is designed to receive data from a network application;
- a conversion module (230) which is designed:
- to determine a conversion test result for the data, according to a device which is assigned to the data,
- in the determination, to establish whether and/or how the data are to be converted into a data format for the device which is assigned to the data,
- according to the conversion test result, to convert the data into the data format for the device which is assigned to the data;
- a second communication interface (240), which is designed to transmit the converted data to the device which is assigned to the data;
wherein the transmitter apparatus comprises:
- a first communication interface (310) which is designed to receive first messages or data from the devices;
- an identification module (320), which is designed, by reference to the data or the respective message content of the first messages, to calculate an assignment of which device has sent the data or a corresponding first message;
- a conversion module (330), which is designed:
- specifically for the device which is assigned to the data, to determine data format requirements which e.g. are stipulated by the assigned device,
- to determine a test result as to which data formats can be processed by distributed database systems or network applications,
- according to the test result and/or data format requirements, to convert the data into a data format for a network application of the network applications, or for a distributed database system of the distributed database systems;
- a second communication interface (340), which is designed to transmit the converted data or converted message content to the distributed database system or network application;
b) at least one cryptography module (KR), which is designed to comprise cryptographic data (KD) which are assigned to the devices;
c) an unambiguity confirmation module (ES), which is designed only to permit the activity of the at least one receiver or transmitter apparatus in the event that no further system (WSYS) is active which executes the same conversion as the system.

2. System according to the preceding claim, wherein the receiver apparatus retrieves a device status from the device which is assigned to the data, and transmission to the assigned device is executed, according to the device status retrieved.

3. System according to the preceding claim, wherein the device status comprises a data record with respect to the available device resources and/or current device properties.

4. System according to one of the preceding claims, wherein a transmission from the receiver apparatus to the corresponding device is executed, in the event that predefined requirements for the corresponding data are fulfilled by the assigned device, for example, the fulfilment of the predefined requirements is checked by reference to the device status.

5. System according to the preceding claim wherein, by reference to the cryptographic data, at least a proportion of the data for an assigned device is checked and/or decrypted by the receiver apparatus, for example, for the purposes of checking and/or decryption, the corresponding cryptographic data are loaded by reference to the assigned device.

6. System according to the preceding claim, wherein the conversion module is designed, by reference to the device, to execute a check as to which data among the data can be processed by the device.

7. System according to one of the preceding claims, wherein, corresponding cryptographic data are loaded upstream of the transmitter apparatus by reference to the assigned device and, by means of the corresponding cryptographic data, at least a proportion of the data or a proportion of the message content of the corresponding first message is cryptographically protected in a device-specific manner for the assigned device, the cryptographic protection, for example, is executed prior to the transmission of the message content or data.

8. System according to one of the preceding claims, wherein the receiver apparatus comprises an identification module (220) which is particularly designed, by reference to the data, to calculate an assignment of devices for which, for example, the data are intended.

9. System according to the preceding claim, wherein the identification module is particularly designed, for example by reference to the data, to calculate an assignment or the assignment, for example for the determination of the assigned device.

10. System according to one of the preceding claims, wherein the distributed database system is a blockchain (BC), for example, the messages which are transmitted and/or received by the distributed database system are transactions.

11. System according to one of the preceding claims, wherein at least a proportion of the devices are devices on an automation network.

12. System according to one of the preceding claims, wherein the unambiguity confirmation module is designed to check the activity on the further system by means of a status synchronization channel (ZS), which is employed for the synchronization of at least an element of the status of the system and the further system.

13. System according to the preceding claim, wherein the unambiguity confirmation module is designed to synchronize the cryptographic data which are assigned to the devices.

14. System according to one of the two preceding claims, wherein the unambiguity confirmation module is designed to permit the activity of the at least one receiver or transmitter apparatus, in the event of the occurrence of an error in synchronization.

15. System according to one of the preceding claims, wherein the unambiguity confirmation module is configured in the form of a separate device or a separate computer program product which, in particular, can be executed in a cloud.

16. System according to one of the preceding claims, wherein the unambiguity confirmation module comprises a transmission control module (SP) which is designed to execute a check as to whether first messages or data sent by the devices have been successfully saved in the distributed database system within a predefined time period or in a predefined number of data blocks.

17. System according to the preceding claim, wherein the unambiguity confirmation module is designed to permit the activity of the at least one receiver or transmitter apparatus, in the event that saving is not executed within the predefined time period or in the predefined number of data blocks.

18. Method for the computer-assisted reception of data, comprising the following method steps:
- checking as to whether a further system (WSYS), which can execute the same conversion as a system (SYS) which is configured in accordance with one of the system claims, is executing the conversion, and execution of the following steps only in the event that it proceeds from the check that the conversion is not being executed by the further system (WSYS);
- reception of data or first messages from a distributed database system or network application by means of a first communication interface;
- determination of a conversion test result for the data, wherein:
- the conversion test result is determined according to a device which is assigned to the data,
- it is determined whether and/or how the data are to be converted into a data format for the device which is assigned to the data,
- the data are converted into the data format for the device which is assigned to the data, according to the conversion test result,
- transmission of the converted data and/or data to the device which is assigned to the corresponding first message or data.

19. Method for the computer-assisted transmission of messages or data, comprising the following method steps:
- checking as to whether a further system (WSYS), which can execute the same conversion as a system (SYS) which is configured in accordance with one of the system claims, is executing the conversion, and execution of the following steps only in the event that it proceeds from the check that the conversion is not being executed by the further system (WSYS);
- reception of data or first messages from devices by means of a communication interface;
- calculation of an assignment by reference to the data or the respective message content of the first messages, wherein a calculation is executed as to which device has sent the data or a corresponding first further message;
- determination of data format requirements, which are specifically determined for the device which is assigned to the data, wherein the data format requirements e.g. are stipulated by the assigned device;
- determination of a test result as to which data formats can be processed by distributed database systems or network applications;
- conversion of the data into a data format for a network application of the network applications, or for a distributed database system of the distributed database systems, according to the test result and/or data format requirements;
- transmission of the converted data or converted message content to the distributed database system or network application.

20. Computer program product, having program commands for the execution of a method according to one of the method claims.

21. Provision apparatus for the computer program product according to the preceding claim, wherein the provision apparatus saves and/or provides the computer program product.

## Revendications

1. Système (SYS) présentant :
a) au moins un dispositif de réception (E) ou un dispositif d'émission (S) ;
le dispositif de réception présentant :
- une première interface de communication (210) qui est configurée pour recevoir des données d'une application de réseau ;
- un module de conversion (230) qui est configuré
- pour déterminer un résultat de test de conversion pour les données en fonction d'un appareil associé aux données,
- pour constater lors de la détermination, si et/ou comment les données doivent être converties dans un format de données pour l'appareil associé aux données,
- pour convertir les données en fonction du résultat de test de conversion dans le format de données pour l'appareil associé aux données ;
- une deuxième interface de communication (240) qui est configurée pour transmettre les données converties à l'appareil qui est associé aux données ;
le dispositif d'émission présentant :
- une première interface de communication (310) qui est configurée pour recevoir des premiers messages ou données des appareils ;
- un module d'identification (320) qui est configuré pour calculer, à l'aide des données ou du contenu de messages respectif des premiers messages, une affectation, quel appareil a émis les données ou un premier message correspondant ;
- un module de conversion (330) qui est configuré
- pour déterminer spécifiquement des exigences de format de données pour l'appareil associé aux données qui sont prévues, par exemple, par l'appareil associé,
- pour établir un résultat de test quant aux formats de données pouvant être traités par des systèmes de base de données distribués ou par des applications de réseau,
- pour convertir les données, en fonction du résultat de test et/ou des exigences de format de données, en un format de données pour une application de réseau des applications de réseau ou un système de base de données distribué des systèmes de base de données distribués ;
- une deuxième interface de communication (340) qui est configurée pour transmettre les données converties ou le contenu de messages converti au système de base de données distribué ou à l'application de réseau ;
b) au moins un module de cryptographie (KR) qui est configuré pour comprendre des données cryptographiques (KD) associées aux appareils ;
c) un module de garantie d'unicité (ES) qui est configuré pour permettre l'activité du au moins un dispositif de réception ou d'émission, uniquement lorsqu'aucun autre système (WSYS) n'est actif qui accomplit la même conversion que le système.

2. Système selon la revendication précédente, dans lequel le dispositif de réception extrait un état d'appareil de l'appareil associé aux données et une transmission à l'appareil associé est réalisée en fonction de l'état d'appareil extrait.

3. Système selon la revendication précédente, dans lequel l'état d'appareil comprend un ensemble de données sur les ressources d'appareil disponibles et/ou les propriétés d'appareil actuelles.

4. Système selon l'une des revendications précédentes, dans lequel une transmission est réalisée du dispositif de réception à l'appareil correspondant, lorsque des exigences prédéfinies des données correspondantes sont satisfaites par l'appareil associé, par exemple, la satisfaction des exigences prédéfinies est vérifiée à l'aide de l'état d'appareil.

5. Système selon la revendication précédente, dans lequel à l'aide des données cryptographiques au moins une partie des données pour un appareil associé est vérifiée et/ou décodée par le dispositif de réception, par exemple, pour la vérification et/ou le décodage les données cryptographiques correspondantes sont chargées à l'aide de l'appareil associé.

6. Système selon la revendication précédente, dans lequel le module de conversion est configuré pour vérifier à l'aide de l'appareil quelles données des données peuvent être traitées par l'appareil.

7. Système selon l'une des revendications précédentes, dans lequel en amont du dispositif d'émission, des données cryptographiques correspondantes sont chargées à l'aide de l'appareil associé et, au moyen des données cryptographiques correspondantes, au moins une partie des données ou une partie du contenu de messages du premier message correspondant est protégée d'une manière cryptographique spécifiquement à l'appareil pour l'appareil associé, par exemple, la protection cryptographique a lieu avant l'émission du contenu de messages ou des données.

8. Système selon l'une des revendications précédentes, dans lequel le dispositif de réception comprend un module d'identification (220) qui est plus particulièrement configuré pour calculer une affectation à l'aide des données, pour quels appareils, par exemple, les données sont déterminées.

9. Système selon la revendication précédente, dans lequel le module d'identification est plus particulièrement configuré pour, par exemple, calculer à l'aide des données, une affectation ou l'affectation, pour déterminer, par exemple, l'appareil associé.

10. Système selon l'une des revendications précédentes, dans lequel le système de base de données distribué est une chaîne de blocs (BC), par exemple, les messages qui sont émis et/ou reçus du système de base de données distribué sont des transactions.

11. Système selon l'une des revendications précédentes, dans lequel au moins une partie des appareils sont des appareils d'un réseau d'automatisation.

12. Système selon l'une des revendications précédentes, dans lequel le module de garantie d'unicité est configuré pour vérifier l'activité de l'autre système à l'aide d'un canal de synchronisation d'état (ZS) qui sert à la synchronisation d'au moins une partie de l'état du système et de l'autre système.

13. Système selon la revendication précédente, dans lequel le module de garantie d'unicité est configuré pour synchroniser les données cryptographiques associées aux appareils.

14. Système selon l'une des deux revendications précédentes, dans lequel le module de garantie d'unicité est configuré pour permettre ensuite l'activité du au moins un dispositif de réception ou d'émission, si une erreur apparaît lors de la synchronisation.

15. Système selon l'une des revendications précédentes, dans lequel le module de garantie d'unicité est conçu comme un appareil distinct ou comme un produit de programme informatique distinct, plus particulièrement un s'exécutant dans un nuage.

16. Système selon l'une des revendications précédentes, dans lequel le module de garantie d'unicité comprend un module de vérification d'émission (SP) qui est conçu pour vérifier si des premiers messages émis par les appareils ou des données dans une période de temps ou un nombre de blocs de données prédéterminé(e) sont enregistrés avec succès dans le système de base de données distribué.

17. Système selon la revendication précédente, dans lequel le module de garantie d'unicité est configuré pour permettre ensuite l'activité du au moins un dispositif de réception ou d'émission si l'enregistrement n'a pas lieu dans la période de temps ou le nombre de blocs de données prédéterminé(e).

18. Procédé de réception de données assistée par ordinateur comprenant les étapes de procédé suivantes :
- vérifier si la conversion est effectuée par un autre système (WSYS), qui peut provoquer la même conversion qu'un système (SYS), qui est conçu selon l'une des revendications de système, et exécuter les étapes suivantes uniquement si la vérification montre que la conversion n'est pas réalisée par l'autre système (WSYS) ;
- recevoir des données ou des premiers messages d'un système de base de données distribué ou d'une application de réseau au moyen d'une première interface de communication ;
- déterminer un résultat de test de conversion pour les données, dans lequel
- le résultat de test de conversion est déterminé en fonction d'un appareil associé aux données
- il est déterminé si et/ou comment les données doivent être converties dans un format de données pour l'appareil associé aux données,
- les données sont converties en fonction du résultat de test de conversion dans le format de données pour l'appareil associé aux données,
- transmission des données converties et/ou des données à l'appareil qui est associé au premier message correspondant ou aux données.

19. Procédé d'émission assistée par ordinateur de messages ou de données comprenant les étapes de procédé suivantes :
- vérifier si la conversion est effectuée par un autre système (WSYS), qui peut provoquer la même conversion qu'un système (SYS), qui est conçu selon l'une des revendications de système, et exécuter les étapes suivantes uniquement si la vérification montre que la conversion n'est pas réalisée par l'autre système (WSYS) ;
- recevoir des données ou des premiers messages d'appareils au moyen d'une interface de communication ;
- calculer une affectation à l'aide des données ou du contenu de messages respectif des premiers messages, dans lequel il est calculé quel appareil a émis les données ou un autre premier message correspondant ;
- déterminer des exigences de format de données qui sont déterminées spécifiquement pour l'appareil associé aux données, dans lequel les exigences de format de données sont prédéfinies, par exemple, par l'appareil associé ;
- établir un résultat de test quant aux formats de données pouvant être traités par des systèmes de base de données distribués ou par des applications de réseau ;
- convertir des données dans un format de données pour une application de réseau des applications de réseau ou un système de base de données distribué des systèmes de base de données distribués en fonction du résultat de test et/ou des exigences de format de données ;
- transmettre des données converties ou le contenu de messages converti au système de base de données distribué ou à l'application de réseau.

20. Produit de programme informatique avec des instructions de programme pour exécuter un procédé selon l'une des revendications de procédé.

21. Dispositif de mise à disposition pour le produit de programme informatique selon la revendication précédente, dans lequel le dispositif de mise à disposition enregistre et/ou met à disposition le produit de programme informatique.
